(19) Europäisches Patentamt
European Patent Office
Office européen des brevets

(11) EP 1 411 321 B1

(12) **EUROPEAN PATENT SPECIFICATION**

(45) Date of publication and mention
of the grant of the patent:
**19.04.2017 Bulletin 2017/16**

(51) Int Cl.:
***G01B 9/02*** *(2006.01)*

(21) Application number: **03256223.3**

(22) Date of filing: **02.10.2003**

(54) **Interferometer using an integrated imaging array, a high-density polarizer and a phase-shifting array**

Interferometer mit integrierter Bildaufnahmematrix, Polarisator hoher dichte und Phasenverschiebungsmatrix

Interféromètre utilisant une matrice d'imagerie intégrée, un polariseur à haute densité et une matrice déphaseuse

(84) Designated Contracting States:
**DE FR GB IT**

(30) Priority: **15.10.2002 US 270130**
**29.10.2002 US 282110**

(43) Date of publication of application:
**21.04.2004 Bulletin 2004/17**

(73) Proprietor: **Mitutoyo Corporation**
**Kawasaki**
**Kanagawa-ken, 213 (JP)**

(72) Inventors:
• **Tobiason, Joseph D.**
**Woodinville**
**Washington 98072 (US)**

• **Atherton, Kim D.**
**Kirkland**
**Washington 98034 (US)**

(74) Representative: **Gill Jennings & Every LLP**
**The Broadgate Tower**
**20 Primrose Street**
**London EC2A 2ES (GB)**

(56) References cited:
**DE-A1- 2 926 738     DE-A1- 19 652 113**
**US-A- 4 340 304      US-A- 5 166 751**
**US-B1- 6 304 330**

**Description**

BACKGROUND OF THE INVENTION

1. Field of Invention

This invention is directed to an interferometer that includes improved polarizing and/or phase shifting structures.

2. Description of Related Art

U.S. Patent 6,304,330 discloses an interferometer using a novel multiple phase-shifting image generating structure that combines a wavefront-spreading element, a phase-shifting interference element and a sensing element. By combining the wavefront-spreading element, the phase-shifting interference element, and the sensing element, the multiple phase-shifting image generating structure shown in the 330 patent is able to convert many sources of potential error in interferometry measurements into common-mode errors. That is, these errors, in view of the multiple phase-shifting image generating structure disclosed in the 330 patent, equally affect all of the interferometry measurements. As a result, the magnitude and direction of these common-mode errors can be ignored when making high-precision measurements using an interferometer that includes the multiple phase-shifting image generating structure disclosed in the 330 patent.

US patent number 5,166,751 discloses an interferometer sensor for measuring distance changes of a small surface. The sensor defines a Mirau-like interferometer arrangement having a measurement surface and a reference surface.

SUMMARY OF THE INVENTION

However, the multiple phase-shifting image generating structure disclosed in the 330 patent introduces new sources of non-common-mode errors that can adversely affect high- precision interferometry measurements. Achieving an interferometer error insensitivity similar to that obtained using the particular form of the multiple phase-shifting image generating structure disclosed in the 330 patent while avoiding such new non-common-mode error sources, or converting them into common-mode errors, would be desirable.

This invention provides an interferometer as specified in claim 1, including an imaging element comprising multiple phase-shifting image generating structures that convert certain potential non-common-mode errors into common-mode errors.

This invention provides an interferometer that includes an imaging element that makes the interferometer relatively insensitive to path length changes between an upstream optical element and the imaging element.

This invention further provides an interferometer including an imaging element that makes it is less sensitive to path length changes than an interferometer that uses the multiple phase-shifting image generating element disclosed in the 330 patent.

This invention provides an interferometer including an imaging element that is usable in one or more ways that are relatively insensitive to variations over the sensing element with regard to the relation between input image intensity values and output signal values.

This invention further provides an interferometer including an imaging element that usable in one or more ways that are less sensitive to variations between the input image intensity values and output signal values over the sensing element than the multiple phase-shifting image generating structure disclosed in the 330 patent.

This invention separately provides an provides an interferometer including an imaging element having a high-density phase-shifting array in some embodiments.

This invention separately provides an interferometer including an imaging element having a high-density polarizing array in some embodiments.

This invention separately provides an interferometer including an imagine element having a high-density phase-shifting array and a high-density polarizing array in some embodiments.

This invention separately provides an interferometer including an imaging element having a high-density polarizing array and a high-density retarder pilate array in some embodiments.

This invention separately provides an interferometer including an imagine element that divides an input light beam into a plurality of different portions based on phase differences or relative phase-shift, wherein the different portions of like-phase-shift are interleaved across an imaging array on a pixel cell-by-pixel cell basis, in some embodiments.

This invention separately provides an interferometer including an imaging element that divides an input light beam into a plurality of different portions based on polarization, wherein the different portions of like-polarization are interleaved across an imaging array on a pixel cell-by-pixel cell basis, in some embodiments.

This invention separately provides an interferometer including an imaging element that divides an input light beam into a plurality of different portions based on phase differences or relative phase-shift and polarization differences, wherein the different portions of like-phase-shift and polarization are interleaved across an imaging array on a pixel cell-by-pixel cell basis, in some embodiments.

This invention further provides an interferometer including an imaging element wherein the pixel cells are single pixels in size, in some embodiments.

This invention separately provides an interferometer including an imaging element that splits an input light beam into two similar portions and applies the two portions to different regions of an imaging array, where a phase difference is introduced everywhere between the portions and each of the first two portions is further divided into at least two portions based on phase differences within each portion, where for each of the first two portions, the at least two second portions based on phase differences within each portion are interleaved on a pixel cell-by-pixel cell basis across the corresponding portions of the imaging array, in some embodiments.

This invention separately provides an interferometer including an imaging element that splits an input light beam into two similar portions, introduces a phase difference between the portions and applies the two portions to different regions of an imaging array, where each of the first two portions is further divided into at least two portions based on polarization differences, where for each of the first two portions, the at least two second portions based on polarization differences are interleaved on a pixel cell-by-pixel cell basis across the corresponding portions of the imaging array, in some embodiments.

In various exemplary embodiments, an interferometer according to this invention includes an integrated imaging element that receives a combined wavefront having differently polarized portions. The integrated imaging element includes at least one high-density phase-shift array element, at least one polarizer element, and at least one imaging array. Each of the at least one high-density phase-shift array element includes a pattern of two or more different phase-shift portions that each apply a different phase shift to a first one of the differently polarized portions of the combined wavefront relative to a second one of the differently polarized portions of the combined wave-front. Each high-density phase-shift array element transmits the combined wavefront to a polarizer element. The combined wavefront passes through the polarizer element to generate two or more interference portions comprising interference light. Each interference portion has a unique phase relationship relative to the other interference portions.

In various exemplary embodiments, an interferometer according to this invention includes an integrated imaging element that includes at least one high-density phase-shift array elements that includes a substrate or material layer that has a fixed fast axis and that applies a thickness-dependent phase-shift to a first one of the differently polarized portions of the combined wavefront relative to a second one of the differently polarized portions of the combined wavefront. In various exemplary embodiments, the substrate and/or material layer is processed to provide an interleaved repeating pattern of two or more different phase-shift portions, where the substrate or material layer that has the fixed fast axis within each of the different phase-shift portions has a different thickness.

In various exemplary embodiments, an interferometer according to this invention includes an integrated imaging element that includes a single high-density phase-shift array element that has an interleaved repeating pattern of at least three different phase-shift portions having different thicknesses. In various other exemplary embodiments, the at least one high-density phase-shift array element includes two different high-density phase-shift array elements, where each high-density phase-shift array element has an interleaved repeating pattern of two or more different phase-shift portions having different thicknesses.

In various exemplary embodiments, an interferometer according to this invention includes an integrated imaging element that includes at least one high-density phase-shift array element that includes a substrate and a layer of birefringent material that has the property that the fast axis direction can be selectively varied in various portions. The birefringent material applies a thickness-dependent phase-shift to a first one of the differently polarized portions of the combined wavefront relative to a second one of the differently polarized portions of the combined wavefront, the relative phase shift depending at least partially on the varied orientation of the fast axis direction relative to the differently polarized portions of the combined wavefront in the various portions.

In various exemplary embodiments, an interferometer according to this invention includes an integrated imaging element that includes at least one high-density phase-shift array element that includes a substrate and a the layer of birefringent material that has a constant thickness and is processed to provide an interleaved repeating pattern of two or more different phase-shift portions that have differently aligned fast axis directions. In other such embodiments, the layer of birefringent material may be processed or formed to provide a pattern of at least first and second different thickness regions. In some such embodiments, the birefringent material is further processed to provide a respective interleaved repeating pattern of two or more different phase-shift portions in each of the respective different thickness regions, where the two or more different phase-shift portions in each respective different thickness region have differently aligned fast axis directions.

In various exemplary embodiments, an interferometer according to this invention includes an integrated imaging element that includes at least one high-density phase-shift array element that includes a single substrate that does not apply a thickness-dependent phase-shift. In various ones of such exemplary embodiments, the layer of birefringent material is formed to have an interleaved repeating pattern of at least three different phase shift portions, where each different phase-shift portion has a different fast axis orientation. In various other ones of such exemplary embodiments, a surface of the substrate is processed to provide a repeating pattern of two or more differently recessed regions. In such exemplary embodiments, the layer is formed over the processed surface to provide the two or more different layer thicknesses.

In such exemplary embodiments, the birefringent material is further processed to provide a respective interleaved repeating pattern of two or more different phase-shift portions in each of the respective different layer thickness regions, where the two or more different phase-shift portions in each respective different layer thickness region have differently aligned fast axis directions. Among the two or more respective different phase-shift portions in each of the two respective different layer thicknesses, at least three different relative phase shifts are provided for a first one of the differently polarized portions of the combined wavefront relative to a second one of the differently polarized portions of the combined wavefront.

In various exemplary embodiments, an interferometer according to this invention includes an integrated imaging element that includes at least one high-density phase-shift array element that includes at least two substrates, at least one of the substrates having a layer of birefringent material that that has the property that the fast axis direction can be selectively varied in various portions. The birefringent material applies a thickness-dependent phase-shift to a first one of the differently polarized portions of the combined wavefront relative to a second one of the differently polarized portions of the combined wavefront. In such exemplary embodiments, the relative phase shift depends at least partially on the varied orientation of the fast axis direction relative to the differently polarized portions of the combined wavefront in the various portions.

In some such exemplary embodiments, the substrates do not apply a thickness-dependent phase-shift. In various ones of such exemplary embodiments, at least a second one of the layers of the birefringent material is formed to have a different thickness than a first one of the layers of birefringent material. In each different layer, the birefringent material is processed to provide a respective interleaved repeating pattern of two or more different phase-shift portions. In particular, the two or more different phase-shift portions in each respective different layer have differently aligned fast axis directions.

In some such exemplary embodiments, one of the substrates does not apply a thickness-dependent phase-shift, while another one of the substrates does apply a thickness-dependent phase-shift. In various ones of such exemplary embodiments, the layers on those substrates have the same thickness. In each layer, the birefringent material is processed to provide a respective interleaved repeating pattern of two or more different phase-shift portions, where the two or more different phase-shift portions in each respective different layer have differently aligned fast axis directions.

These and other features and advantages of this invention are described in, or are apparent from, the following detailed description of various exemplary embodiments of the systems and methods according to this invention.

The invention is defined in appended independent claim 1.

## BRIEF DESCRIPTION OF THE DRAWINGS

Various exemplary embodiments of the systems and methods of this invention will be described in detail, with reference to the following figures, wherein;

Fig. 1 illustrates one exemplary embodiment of an interferometer apparatus with which the various exemplary embodiments of the phase-shift array imaging element according to this invention are usable;

Fig. 2 illustrates the particular form of a multiple phase-shifted image generating structure disclosed in the 330 patent;

Fig. 3 illustrates in greater detail the phase-shifting element of Fig. 2 of the 330 patent;

Fig. 4 illustrates the relative phase shift between the four portions of light generated using the multiple phase-shifted image generating structure disclosed in the 330 patent;

Fig. 5 illustrates how the four portions of light are distributed over an imaging array when using the multiple phase-shifted image generating structure disclosed in the 330 patent;

Fig. 6 illustrates a perspective and cross-sectional view of portions of first and second exemplary embodiments of a high-density phase-shifting array element usable in a first exemplary embodiment of a high-density multiple phase-shifted image generating structure according to this invention;

Fig. 7 is a top plan view that illustrates a first exemplary phase-shift imaging element including a first exemplary embodiment of a multiple phase-shift generating structure incorporating the first and second exemplary high-density phase-shifting array elements shown in Fig. 6;

Fig. 8 is an exploded view of the phase-shift imaging element shown in Fig. 7, including the first exemplary embodiment of the multiple phase-shift generating structure shown in Fig. 7;

Fig. 9 illustrates a perspective and cross-sectional view of portions of third, fourth and fifth exemplary embodiments of a high-density phase-shifting array element usable in the first exemplary embodiment of the high-density multiple phase-shifted image generating structure according to this invention;

Figs. 10 and 11 are plan views that illustrate a second exemplary phase-shift imaging element including a second exemplary embodiment of a multiple phase-shift generating structure incorporating two of the high-density phase-shifting array elements according to this invention;

Fig. 12 illustrates a perspective and cross-sectional view of a portion of a sixth exemplary embodiment of a high-density phase-shifting array element according to this invention;

Fig. 13 is an exploded view illustrating a third exemplary embodiment of a phase-shift imaging element including a third exemplary embodiment of a multiple phase-shift generating structure incorporating the sixth exemplary high-density phase-shifting array element shown in Fig. 12;

Fig. 14 illustrates a perspective and cross-sectional view of a portion of a seventh exemplary embodiment of a high-density phase-shifting array element according to this invention;

Fig. 15 illustrates a perspective and cross-sectional view of a portion of an eighth exemplary embodiment of a high-density phase-shifting array element according to this invention;

Fig. 16 illustrates the relative phase-shift relationships between the different phase shift portions of a ninth exemplary embodiment of a high-density phase-shifting array element according to this invention;

Fig. 17 illustrates the relative phase-shift relationships between the different phase shift portions of a tenth exemplary embodiment of a high-density phase-shifting array element according to this invention;

Fig. 18 illustrates a first exemplary embodiment of a high-density polarizer array element that is combinable with either quarter-wave and neutral plates or with various exemplary embodiments of the high-density phase-shifting array element according to this invention;

Fig. 19 is a plan view that illustrates a fourth exemplary phase-shift imaging element including a fourth exemplary embodiment of a multiple phase-shift generating structure, which incorporates a high-density polarizer array and quarter-wave and neutral plates according to this invention;

Fig. 20 is an exploded view of the phase-shift imaging element shown in Fig. 19, including the fourth exemplary embodiment of the multiple phase-shift generating structure shown in Fig. 19;

Figs. 21 and 22 are plan views that illustrate a fifth exemplary phase-shift imaging element including a fifth exemplary embodiment of a multiple phase-shift generating structure, which incorporates a high-density polarizer array and quarter-wave and neutral plates according to this invention;

Fig. 23 is an exploded view illustrating a sixth exemplary embodiment of a phase-shift imaging element including a sixth exemplary embodiment of a multiple phase-shift generating structure according to this invention that incorporates a high-density phase-shifting array element according to this invention combined with a high-density polarizer array according to this invention;

Fig. 24 is a schematic diagram illustrating in greater detail a first exemplary implementation of the sixth exemplary embodiment of the multiple phase-shift generating structure shown in Fig. 23 that incorporates both the high-density phase-shifting array element and the high-density polarizer array according to this invention;

Fig. 25 is a schematic diagram illustrating in greater detail a second exemplary implementation of the sixth exemplary embodiment of the multiple phase-shift generating structure shown in Fig. 23 that incorporates both the high-density phase-shifting array element and the high-density polarizer array according to this invention;

Fig. 26 is a schematic diagram illustrating in greater detail a third exemplary implementation of the sixth exemplary embodiment of the multiple phase-shift generating structure shown in Fig. 23 that incorporates both the high-density phase-shifting array element and the high-density polarizer array according to this invention;

Fig. 27 is a schematic diagram illustrating in greater detail a third exemplary implementation of the sixth exemplary embodiment of the multiple phase-shift generating structure shown in Fig. 23 that incorporates both the high-density phase-shifting array element and the high-density polarizer array according to this invention; and

Fig. 28 is a plan view that illustrates a seventh exemplary embodiment of phase-shift imaging element according to this invention that includes a diffractive optical element in place of a beam splitter.

## DETAILED DESCRIPTION OF EXEMPLARY EMBODIMENTS

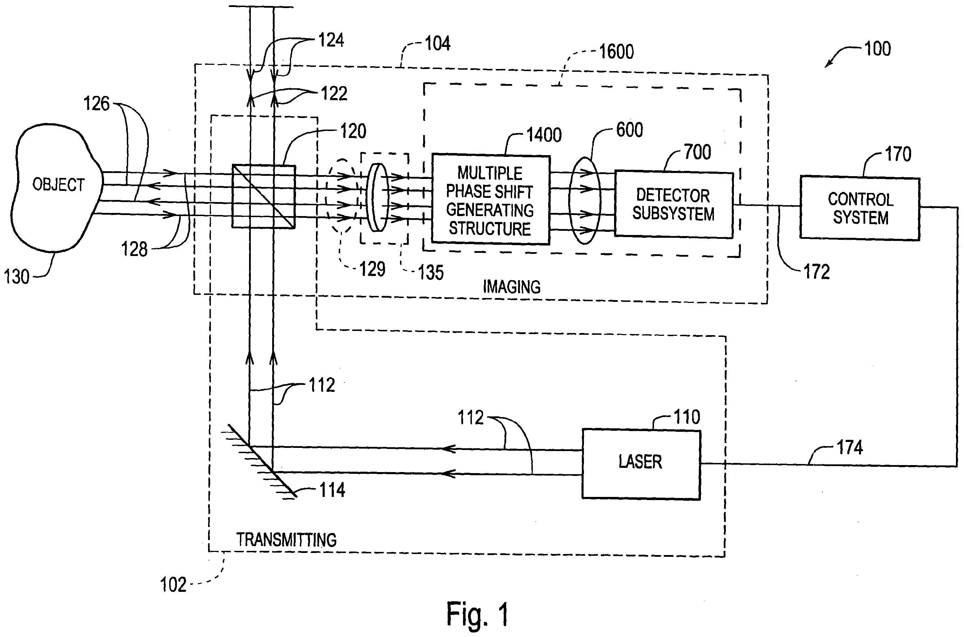

Fig. 1 shows one exemplary embodiment of an interferometer 100 with which the various exemplary embodiments of the phase-shift imaging element and other optical elements according to this invention are usable. As shown in Fig. 1, the interferometer 100 generally includes a transmitting portion 102 and an imaging portion 104. The transmitting portion 102 includes a laser source 110 that transmits a coherent light wavefront 112. In various exemplary embodiments, the laser source 110 may include two lasers, wavelength modulation, or any other known or later-developed device, structure or apparatus that provides at least two wavelengths of light at different times, for the coherent light wavefront 112.

As used herein, the term "light" encompasses not only visible light, but any part of the electromagnetic spectrum that is otherwise usable according to the principles of this invention. When at least two wavelengths of light are provided, the interferometer 100 may provide certain types of absolute measurement. In any case, the coherent light wavefront 112 transmitted by the laser source 110 is redirected by a mirror 114 into a single polarizing wavefront splitter 120. In particular, it should be appreciated that the single polarizing wavefront splitter 120 is shared by both the transmitting portion 102 and the imaging portion 104. That is, the single polarizing wavefront splitter 120 both splits the coherent light wavefront 112 into a reference wavefront 122 and an object wavefront 126, as well as combining the return reference wavefront 124 and the returning object wavefront 128 into a combined wavefront 129. The combined wavefront 129 then passes through an optical input portion 135.

As shown in Fig. 1, the imaging portion 104 of the exemplary embodiment of the interferometer 100 includes, in addition to the single polarizing wavefront splitter 120 and the optical input portion 135, a multiple phase-shift image generating portion 1600. In various exemplary embodiments, the optical input portion 135 includes one or more optical elements such as lenses, apertures and the like, such that the combined wavefront 129 transmitted by the optical input portion 135 is compatible with the multiple phase-shift image generating portion 1600. In various exemplary embodiments, the optical input portion includes a telecentric arrangement of an aperture and lenses. As shown in Fig. 1, the multiple phase-shift image generating portion 1600 includes a multiple phase-shift generating structure 1400 that inputs the combined wavefront 129 from the optical input portion 135 and outputs multiple phase-shifted interference image information 600 to a detector subsystem 700.

The detector subsystem 700 has, in general, an active surface that may be defined by an optical array. The optical array may be a 2-dimensional pixel array and may be a video-imaging sensor, such as a charged coupled device (CCD) camera, or the like. The detector subsystem 700 inputs the multiple phase-shifted interference image information 600 and outputs the image data captured by the detector subsystem 700 over a signal line 172 to a control system 170. The control system 170 performs any desired image processing and/or analyses on the captured image data, including measurement determinations. The control system 170 also outputs a control signal 174 to drive the laser source 110 of the transmitting portion 102.

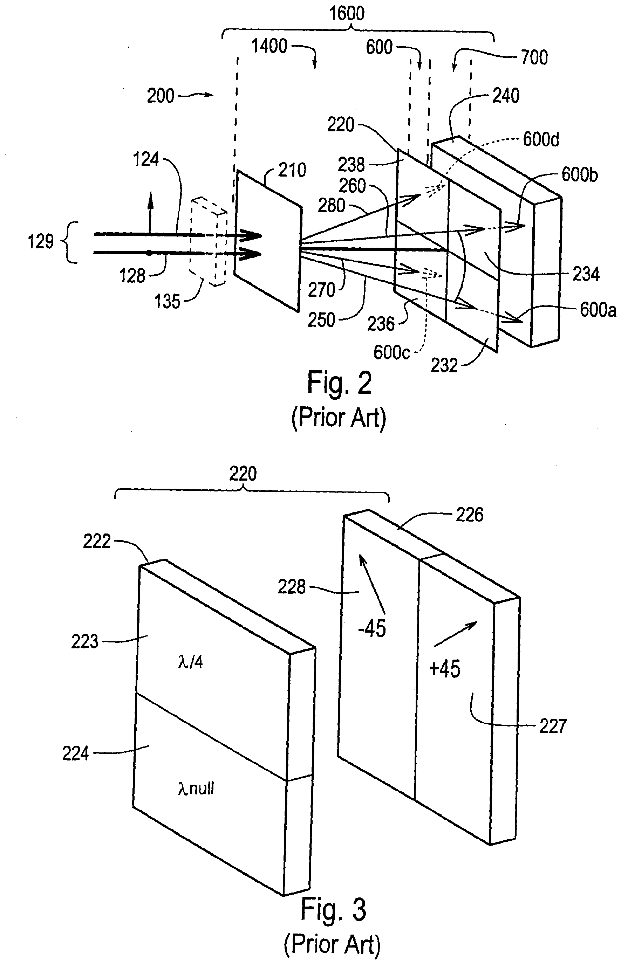

Fig. 2 schematically shows one exemplary embodiment of a multiple phase-shifted-image generating apparatus 200 disclosed in the 330 patent. The multiple phase-shifted-image generating apparatus 200 includes a wavefront splitting element 210 and a phase-shifting interference element 220 that are usable in combination to provide a known embodiment of the multiple phase-shift generating structure 1400 previously described with reference to in Fig. 1. The multiple phase-shifted-image generating apparatus 200 also includes a detector array 240, which similarly provides a known embodiment of the detector subsystem 700.

As shown in Fig. 2, the combined wavefront 129 transmitted by the optical input portion 135 includes the reference wavefront 124 from the transmitting portion 102 and the object wavefront 128 returned or reflected by the object 130 through the polarizing wavefront splitter 120. The polarizing wavefront splitter 120 is configured so that the reference wavefront 124 and the object wavefront 128 are orthogonally polarized, which is indicated in Fig. 2 by the arrow and dot symbol convention applied to the wavefronts 124 and 128.

From the optical input portion 135, the combined wavefront 129 is directed onto the wavefront splitting element 210. As disclosed in the 330 patent, the wavefront splitting element 210 is a two-dimensional diffractive optical element (DOE), and is more particularly a holographic optical element (HOE). In any case, the wavefront splitting element 210 splits the combined wavefront 129 into four spatially-separated and nominally congruent sub-wavefronts 250, 260, 270 and 280, which may, in various embodiments, be transmitted through an output lens (not shown). In particular, as disclosed in the 330 patent, each of the sub-wavefronts 250-280 follows a spatially discrete path. Each of the sub-wavefronts 250-280 is directed from the exemplary wavefront splitting element 210 to an exemplary phase-shifting interference element 220, which includes one section 232, 234, 236 and 238 for each of the sub-wavefronts 250-280, respectively.

In particular, as disclosed in the 330 patent, the phase-shifting interference element 220 is disposed with respect to the wavefront splitting element 210 so that the plurality of sub-wavefronts 250-280 are respectively incident on one of the plurality of sections 232-238. In particular, each of the sections 232-238 of the exemplary phase-shifting interference element 220 everywhere shifts the relative phase between the reference and object wavefronts 124 and 128 of that respective one of the sub-wavefronts 250-280 that is incident on that section 232-238 by a discrete phase shift $\Delta\phi_i$. The sections 232-238 of the exemplary phase-shifting interference element 220 then transmit the resulting wavefronts through respective polarizers to provide one known embodiment of the multiple phase-shifted interference image information 600 previously described with reference to in Fig. 1.

In particular, each of the sections 232-238 of the phase-shifting interference element 220 thus transmits a complete respective one of the spatially-separated phase-shifted interferograms 600a, 600b, 600c and 600d to the detector array 240. The phase shift of each of the spatially-separated phase-shifted interferograms 600a-600d is everywhere the same, and is out of phase with the phase shift of the other phase-shifted interferograms by a factor related to the various discrete phase shifts $\Delta\phi_i$.

As disclosed in the 330 patent, the detector array 240 may be a video-imaging sensor, such as a charged coupled device (CCD) camera. As disclosed in the 330 patent, the detector array 240 is disposed with respect to the phase-shifting interference element 220 so that the spatially-separated plurality of phase-shifted interferograms 600a, 600b, 600c and 600d are substantially simultaneously incident on the active surface of the detector array 240. That is, the active surface of the detector array 240 is able to image the respective spatially-separated phase-shifted interferograms 600a, 600b, 600c and 600d. Based on the imaged spatially-separated phase-shifted interferograms 600a, 600b, 600c and 600d, the spatially resolved phase of each of the spatially-separated phase-shifted interferograms 600a, 600b, 600c and 600d can be measured instantaneously in their different respective regions on the detector array 240.

Fig. 3 shows one exemplary embodiment of the phase-shifting interference element 220 disclosed in the 330 patent. As shown in Fig. 3, the phase-shifting interference element 220 includes a first plate 222 and a second plate 226. It should be appreciated that, in Fig. 3, the first and second plates 222 and 226 are shown spaced from each other for ease of illustration. However, in operation in the interferometer 100, the first and second plates 222 and 226 would be placed adjacent to each other in an abutting relationship.

As shown in Fig. 3, the first plate 222 includes a quarter-wave plate 223 and a blank or neutral plate 224. In general, a quarter-wave plate shifts the relative phase of two orthogonally-polarized incident wavefronts by 90°. In contrast, the blank or neutral plate shifts the relative phase of two orthogonally-polarized incident wavefronts by 0°. That is, the blank or neutral plate 224 does not create any relative phase shift between the two orthogonally-polarized incident wavefronts. As shown in Fig. 3, the plates 223 and 224 are coplanar and divide the first plate 222 into respective halves.

The second plate 226 of the exemplary phase-shifting interference element 220 includes a pair of polarizing portions 227 and 228 that are configured to polarize an incident wavefront linearly so that electric field vectors of the transmitted wavefront are perpendicular with each other. In particular, in the exemplary embodiment shown in Fig. 3, one of the polarizing portions, such as, for example, the first polarizing portion 227, is configured to transmit polarized light at +45° with respect to the vertical axis. As a result, this causes the in-phase components arising from the reference and object wavefronts 124 and 128 to interfere.

Similarly, the other polarizing portion, such as, for example, the second polarizing portion 228, is configured to polarize light at -45° with respect to the vertical axis. As a result, the out-of-phase components arising from the reference and object wavefronts 124 and 128 interfere. Like the quarter-wave and blank or neutral plates 223 and 224, the first and second polarizing portions 227 and 228 of the second plate 226 are also generally coplanar and divide the second plate 226 into respective halves.

Accordingly, it should be appreciated that, according to the structure shown in Fig. 3, the first portion 232 of the exemplary phase-shifting interference element 220 corresponds to the portion of the exemplary phase-shifting interference element 220 where the neutral plate 224 overlaps with the first (+45°) polarizing portion 227. Similarly, the second portion 234 corresponds to the quarter-wave plate 223 overlapping the first (+45°) polarizing portion 227. In contrast, the third portion 236 corresponds to the neutral plate 224 overlapping the second (-45°) polarizing portion 228, while the fourth portion 238 corresponds to the quarter-wave plate 223 overlapping the second (-45°) polarizing portion 228.

In particular, in the exemplary embodiment shown in Fig. 3, the first and second plates 222 and 226 are configured so that the respective portions 223 and 224 of the first plate 222 are perpendicular to the first and second polarizing portions 227 and 228 of the second plate 226.

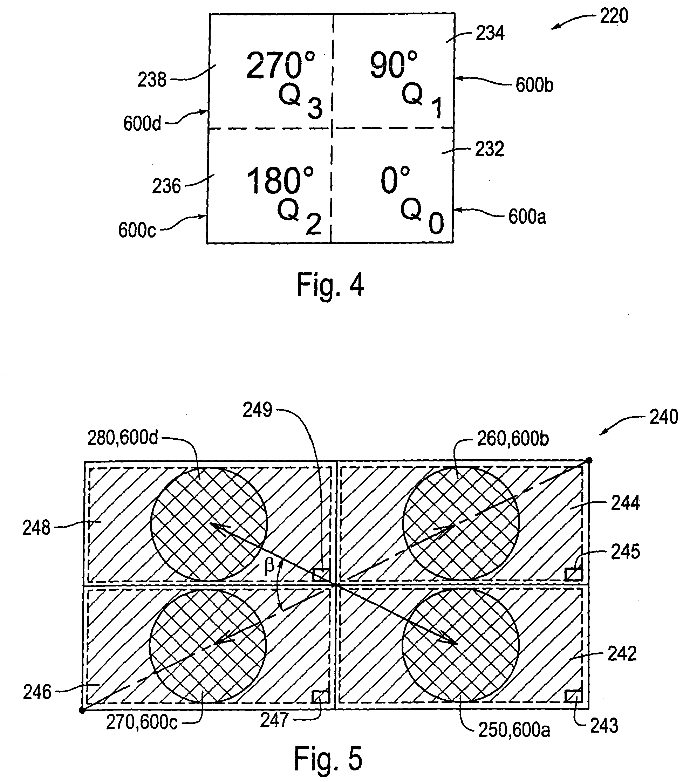

As a result, in the exemplary embodiment of the phase-shifting interference element 220 shown in Fig. 3, and as represented in Fig. 4, in the first portion 232, the neutral plate 224 and the first (+45°) polarizing portion 227 interfere the in-phase component, that is, the 0° component between the reference and object wavefronts 124 and 128 incident on the phase-shifting interference element 220, to generate the interferogram 600a. In contrast, in the second portion 234, the quarter-wave plate 223 and the first (+45°) polarizing portion 227 combine to interfere the in-phase quadrature component, that is, the 90° component, between the incident reference and object wavefronts 124 and 128, to generate the interferogram 600b. In contrast to both the first and second portions 232 and 234, for the third portion 236, the neutral plate 224 and the second (-45°) polarizing portion 228 combine to interfere the out-of-phase component, that is, the 180° component, between the incident reference and object wavefronts 124 and 128, to generate the interferogram 600c. Finally, for the fourth portion 238, the quarter-wave plate 223 and the second (-45°) polarizing portion 228 combine to interfere the out-of-phase quadrature component, i.e., the 270° component, between the reference and object wavefronts 124 and 128, to generate the interferogram 600d.

As disclosed in the 330 patent, it is desirable to maximize the imaging area of the detector array 240. Thus, to maximize the imaging area of the detector array 240, the portion of the surface area of the detector array 240 that is illuminated with the spatially-separated interferograms 600a, 600b, 600c and 600d should be maximized. Thus, in the multiple phase-shifted image generating apparatus 200 disclosed in the 330 patent, to maximize the imaging area of the detector array 240, the phase-shifting interference element 220 is desirably placed adjacent to or substantially at the active surface of the detector array 240. By detecting the plurality of spatially-separated phase-shifted interferograms 600a, 600b, 600c and 600d substantially instantaneously using the detector array 240, the control system 170 is able to instantaneously measure the entire test object 130. Additionally, by instantaneously detecting all of the spatially-separated phase-shifted interferograms 600a, 600b, 600c and 600d, there is no need to individually scan any of the incident object wavefronts 126 spatially through or across the surface of the object 130.

As shown in Fig. 5, the imaged sub-wavefronts 250, 260, 270 and 280 are spatially separated from each other across the surface of the detector array 240. However, one or more of the optical input portion 135, the wavefront splitting element 210, and/or the output lens (if present) are configured so that each of the imaged sub-wavefronts 250, 260, 270 and 280, that is, each of the phase-shifted interferograms 600a-600d incident at the surface of the detector array 240 is adjacent to, or substantially contiguous with, at least one other sub-wavefront, as also shown in Fig. 5. For example, as shown in Fig. 5, the sub-wavefront 250 is substantially contiguous with the sub-wavefronts 260 and 270, while the sub-wavefront 260 is substantially contiguous with the sub-wavefronts 250 and 280, the sub-wavefront 270 is substantially contiguous with the sub-wavefronts 250 and 280, and the sub-wavefront 280 is substantially contiguous with the sub-wavefronts 270 and 260.

Additionally, as shown in Fig. 5, the radial angular displacement P produced by the exemplary wavefront splitting element 210 is configured so that the radial angular displacement $\beta$ becomes 90° and all four images are radially symmetric. As such, each of the sub-wavefronts 250, 260, 270 and 280 follows an independent optical path from the wavefront splitting element 210 to the surface of the detector array 240. Ideally, each of these independent optical paths has a length that is substantially equal to each of the other optical paths. Accordingly, the plurality of sub-wavefronts 250, 260, 270 and 280 reach the surface of the detector array 240 substantially simultaneously.

As shown in Fig. 5, the detector array 240 can be considered to have distinct portions 242, 244, 246 and 248 in which each of the sub-wavefronts 250, 260, 270 and 280, respectively, are nominally congruently imaged, as the phase-shifted interferograms 600a, 600b, 600c and 600d. In particular, as shown in Fig. 5, when the wavefront splitting element 210 and the phase-shifting interference element 220 disclosed in the 330 patent are used as the multiple phase-shift generating structure 1400, each of the portions 242-248 is spaced apart from each other within the detector array 240.

Accordingly, in the resulting known embodiment of the multiple phase-shifted interference image information 600 disclosed in the 330 patent, when comparing pixels in order to determine a measurement value for the object 130, widely-separated pixels in each of the portions 242-248 of the detector array 240 must be compared. For example, for a given pixel 243 in the first portion 242, correspondingly located pixels 245, 247 and/or 249 in the second-fourth portions 244-248, respectively, must be compared.

As outlined above, the known wavefront splitting element 210, in combination with the known phase-shifting interference element 220, converts a number of errors in other interferometers that are not common-mode errors into common-mode errors when used in the interferometer 100, as shown in Figs. 1 and 2. However, as shown in Fig. 2, the wavefront-splitting element 210 must be spaced away from the phase-shifting interference element 220 a distance sufficient to get the appropriate divergence and spacing between each of the sub-wavefronts 250, 260, 270 and 280. Additionally, as recognized in the 330 patent, each of the path lengths of the paths of the sub-wavefronts 250, 260, 270 and 280 from the wavefront-splitting element 210 to the phase-shifting interference element 220 should ideally be the same.

However, the requirement that these path lengths ideally be the same introduces a new source of error. That is, any rotations and/or translations that do not affect the paths of the sub-wavefronts 250, 260, 270 and 280 equally will cause the path lengths of these paths to vary. In general, this will cause different focus conditions in the associated spatially-separated phase-shifted interferograms 600a, 600b, 600c and 600d, and/or may cause a shift in the relative locations of the various portions spatially-separated phase-shifted interferograms 600a, 600b, 600c and 600d upon the detector, which can lead to errors. For example, for the given pixel 243 in the first portion 242, as discussed above with respect to Fig. 5, the correspondingly located pixels 245, 247 and/or 249 in the second-fourth portions 244-248, respectively, may no longer correspond to precisely the same portion of the object 130 and, thus, may no longer be properly comparable. This in turn introduces a source of error into the measurement values generated by the control system 170 from the image data output over the signal line 172 from the detector array 240.

Similarly, because the associated spatially-separated phase-shifted interferograms 600a, 600b, 600c and 600d of the sub-wavefronts 250, 260, 270 and 280 are spaced apart from each other over the surface of the detector array 240, any variations in the output signal amplitude for a given intensity value generated by one of the subportions 242, 244, 246 and 248 to that output by one of the other subportions 242, 244, 246 or 248 will introduce a source of error.

As is well known in the art, for semiconductor imaging devices, such as CCD arrays and C-MOS-based arrays, any two adjacent pixels will likely have the same response curve or transfer function between an input intensity and an output signal amplitude. However, as is well-known in the art, for such semiconductor imaging, pixels significantly spaced apart within the array, such as the pixels 243, 245, 247, and 249, can have significantly different response curves or transfer functions between the input intensity and output signal amplitude.

Accordingly, this introduces another error into the measurements generated by the control system 170 from the image data generated by the detector array 240. In addition, it is difficult and/or expensive to make the multiple phase-shifted-image generating apparatus 200, including the wavefront-splitting element 210 that provides the functions described with reference to Figs. 2-5, without introducing various aberrations that vary between the comparable regions of the spatially-separated phase-shifted interferograms 600a, 600b, 600c and 600d.

It should be appreciated that the various errors and difficulties described above with reference to the elements and operations shown in Figs 2-5 exemplify similar errors and difficulties that may arise in any system to the extent that the multiple phase-shift generating structure 1400 and the multiple phase-shifted interference image information 600 distribute spatially-separated wavefronts, that is, spatially-separated phase-shifted interferograms, into separate portions or surfaces of the detector subsystem 700.

The inventors, in addition to recognizing these new sources of non-common-mode errors, have determined that these and other errors can be reduced, and ideally eliminated, to the extent that multiple phase-shifted interference image information can be provided for multiple phases within a small region on the detector subsystem 700. This is in contrast to distributing each of the sub-wavefronts 250, 260, 270 and 280, and thus the respective distinct spatially-separated phase-shifted interferograms 600a, 600b, 600c and 600d into separate portions of the detector array 240, which embodies the detector subsystem 700, over independent optical paths.

Stated another way, the inventors have determined that, if the number of spatially-separated sub-wavefronts, such as the sub-wavefronts 250, 260, 270 and 280 disclosed in the 330 patent, and their respective spatially-separated phase-shifted interferograms in the multiple phase-shifted interference image information 600, can be reduced relative to the number of phases included in the multiple phase-shifted interference image information 600, then at least some errors related to these non-common-mode error sources can either be eliminated and/or converted into common-mode errors. In either case, this tends to reduce the amount of error in related measurements.

For example, if the multiple phase-shifted interference image information produced by the combination of the spatially-separated phase-shifted interferograms 600a, 600b, 600c and 600d can be retained, while modifying or eliminating the wavefront splitting element 210, such that at least some of the optical paths for at least some of the phases included in the multiple phase-shifted interference image information were no longer spaced apart over the quadrants $Q_0$-$Q_3$ and the surface of the detector subsystem 700, these non-common-mode error sources can either be eliminated and/or converted into common-mode errors. In either case, this tends to reduce the amount of error, or ideally would not create errors, in the measurements generated by the control system 170 from the images output by the detector subsystem 700 over the signal line 172.

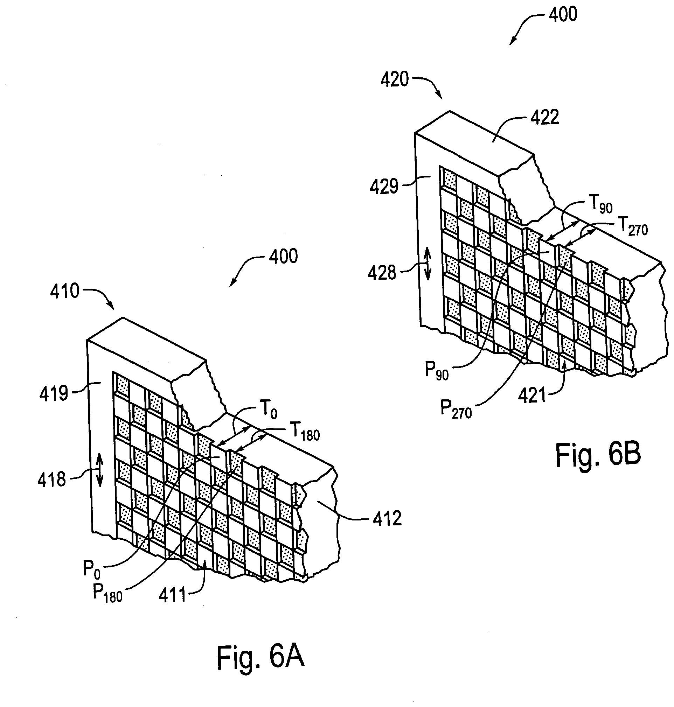

Fig. 6 illustrates a portion of a first exemplary embodiment of a high-density phase-shifting array element 410 according to this invention. The high-density phase-shifting array element 410, shown in Fig. 6A, is usable in various exemplary embodiments of the multiple phase-shift generating structure 1400, as described below with respect to the first and second exemplary embodiments 3000 and 4000 of a phase-shift imaging element according to this invention. It should be appreciated that the exemplary embodiments 3000 and 4000, and similar phase-shift imaging elements according to this invention, are usable in place of the multiple phase-shift image generating apparatus 200 shown in Figs. 2-5 and, more generally, in the multiple phase-shift image generating portion 1600 described with reference to Fig. 1.

Fig. 6 further illustrates a portion of a second exemplary embodiment of a high-density phase-shifting array element 420, shown in Fig. 6B, that is usable in each of the first and second exemplary embodiments 3000 and 4000 of the phase-shift array imaging element according to this invention, that are, in turn, usable in place of the multiple phase-shift image generating structure 200 and, more generally, in the multiple phase-shift image generating portion 1600 described with reference to Fig. 1.

As shown in Fig. 6, the first and second exemplary embodiments of the high-density phase-shifting array element 410 and 420, respectively, are "variable thickness" type relative retarder arrays formed of birefringent material. In the first and second exemplary embodiments of the high-density phase-shifting array element 410 and 420, the fast and slow axes of the birefringent material of the relative retarder array are uniformly oriented throughout the retarder array. The thickness in each portion of a "thickness pattern" of the relative retarder array determines the amount by which any component of the light of a combined wavefront 129 that is polarized parallel to the slow axis is "relatively retarded" in comparison to any component of the light of the combined wavefront 129 that is polarized parallel to the fast axis.

It should be appreciated that, for a given wavelength of light, the relative retardation between various polarized light components passing through any portion of a relative retarder array can be characterized as a relative phase shift between the various polarized light components. Accordingly, such relative retardation between the polarized light components passing through any portion of a relative retarder array is referred to alternatively as a relative retardation, a relative phase shift, or simply as a phase shift or phase-shift. Such terms generally have the same meaning below, unless otherwise indicated by the context or related discussion.

It should also be appreciated that the terms "fast axis" and "slow axis" are used herein primarily in a relative sense. That is, as used herein, the fast axis is that axis that has an effective index of refraction that is smaller that the effective index of refraction of the axis that acts as the slow axis. In various exemplary embodiments, the fast and slow axes may align with particular crystallographic axes, or the like, which are referred to in a strict sense in some fields as the fast and slow axes of a particular material. However, more generally, any material axes that operate to provide operationally-effective "fast" and "slow" axes according to the principles of this invention fall within the scope of the terms fast axis and slow axis, respectively, as used here.

As shown in Fig. 6, in various exemplary embodiments, the first exemplary embodiment of the high-density phase-shifting array element 410, as shown in Fig. 6A, is formed using a birefringent substrate 412, such as a low order quartz wave plate. The birefringent substrate 412 has a surface 419 and a fast axis 418. A slow axis, not shown, is orthogonal to the fast axis 418 and parallel to the surface 419. As shown in Fig. 6, the birefringent substrate 412 of the first exemplary embodiment of the high-density phase-shifting array element 410 has a nominal thickness $T_0$ such that the component of a combined wavefront 129 that is polarized parallel to the slow axis of the birefringent substrate 412 is retarded by an integer number of wavelengths relative to the component of the combined wavefront 129 that is polarized parallel to the fast axis of the birefringent substrate 412.

As shown in Fig. 6, in various exemplary embodiments, the second exemplary embodiment of the high-density phase-shifting array element 420, shown in Fig. 6B, is also formed using a birefringent substrate 422, such as a low order quartz wave plate. The birefringent substrate 422 has a surface 429 and a fast axis 428. As shown in Fig. 6, the birefringent substrate 422 of the second exemplary embodiment of the high-density phase-shifting array element 420 has a nominal thickness $T_{90}$ such that the component of a combined wavefront 129 that is polarized parallel to the slow axis of the birefringent substrate 412 is retarded by an integer number of wavelengths plus an additional quarter of a wavelength relative to the component of the combined wavefront 129 that is polarized parallel to the fast axis of the birefringent substrate 412.

Accordingly, each portion $P_0$ of the high-density phase-shifting array element 410 has the nominal thickness $T_0$. As a result, the portions $P_0$ of the first exemplary embodiment of the high-density phase-shifting array element 410 do not produce any net relative phase shift between the components of the wavefront 129. That is, each portion $P_0$ produces a zero-degree phase shift between the components of the wavefront 129, as indicated by the subscript "0", used as a convention herein. In contrast, each portion $P_{90}$ of the high-density phase-shifting array element 420 has the nominal thickness $T_{90}$. That is, the substrate 422 is nominally a quarter wave plate. As a result, the portions $P_{90}$ of the second exemplary embodiment of the high-density phase-shifting array element 420 produce a relative phase shift of 90 degrees between the components of the wavefront 129, as indicated by the subscript "90", used as a convention herein.

As shown in Fig. 6, each of the first and second exemplary embodiments of the high-density phase-shifting array elements 410 and 420 includes an array of recesses that are etched into the substrates 412 and 422. As shown in Fig. 6, the recesses are rectangular. However, more generally, it should be appreciated that, in various exemplary embodiments, the shape of the recesses can be any usable shape that corresponds to the shape of a pixel, or a group of pixels, of a detector array of the detector subsystem 700 and the associated signal processing that is used in a phase-shift array imaging element 3000, 4000 or the like according to this invention.

In various exemplary embodiments, the recesses are etched with sides that are as perpendicular as possible to the nominal surface plane of the substrate 412 or 422. Such etching can be obtained by reactive ion etching or other methods. As shown in Fig. 6, the recesses of the first and second exemplary embodiments of the high-density phase-shifting array elements 410 and 420 are etched to a depth having a dimension corresponding to the thickness of a half-wave plate in the birefringent substrate 412, as described in detail below. Accordingly, for each of the recesses that are etched into the substrates 412 and 422, the relative phase shift produced by the recesses differs by 180 degrees from the relative phase shift produced by the unetched areas for the wavefront components polarized along the fast and slow axes.

That is, as shown in Fig. 6, the substrate 412 in the recesses has a thickness of $T_{180}$, such that the component of a combined wavefront 129 that is polarized parallel to the slow axis of the birefringent substrate 412 is retarded by an integer number of wavelengths plus an additional half of a wavelength relative to the component of the combined wavefront 129 that is polarized parallel to the fast axis of the birefringent substrate 412. Each portion $P_{180}$ of the high-density phase-shifting array element 410 has the nominal thickness $T_{180}$. That is, each of the recesses in the substrate 412 correspond to a nominal half wave plate. As a result, the portions $P_{180}$ of the first exemplary embodiment of the high-density phase-shifting array element 410 produce a relative phase shift of 180 degrees between the components of the wavefront 129, as indicated by the subscript "180", used as a convention herein. These 180-degree phase shift portions $P_{180}$ of the first exemplary embodiment of the high-density phase-shifting array element 410 that have the nominal thickness $T_{180}$ produce a phase shift that is different by 180 degrees relative to the zero-degree portions $P_0$.

Similarly, the substrate 422 in the recesses has a thickness of $T_{270}$, such that the component of a combined wavefront 129 that is polarized parallel to the slow axis of the birefringent substrate 422 is retarded by an integer number of wavelengths plus an additional three-quarters of a wavelength relative to the component of the combined wavefront 129 that is polarized parallel to the fast axis of the birefringent substrate 422. Each portion $P_{270}$ of the high-density phase-shifting array element 420 has the nominal thickness $T_{270}$. That is, each of the recesses in the substrate 422 correspond to a nominal three-quarter wave plate. As a result, the portions $P_{270}$ of the second exemplary embodiment of the high-density phase-shifting array element 420 produce a relative phase shift of 270 degrees between the components of the wavefront 129, as indicated by the subscript "270", used as a convention herein. These 270-degree phase shift portions $P_{270}$ of the second exemplary embodiment of the high-density phase-shifting array element 420 that have the nominal thickness $T_{270}$ produce a phase shift that is different by 180 degrees relative to the 90-degree portions $P_{90}$.

As shown in Fig. 6, in various exemplary embodiments, the 0-dgree and 90-degree phase-shift portions $P_0$ and $P_{90}$ are formed by the surfaces 419 and 429 of the first and second substrates 412 and 422, respectively. The 180-degree and 270-degree phase-shift portions $P_{180}$ and $P_{270}$ are formed by etching into the first and second substrates 412 and 422, respectively, to an etch depth dimension corresponding to the thickness of a half-wave plate in the birefringent substrates 412 and 422, respectively. In various exemplary embodiments, for each of the first and second substrates 412 and 422, the etch depth dimension corresponds to the thickness of a zero-order half-wave plate. However, it should be appreciated that etch depth dimension in either of the first and second substrates 412 and/or 422 could correspond to any odd multiple of the thickness of a zero-order half-wave plate.

It should also be appreciated that, in various exemplary embodiments, the thickness $T_0$ may be made less than the thickness $T_{180}$. Similarly, the thickness $T_{90}$ may be made less than the thickness $T_{270}$. In such cases, the 180-dgree and 270-degree phase-shift portions $P_{180}$ and $P_{270}$ may be formed by the surfaces 419 and 429 of the first and second substrates 412 and 422, respectively. The zero-degree and 90-degree phase-shift portions $P_0$ and $P_{90}$ may then be formed by etching into the first and second substrates 412 and 422, respectively, to an etch depth dimension corresponding to the thickness of a half-wave plate in the birefringent substrates 412 and 422, respectively.

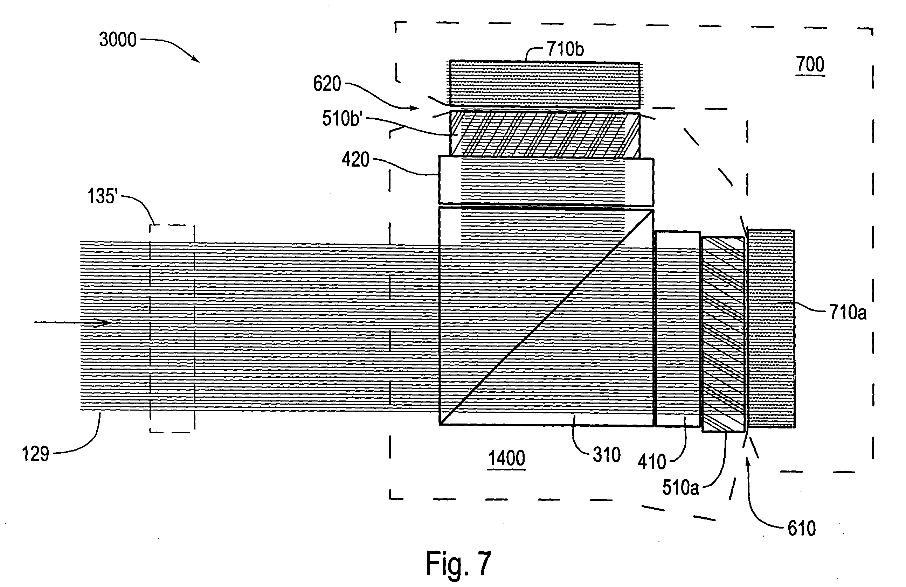

As shown in Fig. 6, the first exemplary embodiment of the high-density phase-shifting array element 410 includes alternating first or zero-degree phase-shift portions $P_0$ and second or 180-degree phase-shift portions $P_{180}$ distributed over the surface 419 in a pattern 411. In particular, as shown in Fig. 6, the pattern 411 of the first and second phase-shift portions $P_0$ and $P_{180}$ alternates in both the horizontal and vertical directions of the first exemplary embodiment of the high-density phase-shifting array element 410. This creates a checkerboard placement of the first and second phase-shift portions $P_0$ and $P_{180}$. In various exemplary embodiments, when the first exemplary embodiment of the high-density phase-shifting array element 410 is incorporated into each of the detector devices 3000 and 4000 shown in Figs. 7, 8, 10 and 11 according to this invention, the checkerboard pattern of the first and second phase-shift portions $P_0$ and $P_{180}$ extends to cover substantially the entire surface area of one portion of a detector device 710 used to implement the detector subsystem 700.

Similarly, as shown in Fig. 6, the second exemplary embodiment of the high-density phase-shifting array element 420 includes alternating first or 90-degree phase-shift portions $P_{90}$ and second or 270-dgree phase-shift portions $P_{270}$ distributed over the surface 429 in a pattern 421. In particular, as shown in Fig. 6, the pattern 421 of the first and second phase-shift portions $P_{90}$ and $P_{270}$ alternates in both the horizontal and vertical directions of the second exemplary embodiment of the high-density phase-shifting array element 420. This creates a checkerboard placement of the first and second phase-shift portions $P_{90}$ and $P_{270}$. In various exemplary embodiments, when the second exemplary embodiment of the high-density phase-shifting array element 420 is incorporated into each of the detector devices 3000 and 4000 shown in Figs. 7, 8, 10 and 11 according to this invention, the checkerboard pattern of the first and second phase-shift portions $P_{90}$ and $P_{270}$ extends to cover substantially the entire surface area of the other portion of the detector device 710 used to implement the detector subsystem 700.

In the embodiments of the high-density phase-shifting array elements 410 and 420 shown in Fig. 6, it should be appreciated that the fast axes 418 and 428 of the first and second birefringent substrates 412 and 422, respectively, lie in a plane that is normal to the surfaces 419 and 429. In various exemplary embodiments, the fast axes 418 and 428 are parallel to the vertical edges of the zero-degree and 180-degree phase shift portions $P_0$ and $P_{180}$ and the 90-degree and 270-degree phase shift portions $P_{90}$ and $P_{270}$, respectively. However, it should be appreciated that, in various other exemplary embodiments, the fast axes 418 and 428 could lie parallel to the horizontal edges of the various phase shift portions, or at 45 degrees relative to these edges, or in any other operable orientation, depending on the relative orientations of the polarized components of the combined wavefront 129 and other related design factors. It should also be appreciated that, in these first and second exemplary embodiments of the high-density phase-shifting array elements 410 and 420, the fast axes 418 and 228 are fixed and constant throughout the entire first and second substrates 412 and 422, respectively, and the phase shift portions $P_0$, $P_{90}$, $P_{180}$ and $P_{270}$ are obtained by controllably varying the fabricated thicknesses within the first and second substrates 412 and 422.

The various phase-shift portions $P_0$, $P_{90}$, $P_{180}$ and $P_{270}$ of the first and second exemplary embodiments of the high-density phase-shifting array elements 410 and 420 may be formed by any known or later-developed method of fabrication. Such methods include, but are not limited to, material-addition methods, such as patterned deposition or coating, or the like; or material-removal methods, such as patterned etching, or the like; or material displacement methods such micro-molding or micro-embossing or the like. In particular, the only manufacturing requirement is that the various phase-shift portions $P_0$, $P_{90}$, $P_{180}$ and $P_{270}$ can be fabricated in relatively high-density arrays. Specifically, the dimensions of the various phase-shift portions $P_0$, $P_{90}$, $P_{180}$ and $P_{270}$ must be able to approach the dimensions of one pixel, or a small group of pixels, of an optical detector array, as described further below. In various exemplary embodiments according to this invention, as shown in Fig. 6, the arrays of the various phase-shift portions $P_0$, $P_{90}$, $P_{180}$ and $P_{270}$ are implemented by etching or otherwise creating a pattern of regions having different thicknesses within the first and second substrates 412 and 422 that are formed of a birefringent material.

In particular, each of the substrates 412 and 422 is masked by any suitable known or later-developed method, such as methods used for thin film fabrication or the like. Accordingly, the patterns 411 and 421 of the first and second phase angle portions $P_0$ and $P_{180}$, and of the third and fourth phase-shift portions $P_{90}$ and $P_{270}$, can be etched into the surfaces 419 and 429 of the substrates 412 and 422 by any suitable known or later-developed method, such as reactive ion etching or other suitable methods. As previously described, in various exemplary embodiments, the portions $P_{180}$ and $P_{270}$ are etched to an etch depth dimension corresponding to the thickness of a half-wave plate in the birefringent substrates 412 and 422, respectively. For example, in various exemplary embodiments that use a typical commercially-available quartz wave-plate material as the substrates 412 and 422, a nominal etch depth of 35 microns from the surfaces 419 and 429 for the phase-shift portions $P_{180}$ and $P_{270}$ is suitable for a laser source that emits a laser wavefront having a wavelength of 633 nm.

It should also be appreciated that, as shown in Fig. 6, the replication directions of the various phase-shift portions $P_0$, $P_{90}$, $P_{180}$ and $P_{270}$ are arranged horizontally and vertically. However, more generally, the replication directions of each of the various phase-shift portions $P_0$, $P_{90}$, $P_{180}$ and $P_{270}$ are completely controllable and selectable in combination with the other elements of the multiple phase-shift generating structure according to this invention. In various exemplary embodiments, the various phase-shift portions $P_0$, $P_{90}$, $P_{180}$ and $P_{270}$ will be of equal size and shape and will cover equal portions of a detector array of the detector subsystem 700.

In various exemplary embodiments, each of the various phase-shift portions $P_0$, $P_{90}$, $P_{180}$ and $P_{270}$ will extend over an integer number of pixels of the detector array of the detector subsystem 700. In various exemplary embodiments, the boundaries of the various phase-shift portions $P_0$, $P_{90}$, $P_{180}$ and $P_{270}$ will be aligned with the boundaries between the pixels of the detector array. Thus, in such exemplary embodiments, each pair or set of the various phase-shift portions $P_0$ and $P_{180}$, and $P_{90}$ and $P_{270}$, define unit cells within the first and second exemplary embodiments of the high-density phase-shifting array elements 410 and 420 and the corresponding detector arrays of the detector subsystem 700. At one extreme, each of the respective various phase-shift portions $P_0$, $P_{90}$, $P_{180}$ and $P_{270}$ can be associated with and aligned with a respective single pixel of the corresponding detector array.

It should be appreciated that grouping the zero and 180 degree portions $P_0$ and $P_{180}$ on the first high-density phase-shifting array element 410 and the 90 and 270 degree portions $P_{90}$ and $P_{270}$ on the second high-density phase-shifting array element 420 is more appropriate when attempting to cancel certain common-mode offset errors, but is otherwise somewhat arbitrary. That is, this is not done because of some fundamental limitation on the various phase-shift groupings usable in a high-density phase-shifting array element according to this invention. Thus, a high-density phase-shifting array element could instead contain the zero and 90 degree portions $P_0$, and $P_{90}$, while another high-density phase-shifting array element could instead contain the 180 and 270 degree portions $P_{180}$, and $P_{270}$. Thus, in various exemplary embodiments of a phase-shift imaging element according to this invention other combinations of the various phase-shift portions $P_0$, $P_{90}$, $P_{180}$ and $P_{270}$ can be implemented in a high-density phase-shifting array element and at least some of the advantages and benefits of a high-density phase-shifting array element according to this invention will be provided.

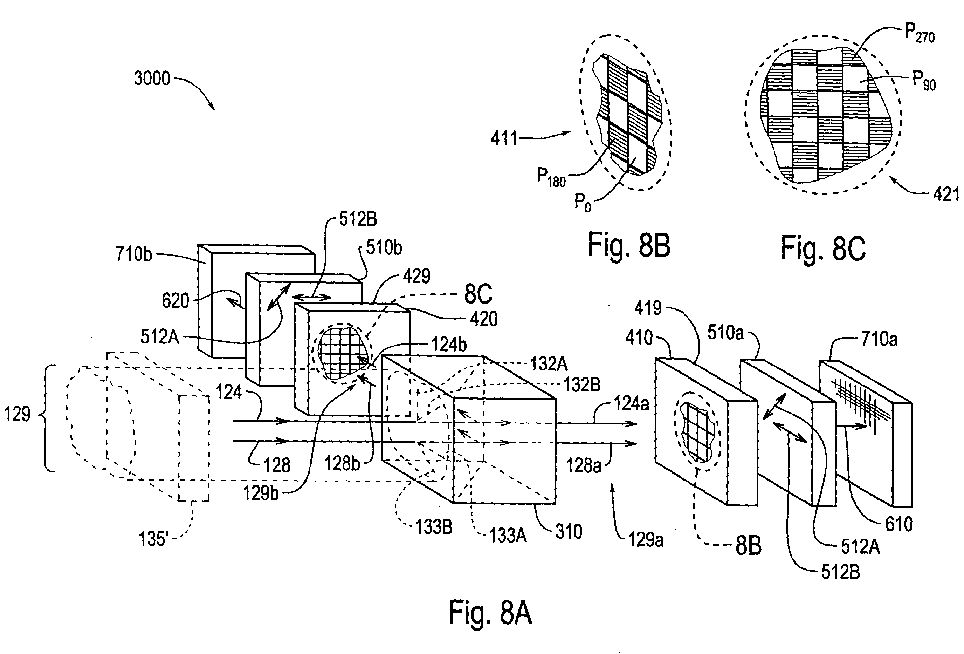

Figs. 7 and 8 illustrate one exemplary phase-shift imaging element 3000 according to this invention. As shown in Fig. 7, the phase-shift imaging element 3000 includes a first exemplary embodiment of a multiple phase-shift generating structure 1400 according to this invention and a first exemplary embodiment of a detector subsystem 700 according to this invention, which includes detector devices 710a and 710b. In the exemplary embodiment shown in Figs. 7 and 8, the multiple phase-shift generating structure 1400 incorporates the pair of high-density phase-shifting array elements 410 and 420 according to this invention. The multiple phase-shift generating structure 1400 also includes a beam splitter 310 and two polarizers 510a and 510b.

It should be appreciated that the phase-shifted-image generating apparatus 200 disclosed in the 330 patent and described with reference to Figs. 2-5 uses two phase-shifting "portions", the quarter-wave plate 223 and the blank or neutral plate 224 of the first portion 222, and two differently oriented polarizers, the first +45° polarizing portion 227 and the second -45° polarizing portion 228, to produce four interference images that are spatially separated. In contrast, the first exemplary phase shift imaging element 3000 according to this invention uses four phase-shifting portions, the interleaved portions $P_0$, $P_{180}$, and the interleaved portions $P_{90}$ and $P_{270}$ portions of the high-density phase-shifting array elements 410 and 420, respectively, and the two polarizers having a same effective orientation, the polarizers 510a and 510b, to produce two interference images that each include two interleaved interference image portions having different phase-shifts.

As shown in Figs. 7 and 8, in this first exemplary embodiment, the first high-density phase-shifting array element 410 and a first polarizer element 510a are adjacent to the beam splitter 310 along a first direction. Along this first direction, the multiple phase-shift generating structure 1400 generates multiple phase-shifted interference image information 610 at its interface with the detector device 710a. The second high-density phase-shifting array element 420 and a second polarizer element 510b are adjacent to the beam splitter 310 along a second direction. Along this second direction, the multiple phase-shift generating structure 1400 generates multiple phase-shifted interference image information 620 at its interface with the detector device 710b. However, it should be appreciated that the high-density phase-shifting array elements 410 and 420 do not have to lie along the first and second directions, respectively. That is, the high-density phase-shifting array elements 410 and 420 could instead lie along the second and first directions, respectively, without substantially changing the operating principles of the phase-shift imaging element 3000.

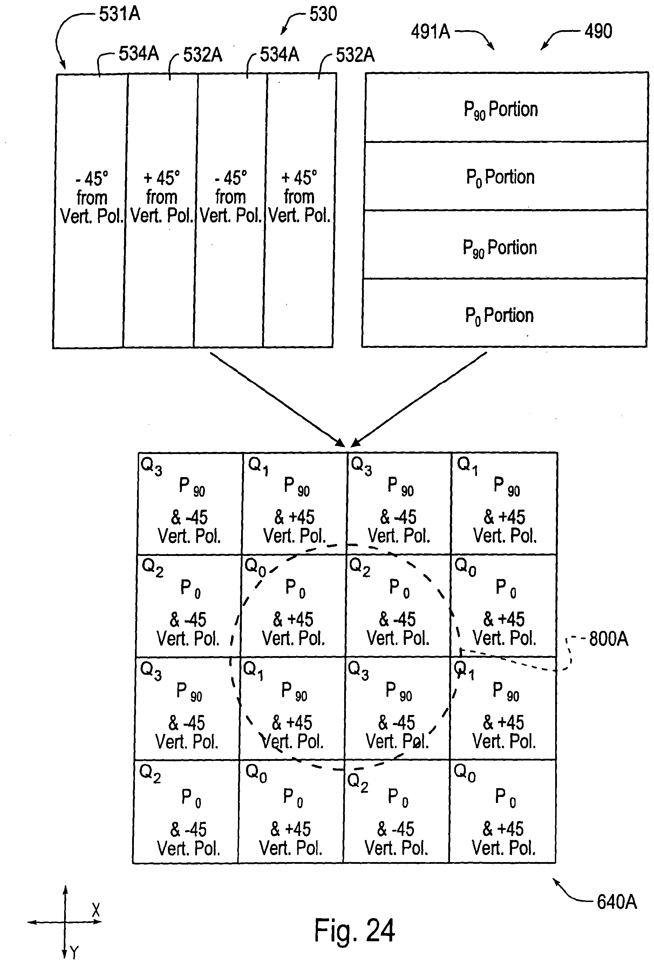

As shown in Figs. 7 and 8, the combined wavefront 129 is transmitted by the optical input portion 135'. Various design considerations related to the optical input portion 135' are discussed further below with reference to Figs. 24-27. The transmitted combined wavefront 129 includes the reference wavefront 124 and the object wavefront 128. The transmitted combined wavefront 129 passes through the beam splitter 310, which splits the combined wavefront 129 into two respective combined sub-wavefronts or "copies" 129a and 129b. It should be appreciated that, due to the action of the beam splitter 310, the sub-wavefronts or "copies" 129a and 129b are mirror images of each other. However, with appropriate signal processing, this difference is inconsequential. Moreover, in various exemplary embodiments, this difference can even be advantageous. The sub-wavefront 129a is directed along the first direction to the first high-density phase-shifting array element 410 and the polarizer element 510a to the detector device 710a. In contrast, the sub-wavefront 129b is directed along the second direction to the second high-density phase-shifting array element 420 and the second polarizer element 510b to the detector device 710b.

As previously described, the zero degree phase-shift portions $P_0$ and the 180 degree phase-shift portions $P_{180}$ of the first high-density phase-shifting array element 410 are fabricated to shift the relative phase between the two orthogonally polarized sub-wavefront components 124a and 128a comprising the combined sub-wavefront 129a by 0° and 180°, respectively. Thus, when the sub-wavefront 129a directed along the first direction to the first high-density phase-shifting array element 410 is transmitted by the first high-density phase-shifting array element 410, the checkerboard pattern 411 of the first high-density phase-shifting array element 410 creates a spatially interleaved checkerboard phase-shift pattern, corresponding to the pattern 411, in the combined wavefront 129a. In the checkerboard phase-shift pattern 411, the two orthogonally polarized sub-wavefront components 124a and 128a are relatively phase-shifted by 0 degrees corresponding to the portions $P_0$ and by 180 degrees corresponding to the portions $P_{180}$.

The combined sub-wavefront 129a passing out of the first high-density phase-shifting array element 410, including the checkerboard phase-shift pattern 411, is then directed onto the polarizer element 510a. The polarizer element 510a is oriented to transmit the in-phase components of the orthogonally polarized sub-wavefront components 124a and 128a of the combined sub-wavefront 129a. As a result, the multiple phase-shifted interference image information 610 includes a checkerboard pattern, corresponding to the pattern 411, of first "0 degree" interference portions and second "180 degree" interference portions interleaved at a high spatial frequency corresponding to the checkerboard pattern of the 0 degree phase-shift portions $P_0$ and the 180 degree phase-shift portions $P_{180}$.

Similarly, the 90 degree phase-shift portions $P_{90}$ and the 270 degree phase-shift portions $P_{270}$ of the second high-density phase-shifting array element 420 are fabricated to shift the relative phase between the two orthogonally polarized sub-wavefront components 124b and 128b comprising the combined sub-wavefront 129b by 90° and 270°, respectively. Thus, when the sub-wavefront 129b that is directed along the second direction to the second high-density phase-shifting array element 420 is transmitted by the second high-density phase-shifting array element 420, the checkerboard pattern 422 of the second high-density phase-shifting array element 420 acts to create a spatially interleaved checkerboard phase-shift pattern, corresponding to the pattern 421, in the combined wavefront 129b. In the checkerboard phase-shift pattern 421, the two orthogonally polarized sub-wavefront components 124b and 128b are relatively phase-shifted by 90 degrees corresponding to the portions $P_{90}$ and 270 degrees corresponding to the portions $P_{270}$.

The combined sub-wavefront 129b passing out of the second high-density phase-shifting array element 420, including the checkerboard phase-shift pattern 421, is then directed onto the polarizer element 510b. The polarizer element 510b is oriented to transmit the in-phase components of the orthogonally polarized sub-wavefront components 124b and 128b of the combined sub-wavefront 129b. As a result, the multiple phase-shifted interference image information 620 includes a checkerboard pattern, corresponding to the pattern 421, of first "90 degree" interference portions and second "270 degree" interference portions interleaved at a high spatial frequency corresponding to the checkerboard pattern of the 90 degree phase-shift portions $P_{90}$ and the 270 degree phase-shift portions $P_{270}$.

In various exemplary embodiments, the patterned surfaces 419 and 429 of the first and second high-density phase-shifting array elements 410 and 420 are oriented toward their corresponding detector devices 710a and 710b, respectively. In this case, the sub-wavefronts 129a and 129b are incident on the unetched or "plain" sides of the first and second high-density phase-shifting array elements 410 and 420 and exit through the patterned surfaces 419 and 429 onto the first and second polarization elements 510a and 510b, respectively.

In various exemplary embodiments, the patterned or etched surfaces 419 and 429 of the high-density phase-shifting array elements 410 and 420 abut the polarizer elements 510a and 510b, respectively. In various exemplary embodiments, the first and second polarization elements 510a and 510b are distinct polarization elements. However, it should be appreciated that, in various other exemplary embodiments, the polarizer elements 510a and 510b may be fabricated directly on the surface of the first and second high-density phase-shifting array elements 410 and 420, respectively, that is closest to the corresponding detector 710a or 710b. Thus, it should be appreciated that, in various exemplary embodiments, the structures and/or functions of the polarizer elements 510a and/or 510b may be merged with and/or indistinguishable from the corresponding first and/or second high-density phase-shifting array elements 410 and 420. In embodiments where the patterned surfaces 419 and 429 are closest to the corresponding detectors 710a and 710b, the patterned surfaces 419 and 429 may be planarized if necessary for the application of the polarizer elements 510a and 510b, according to planarizing techniques known in the thin film and semiconductor processing fields.

In various exemplary embodiments, planarization can include filling the etched ones of the various phase-shift portions $P_0$-$P_{270}$ with an optical material having an index of refraction that matches the nominal index of refraction of the substrate of the high-density phase-shifting array element 410 or 420 and that is amorphous or otherwise lacking a retardation effect. In various exemplary embodiments, as the surfaces 419 and 429 are planarized, care is taken to avoid removing any phase shifting material. This may be accomplished by leaving a thin film of the neutral optical material over the entire surface 419 and/or 429 of the phase-shifting array elements 410 and/or 420. In various exemplary embodiments, where the phase-shifting array elements 410 and/or 420 are joined to separate polarizer elements 510a and 510b, respectively, an optical grade adhesive having an appropriate optical index can be used to both fill the patterned surfaces 419 and 429 and to join the patterned surfaces 419 and 429 of the phase-shifting array elements 410 and/or 420 to the polarizer elements 510a and 510b, respectively.

In various exemplary embodiments, the high-density phase-shifting array elements 410 and 420 may include a set of "barrier strips" of a light-blocking material that coincides with the edges between the phase-shift portions $P_0$-$P_{270}$ of the high-density phase-shifting array elements 410 and 420 according to this invention. In general, the barrier strips have a width sufficient to occlude any sloped portion of the etched sidewalls between the phase-shift portions $P_0$-$P_{270}$ of the high-density phase-shifting array elements 410 and 420.

In some of these exemplary embodiments, the barrier strips are also wide enough to prevent unwanted leakage from a particular interference portion of the multiple phase-shifted interference image information 610 and 620 into an unintended detector element or pixel. For example, such leakage could occur due to various alignment tolerances during fabrication and assembly of the first exemplary phase-shift imaging, element 3000 according to this invention.

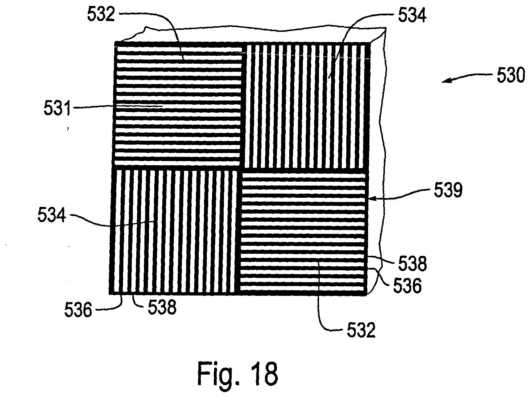

In various exemplary embodiments, the polarizer elements 510a and 510b are wire-grid polarizer elements, such as those disclosed below with respect to Figs. 18-22, that are fabricated directly on a planar surface of the first and second high-density phase-shifting array elements 410 and 420, respectively, that is closest to the corresponding detector 710a or 710b. In such embodiments, it is particularly easy to form the set of "barrier strips" during the thin films steps used fabricate the wire-grid polarizer elements.

It should be appreciated that, in various other exemplary embodiments, the polarizer elements 510a and/or 510b and/or barrier strips may be fabricated directly on the surface of the detector devices 710a and 710b, respectively. When the polarizer element 510a or 510b is a wire-grid polarizer, a thin insulating layer should be used between the active portions of the detector device 710a or 710b and the elements of the wire-grid polarizer. Thus, it should be appreciated that, in various exemplary embodiments, the structure and function of the polarizer elements 510a and/or 510b and the detector devices 710a and/or 710b, respectively, may be merged.

In various exemplary embodiments, regardless of their respective methods of fabrication, the patterned surfaces 419 and 429 of the phase-shifting array elements 410 and 420 are oriented toward the detector respective detector devices 710a and 710b, and to abut the polarizer elements 510a and 510b. In various exemplary embodiments, the polarizer elements 510a and 510b are thin relative to the depth of focus of the multiple phase-shifted interference image information 610 and/or 620 in the vicinity of the detector devices 710a and 710b. In various exemplary embodiments, the polarizer elements 510a and 510b abut the respective detector devices 710a and 710b such that the polarizer elements 510a and 510b are separated from the surface of the detector elements of the detector devices 710a and 710b, respectively, by only a thin film insulating layer or a negligible air gap, or the like.

In such "abutting" embodiments, the best alignment between the various phase-shift portions $P_0$-$P_{270}$, and the detector elements of their corresponding detector devices 710a or 710b is facilitated, and "leakage" of interference light of different relative phase-shifts between adjacent detector elements or pixels is reduced, and, ideally, minimized. Furthermore, any light scattered or diffracted by the polarizing structures of the first and second polarizer elements 510a and 510b will be primarily confined to, and averaged by, the abutting pixel(s), and thus will not disturb the acquired multiple phase-shifted interference image information 610 and/or 620.

In various exemplary embodiments, regardless of their respective fabrication methods, the polarizer elements 510a and 510b, the high-density phase-shifting array elements 410 and 420, the detector portions 710a and 710b and the beam splitter 310 are effectively bonded or joined together to form a monolithic phase-shift imaging element, such as the phase-shift imaging element 3000 shown in Fig. 7. It should be appreciated that in various exemplary embodiments according to this invention it is advantageous to fabricate the polarizer elements 510a and 510b, the high-density phase-shifting array elements 410 and 420, and the beam splitter 310 such that each portion of the effective optical path length of each of the combined sub-wavefronts 129a and 129b are as similar as possible, and ideally, equal.

In a first exemplary embodiment of the phase-shift imaging element 3000, the reference wavefront 124 and the object wavefront 128 are polarized along the orthogonal vertical and horizontal directions 132A and 133A shown in Fig. 8. In this exemplary embodiment, the fast axes 418 and 428 of the of the birefringent substrate material of the respective phase-shifting array elements 410 or 420 are oriented vertically, as shown in Fig. 6, and the polarizer elements 510a and 510b each has the polarization direction 512A, i.e., the polarization direction that lies at a 45 degree angle to the orthogonal vertical and horizontal directions 132A and 133A. As a result, the polarizer element 510a transmits and interferes the in-phase components of the orthogonally polarized sub-wavefront components 124a and 128a of the combined sub-wavefront 129a in the checkerboard phase-shift pattern passing out of the first high-density phase-shifting array element 410 to produce the multiple phase-shifted interference image information 610. Similarly, the polarizer element 510b transmits and interferes the in-phase components of the orthogonally polarized sub-wavefront components 124b and 128b of the combined sub-wavefront 129b in the checkerboard phase-shift pattern passing out of the second high-density phase-shifting array element 420 to produce the multiple phase-shifted interference image information 620.

In particular, the multiple phase-shifted interference image information 610 includes a checkerboard pattern of "$Q_0$" and "$Q_2$" interference portions. The "$Q_0$" interference portions correspond to a relative phase shift of zero degrees between the sub-wavefront components 124a and 128a that pass through the zero degree phase-shift portions $P_0$ of the first high-density phase-shifting array element 410 and the polarizer element 510a. The "$Q_2$" interference portions correspond to a relative phase shift of 180 degrees between the sub-wavefront components 124a and 128a that pass through the 180 degree phase-shift portions $P_{180}$ of the first high-density phase-shifting array element 410 and the polarizer element 510a.

Thus, the $Q_0$ and $Q_2$ interference portions within the multiple phase-shifted interference image information 610 are interleaved in a checkerboard pattern at a high spatial frequency corresponding to the pattern 411 of the high-density phase-shifting array element 410. It should be appreciated that, in one sense, this checkerboard pattern of $Q_0$ and $Q_2$ interference portions corresponds to a high-density interleaving of the $Q_0$ quadrant 232 and the $Q_2$ quadrant 236 shown in Fig. 4, transmitted as a single image onto the surface of the detector device 710a.

Similarly to the $Q_0$ and $Q_2$ interference portions of the multiple phase-shifted interference image information 610, the multiple phase-shifted interference image information 620 includes a checkerboard pattern of "$Q_1$" and "$Q_3$" interference portions. The $Q_1$ interference portions correspond to a relative phase shift of 90 degrees between the phase-shifted sub-wavefront components 124b and 128b that pass through the 90 degree phase-shift portions $P_{90}$ of the second high-density phase-shifting array element 420 and the second polarizer element 510b. In contrast, the $Q_3$ interference portions correspond to a relative phase shift of 270 degrees between the sub-wavefront components 124b and 128b that pass through the 270 degree phase-shift portions $P_{270}$ of the second high-density phase-shifting array element 420 and the second polarizer element 510b.

Thus, the $Q_1$ and $Q_3$ interference portions within the multiple phase-shifted interference image information 620 are interleaved in a checkerboard pattern at a high spatial frequency corresponding to the pattern 421 of the second high-density phase-shifting array element 420. It should be appreciated that, in one sense, this checkerboard pattern of $Q_1$ and $Q_3$ interference portions corresponds to a high-density interleaving of the $Q_1$ quadrant 234 and the $Q_3$ quadrant 238 shown in Fig. 4, transmitted as a single image onto the surface of the detector device 710b.

It should be appreciated that, because the sub-wavefronts or "copies" 129a and 129b are mirror images of each other, as described above, the multiple phase-shifted interference image information 610 and the multiple phase-shifted interference image information 620 are, likewise, mirror images of each other with respect to their information content with respect to the object 130. However, with appropriate signal processing, this difference is inconsequential or, in various embodiments, even advantageous.

In a second exemplary embodiment of the phase-shift imaging element 3000, the reference wavefront 124 and the object wavefront 128 are polarized along the orthogonal directions 132B and 133B shown in Fig. 8. In particular, the orthogonal polarization directions 132B and 133B are rotated by 45 degrees relative to the horizontal and vertical directions 132A and 133B of the first exemplary embodiment. In this second exemplary embodiment, the fast axes 418 and 428 of the substrate material of the respective phase-shifting array elements 410 or 420 are similarly rotated by 45 degrees relative to the vertical directions shown in Fig. 6, but the phase-shifting array elements 410 and 420 are otherwise unchanged in structure.

In this second exemplary embodiment, the polarizer elements 510a and 510b each has the polarization direction 512B, i.e., the polarization direction that lies halfway between the orthogonal polarization directions 132B and 133B. As a result, similarly to the first exemplary embodiment, the polarizer elements 510a transmits and interferes the in-phase components of the orthogonally polarized sub-wavefront components 124a and 128a in the checkerboard phase-shift pattern passing out of the first high-density phase-shifting array element 410. In contrast, the polarizer element 510b transmits and interferes the in-phase components of the orthogonally polarized sub-wavefront components 124b and 128b in the checkerboard phase-shift pattern passing out of the second high-density phase-shifting array element 420.

Thus, it should be appreciated that this second exemplary embodiment operates in substantially the same manner as the first exemplary embodiment of the phase-shift imaging element 3000 described above. As a result, in various exemplary embodiments, the multiple phase-shifted interference image information 610 and the multiple phase-shifted interference image information 620 provided by this second exemplary embodiment of the of the phase-shift imaging element 3000 include the same checkerboard patterns described above with respect to the first exemplary embodiment of the phase-shift imaging element 3000.

It should be appreciated that, as shown in Figs. 7 and 8, because the first exemplary embodiment of the multiple phase shift generating structure 1400 according to this invention and the exemplary phase shift imaging element 3000 are each monolithic or integrated structures, the various optical paths shown in Figs. 7 and 8 are not independent of each other. That is, any vibrations or other rotational and/or translational motions that may be encountered are inherently equally applied to all of the optical paths. Thus, any errors created by such rotational and/or translational motions are common-mode errors. Thus, any such errors do not affect the accuracy of the determined measurements generated by the control system 170.

Furthermore, it should be appreciated that the "0° relative phase shift" interference portions, referred to as the $Q_0$ interference portions, and the "180° relative phase shift" interference portions, referred to as the $Q_2$ interference portions, are interleaved in a high spatial frequency checkerboard pattern across the surface of the detector device 710a. As a result, it should be appreciated that the various non-common mode errors present in the multiple phase shifted-image generating apparatus 200 shown in Figs. 2-5, due to spatial separation of phase-shifted interferograms 600a and 600c in the $Q_0$ and $Q_2$ quadrants, are reduced, and, ideally, are eliminated. That is, because the 0° and 180° phase shift interference portions are adjacent to each other at each location throughout the detector device 710a, it can be assumed that each location is imaging substantially the same portion of portion of the object 130 in the 0° and 180° phase shift interference portions at each location. Furthermore, for the pixels at each location, inconsistencies in the transfer function from the incident light intensity to the output signal amplitude are reduced, and, ideally, are minimal. Thus, in various exemplary embodiments, errors related to these factors are reduced and/or minimized, and in many exemplary embodiments, ideally, are eliminated.

It should be appreciated that, in various exemplary embodiments according to this invention, such benefits arise because multiple phase-shifted interference image information 600 is provided for multiple phases within a small region on a detector subsystem 700. Stated another way, in various exemplary embodiments according to this invention, such benefits arise because a single image arising from a single sub-wavefront includes information for each of two or more different relative phase shifts, and that information is interleaved throughout the image. It should be appreciated that, in various exemplary embodiments according to this invention, the same benefits are derived from the "90° relative phase shift" interference portions, referred to as the $Q_1$ interference portions, and the "270° relative phase shift" interference portions, referred to as the $Q_3$ interference portions, that are interleaved in a high spatial frequency checkerboard pattern across the surface of the detector device 710b, for the same reasons.

It should be appreciated that the first exemplary embodiment of the multiple phase shift generating structure 1400 according to this invention and the exemplary phase shift imaging element 3000 provide two different phases of relative phase-shift interference information arising from only a single image that is derived from a single sub-wavefront. Similarly, the first exemplary embodiment of the multiple phase shift generating structure 1400 according to this invention and the exemplary phase shift imaging element 3000 provide four different phases of relative phase-shift interference information arising from only two spatially-separated images that are each respectively derived from a single respective sub-wavefront.

In various exemplary embodiments, the components of the phase-shift imaging element 3000 are selected and assembled to insure that the optical path lengths of the combined sub-wavefronts 129a and 129b are substantially equal. Thus, any focusing, aperture, and/or magnification properties, or the like, of the optical input portion 135' will produce the same image effects at the detector devices 710a and 710b.

In addition, in various exemplary embodiments, the detector devices 710a and 710b are selected as a matched set and/or calibrated to match the outputs of comparable detector elements of pixels between the two detector devices 710a and 710b. It should be appreciated that using two detector devices 710a and 710b allows the image of each respective sub-wavefront 129a and 129b or image of the multiple phase-shifted interference image information 610 and 620 to be larger than can be obtained if both images are imaged into spatially separated regions of a single similarly-sized detector device. The available signal and spatial resolution of the phase shift imaging element 3000 are improved accordingly.

However, this exemplary embodiment does have a partial disadvantage, in that differences in the nominal image light intensity and/or inconsistencies in the transfer function from the incident light intensity to the output signal amplitude may be present between the comparable detector elements or pixels of the different detector devices 710a and 710b. It should be appreciated that, due to such differences, some residual non-common mode errors remain in some, but not all, of the operations associated with the measurements generated by the control system 170. It should be appreciated further, that these residual errors are reduced in the various exemplary embodiments described above that match and/or calibrate the two detector devices.

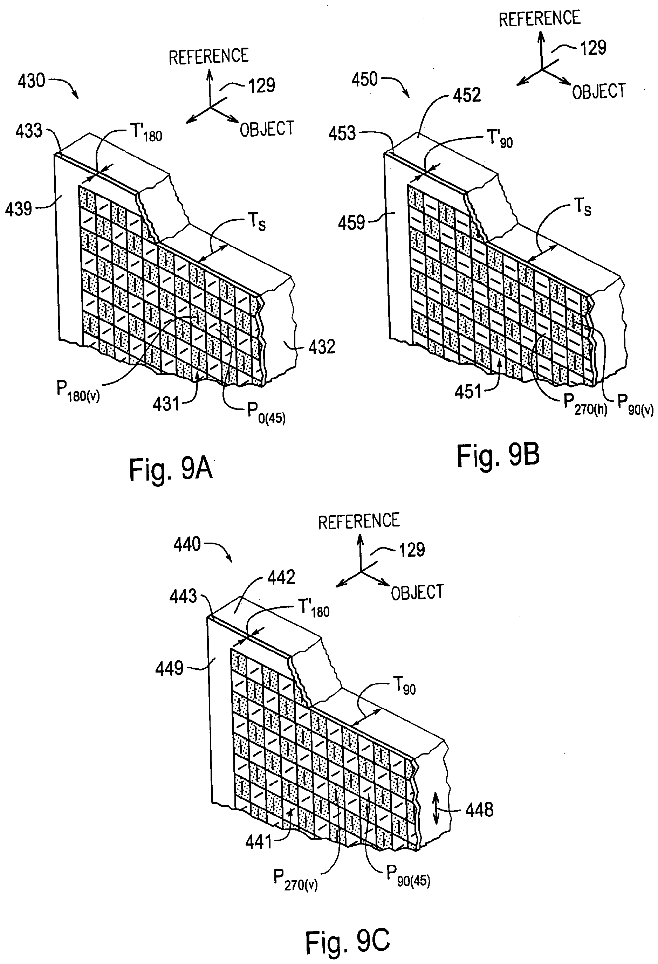

Fig. 9 illustrates a portion of a third exemplary embodiment of a high-density phase-shifting array element 430 according to this invention. The high-density phase-shifting array element 430, shown in Fig. 9A, is usable in various exemplary embodiments of the multiple phase-shift generating structure 1400, as described above and below with respect to the first and second exemplary embodiments 3000 and 4000, respectively, of a phase-shift imaging element according to this invention. Fig. 9 further illustrates, in Figs. 9B and 9C, a portion of a fifth exemplary embodiment of a high-density phase-shifting array element 450 and a portion of a fourth exemplary embodiment of a high-density phase-shifting array element 440 according to this invention that is interchangeable with the high-density phase-shifting array element 450.

The high-density phase-shifting array elements 430 and 450 are usable in each of the first and second exemplary embodiments 3000 and 4000 of the phase-shift array imaging element according to this invention. It should be appreciated that the exemplary embodiments 3000 and 4000, and similar phase-shift imaging elements according to this invention, are usable in place of the multiple phase-shift image generating apparatus 200 shown in Figs. 2-5 and, more generally, in the multiple phase-shift image generating portion 1600 described with reference to Fig. 1.

As shown in Fig. 9, in various exemplary embodiments, the third exemplary embodiment of the high-density phase-shifting array element 430, shown in Fig. 9A, is formed using a null-phase-shift substrate 432. In various exemplary embodiments, the null phase-shift substrate 432 can be formed using an amorphous material or other non-birefringent material and the substrate thickness $T_S$ of the substrate 432 can be any desired value. However, in various other embodiments, a birefringent material may be used, provided that the thickness $T_S$ of the substrate 432 must be such that the component of a combined wavefront 129 that is polarized parallel to the slow axis of the birefringent substrate 432 is retarded by an integer number of wavelengths relative to the component of the combined wavefront 129 that is polarized parallel to the fast axis, and the fast axis of the substrate 432 must be operably aligned so that the material layer 433 operates as described below.

The high-density phase-shifting array element 430 further includes a birefringent material layer 433 including a surface 439. In particular, the birefringent material layer 433 is formed of a birefringent material that can have its fast axis selectively patterned as described in detail below. As shown in Fig. 9A, the birefringent material layer 433 of the third exemplary embodiment of the high-density phase-shifting array element 430 has a nominal thickness $T'_{180}$. Due to the thickness $T'_{180}$, the component of a combined wavefront 129 that is polarized parallel to a slow axis of the birefringent material layer 433 is retarded by one-half a wavelength, plus an integer number of wavelengths, if desired, relative to the component of the combined wavefront 129 that is polarized parallel to a fast axis of the birefringent material layer 433. As shown in Fig. 9A, the birefringent material layer 433 includes zero-degree phase shift portions $P_{0(45)}$ and 180 degree phase shift portions $P_{180(v)}$ arranged in a checkerboard pattern 431.

Each portion $P_{0(45)}$ of the birefringent material layer 433 has the nominal thickness $T'_{180}$. Each portion $P_{0(45)}$ is fabricated such that the fast axis of the birefringent material layer 433 in that portion is oriented at 45 degrees relative to the expected operational orientations of the orthogonal components of a combined wavefront 129, as indicated by the exemplary REFERENCE and OBJECT orthogonal components and the typical alignment lines shown in various portions $P_{0(45)}$ in the exemplary embodiment shown in Fig. 9A. It should be appreciated that, with these relative orientations, the portions $P_{0(45)}$ of the third exemplary embodiment of the high-density phase-shifting array element 430 retard the orthogonal components equally and, therefore, do not produce any net relative phase shift between the components of the wavefront 129.

That is, each portion $P_0$ produces a zero-degree relative phase shift between the components of the wavefront 129, as indicated by the subscript "0", used as a convention herein. It should be appreciated that the additional subscript "(45)" is used as an additional convention for labeling portions of "variable fast-axis" phase-shifting array elements herein, indicating that the relative orientation of the fast axis in the corresponding portion of a birefringent material layer is "45 degrees".

Each portion $P_{180(v)}$ of the birefringent material layer 433 has the nominal thickness $T'_{180}$. Each portion $P_{180(v)}$ is fabricated such that the fast axis of the birefringent material layer 433 in that portion is oriented vertically. That is, the fast axis of each portion $P_{180(v)}$ is parallel to the expected operational orientation of a vertically oriented one of the orthogonal components of a combined wavefront 129, as indicated by the exemplary REFERENCE and OBJECT orthogonal components and the typical alignment lines shown in various portions $P_{180(v)}$ in the exemplary embodiment shown in Fig. 9B. It should be appreciated that with these relative orientations, in the portions $P_{180(v)}$ of the third exemplary embodiment of the high-density phase-shifting array element 430 the horizontal component of the combined wavefront 129 that is polarized parallel to the slow axis in that portion of the birefringent material layer 433 is retarded by half a wavelength or 180 degrees phase-shift relative to the vertical component of the combined wavefront 129.

That is, each portion $P_{180(v)}$ produces a 180 degree relative phase shift between the components of the wavefront 129, as indicated by the subscript "180", used as a convention herein. It should be appreciated that the additional subscript "(v)" is used as an additional convention for labeling portions of "variable fast-axis" phase-shifting array elements herein, indicating that the relative orientation of the fast axis in the corresponding portion of a birefringent material layer is "vertical".

It should be appreciated, from the above description, that the portions $P_{0(45)}$ and $P_{180(v)}$ of the third exemplary embodiment of the high-density phase-shifting array element 430 are functionally equivalent to the portions $P_0$ and $P_{180}$ of the first exemplary embodiment of the high-density phase-shifting array element 410, with respect to their net optical effects in multiple phase-shifted interference image information. Thus, in various exemplary embodiments of the phase-shift imaging elements 3000 and 4000 according to this invention, the high-density phase-shifting array elements 430 and 410 are nominally interchangeable. Accordingly, the high-density phase-shifting array elements 430 and 410 may be employed according to similar design considerations, similarly dimensioned, and similarly assembled in the phase-shift imaging elements 3000 and 4000 to produce similar or identical interleaved phase-shifted image information, for example, as described with reference to Figs. 7 and 8 above.

The fifth exemplary embodiment of the high-density phase-shifting array element 450, shown in Fig. 9B, is formed in a manner analogous to the third exemplary embodiment of the high-density phase-shifting array element 430 described above. In various exemplary embodiments, the high-density phase-shifting array element 450 includes a substrate 452 fabricated according to any of the methods and dimensions previously described for the substrate 432. The high-density phase-shifting array element 450 similarly includes a birefringent material layer 453 including a surface 459. Similarly, the birefringent material layer 453 is formed of a birefringent material that can have its fast axis selectively patterned, as described in detail below.

As shown in Fig. 9B, the birefringent material layer 453 of the fifth exemplary embodiment of the high-density phase-shifting array element 450 has a nominal thickness $T'_{90}$. Due to the thickness $T'_{90}$, the component of a combined wavefront 129 that is polarized parallel to a slow axis of the birefringent material layer 453 is retarded by one-quarter of a wavelength, plus an integer number of wavelengths if desired, relative to the component of the combined wavefront 129 that is polarized parallel to a fast axis of the birefringent material layer 453. As shown in Fig. 9B, the birefringent material layer 433 includes 90-degree phase shift portions $P_{90(v)}$ and 270 degree phase shift portions $P_{270(h)}$ arranged in a checkerboard pattern 451.

Each portion $P_{90(v)}$ of the birefringent material layer 453 has the nominal thickness $T'_{90}$. Each portion $P_{90(v)}$ is fabricated such that the fast axis of the birefringent material layer 453 in that portion is oriented vertically. That is, the fast axis of each portion $P_{90(v)}$ is parallel to the expected operational orientation of a vertically oriented one of the orthogonal components of a combined wavefront 129, as indicated by the exemplary REFERENCE and OBJECT orthogonal components and the typical alignment lines shown in various portions $P_{90(v)}$ in the exemplary embodiment shown in Fig. 9B.

It should be appreciated that, with these relative orientations, in the portions $P_{90(v)}$ of the fifth exemplary embodiment of the high-density phase-shifting array element 450, the horizontal component of the combined wavefront 129 that is polarized parallel to the slow axis in that portion of the birefringent material layer 453 is retarded by one-quarter of a wavelength or 90 degrees phase-shift relative to the vertical component of the combined wavefront 129. That is, each portion $P_{90(v)}$ produces a 90 degree relative phase shift between the components of the wavefront 129, as indicated by the subscript "90", used as a convention herein. It should be appreciated that the additional subscript "(v)", as discussed above, is used as an additional convention for labeling portions of "variable fast-axis" phase-shifting array elements herein, indicating that the relative orientation of the fast axis in the corresponding portion of a birefringent material layer is "vertical".

Each portion $P_{270(h)}$ of the birefringent material layer 453 has the nominal thickness $T'_{90}$. Each portion $P_{270(h)}$ is fabricated such that the fast axis of the birefringent material layer 453 in that portion is oriented horizontally. That is, the fast axis of each portion $P_{270(h)}$ is parallel to the expected operational orientation of a horizontally oriented one of the orthogonal components of a combined wavefront 129, as indicated by the exemplary REFERENCE and OBJECT orthogonal components and the typical alignment lines shown in various portions $P_{270(h)}$ in the exemplary embodiment shown in Fig. 9B. It should be appreciated that, with these relative orientations, in the portions $P_{270(h)}$ of the fifth exemplary embodiment of the high-density phase-shifting array element 450, the vertical component of the combined wavefront 129 that is polarized parallel to the slow axis in that portion of the birefringent material layer 453 is retarded by one-quarter of a wavelength or 90 degrees phase-shift relative to the horizontal component of the combined wavefront 129.

It should be appreciated that this is functionally equivalent to retarding the horizontal component by 270 degrees phase-shift relative to the vertical component of the combined wavefront 129 with respect to the net optical effects in multiple phase-shifted interference image information. Thus, it may be seen the each portion $P_{270(h)}$, in effect, produces a 270 degree relative phase shift between the components of the wavefront 129, as indicated by the subscript "270", used as a convention herein. It should be appreciated that the additional subscript "(h)", is used as an additional convention for labeling portions of "variable fast-axis" phase-shifting array elements herein, indicating that the relative orientation of the fast axis in the corresponding portion of a birefringent material layer is "horizontal".

Thus, it should be appreciated, from the above description, that the portions $P_{90(v)}$ and $P_{270(h)}$ of the fifth exemplary embodiment of the high-density phase-shifting array element 450 are functionally equivalent to the portions $P_{90}$ and $P_{270}$ of the second exemplary embodiment of the high-density phase-shifting array element 420. Accordingly, the high-density phase-shifting array elements 450 and 420 may be employed according to similar design considerations, similarly dimensioned, and similarly assembled in the phase-shift imaging elements 3000 and 4000 to produce similar or identical interleaved phase-shifted image information, for example, as described with reference to Figs. 7 and 8 above.

The fourth exemplary embodiment of the high-density phase-shifting array element 440, shown in Fig. 9C, is formed in a manner analogous to the third exemplary embodiment of the high-density phase-shifting array element 430 described above, except the high-density phase-shifting array element 440 requires a birefringent substrate 442 having

a nominal thickness $T_{90}$. Due to the thickness $T_{90}$, the component of a combined wavefront 129 that is polarized parallel to the slow axis of the birefringent substrate 412 is retarded by one-quarter of a wavelength, plus an integer number of additional wavelengths if desired, relative to the component of the combined wavefront 129 that is polarized parallel to the fast axis of the birefringent substrate 442. The arrow 448 indicates the substrate fast axis orientation in the exemplary embodiment shown in Fig. 9C, which is consistent with the following description of the structure and operation of high-density phase-shifting array element 440.

Otherwise, the high-density phase-shifting array element 440 similarly includes a birefringent material layer 443 including a surface 449. Similarly, the birefringent material layer 443 is formed of a birefringent material that can have its fast axis selectively patterned, as described in detail below. As shown in Fig. 9C, the birefringent material layer 443 of the fourth exemplary embodiment of the high-density phase-shifting array element 440 has a nominal thickness $T'_{180}$. Due to the thickness $T_{90}$, the component of a combined wavefront 129 that is polarized parallel to a slow axis of the birefringent material layer 453 is retarded by one-half of a wavelength, plus an integer number of wavelengths if desired, relative to the component of the combined wavefront 129 that is polarized parallel to a fast axis of the birefringent material layer 443. As shown in Fig. 9, the birefringent material layer 443 includes 90-degree phase shift portions $P_{90(45)}$ and 270 degree phase shift portions $P_{270(v)}$ arranged in a checkerboard pattern 441.

Each portion $P_{90(45)}$ of the birefringent material layer 443 has the nominal thickness $T'_{180}$. Each portion $P_{90(45)}$ is fabricated such that the fast axis of the birefringent material layer 443 in that portion is oriented at 45 degrees relative to the expected operational orientations of the orthogonal components of a combined wavefront 129, as indicated by the exemplary REFERENCE and OBJECT orthogonal components and the typical alignment lines shown in various portions $P_{90(45)}$ in the exemplary embodiment shown in Fig. 9C.

It should be appreciated that with these relative orientations, the portions $P_{90(45)}$ of the third exemplary embodiment of the high-density phase-shifting array element 430 retard the orthogonal components equally. Therefore, the portions $P_{90(45)}$ do not within themselves produce any net relative phase shift between the components of the wavefront 129. However, since the birefringent substrate 442, having the thickness $T_{90}$, everywhere produces a 90 degree retardation of the horizontal component of the combined wavefront 129, the $P_{90(45)}$ each produce transmitted light having a 90 degree relative phase shift between the components of the wavefront 129, as indicated by the subscript "90", used as a convention herein. It should be appreciated that the additional subscript "(45)" has the previously described conventional meaning.

Each portion $P_{270(v)}$ of the birefringent material layer 443 has the nominal thickness $T'_{180}$. Each portion $P_{270(v)}$ is fabricated such that the fast axis of the birefringent material layer 453 in that portion is oriented vertically. That is, the fast axis of each portion $P_{270(v)}$ is parallel to the expected operational orientation of a vertically oriented one of the orthogonal components of a combined wavefront 129, as indicated by the exemplary REFERENCE and OBJECT orthogonal components and the typical alignment lines shown in various portions $P_{270(v)}$ in the exemplary embodiment shown in Fig. 9C.

It should be appreciated that with these relative orientations, in the portions $P_{270(v)}$ of the fourth exemplary embodiment of the high-density phase-shifting array element 440 the horizontal component of the combined wavefront 129 that is polarized parallel to the slow axis in that portion of the birefringent material layer 443 is further retarded by one-half of a wavelength or 180 degrees phase-shift relative to the vertical component of the combined wavefront 129. It should be appreciated that because the birefringent substrate 442, having the thickness $T_{90}$, everywhere produces a 90 degree retardation of the horizontal component of the combined wavefront 129, the $P_{270(v)}$ portions therefore each produce transmitted light having a total of 270 degrees relative phase shift between the components of the wavefront 129, as indicated by the as indicated by the subscript "270", used as a convention herein. It should be appreciated that the additional subscript "(v)" has the previously described conventional meaning.

Thus, it should be appreciated from the above description that the portions $P_{90(45)}$ and $P_{270(v)}$ of the fourth exemplary embodiment of the high-density phase-shifting array element 440 are functionally equivalent to the portions $P_{90(v)}$ and $P_{270(h)}$ of the fifth exemplary embodiment of the high-density phase-shifting array element 450. Accordingly, the high-density phase-shifting array elements 440 and 450 may be employed according to similar design considerations, similarly dimensioned, and similarly assembled in the phase-shift imaging elements 3000 and 4000 to produce similar or identical interleaved phase-shifted image information, for example, as described with reference to Figs. 7 and 8 above.

It should be appreciated that, in various exemplary embodiments of a phase-shift imaging element according to this invention, the accuracy and resolution of the resulting interferometric measurement is enhanced when the optical path lengths of all portions of the combined wavefront 129 are nominally the same through the phase-shift imaging element according to this invention. It should be appreciated that the exemplary "variable thickness" high-density phase-shifting array elements 410 and 420 produce inherently different optical path lengths in their different phase shift portions. If precisely equal path optical path lengths are desired, such embodiments require additional processing using refractive index-matching fill materials or the like. In contrast, each of the exemplary "variable fast-axis" high-density phase-shifting array elements 430, 440, and 450 nominally use constant-thickness birefringent material layers 433, 443 and 453, respectively. Thus, the high-density phase-shifting array elements 430, 440, and 450 each provide inherently equal optical path lengths in their different phase shift portions, without the need for additional processing.

It should be appreciated that the birefringent material layers 433, 443 and 453 can be formed using any birefringent material having a fast and/or slow axis orientation that can be controllably varied and patterned.

In various exemplary embodiments, the layers 433, 443 and 453 are formed using a class of materials known as "reactive mesogens". In various exemplary embodiments, reactive mesogens behave essentially as polymerizable liquid crystal materials. In general, the fast axis orientation of various portions of a reactive mesogen material layer will depend on an aligning condition that is applied to the various portions of the reactive mesogen material layer as the material experiences manufacturing conditions that fix the fast axis alignment of its various portions. In various known fabrication processes, the aligning condition can be one or more of the direction of an aligning field, the direction of an aligning light polarization, an alignment direction of an aligning surface, or the like.

By using materials such as reactive mesogens, it is possible to create an array of phase-shifting portions that includes a pattern of different fast-axis directions in the various phase-shifting portions. That is, by applying a particular aligning condition in each particular phase-shifting portion of the array at the time each particular portion of the array experiences the orientation-fixing manufacturing condition, the molecular orientation and the fast axis of the reactive mesogen material for each such particular phase-shifting portion is fixed. This is described in greater detail in U.S. Patents 6,055,103 and 5,073,294 and in "3D Display Systems Hardware Research at Sharp Laboratories of Europe: an update," J. Harrold et al., Sharp Technical Journal, May 21, 1999.

In various other exemplary embodiments, using a related technology, the layers 433, 443 and 453 are formed using a class of materials known as liquid crystals polymers (LCP) that behave essentially as polymerizable liquid crystal materials. These are fabricated with the aid of linear photo-polymerization (LPP) materials. Linear photo-polymerization is a photo-patternable technology that enables alignment of the liquid crystals polymers (LCP).

Liquid crystals polymer/linear photo-polymerization (LPP/LCP) devices may be created by structured photo-alignment of a linear photo-polymerization layer through photo-masks, thus generating a high resolution, photo-patterned aligning layer that carries the aligning information needed to fabricate a variable fast-axis high-density phase-shift array according to this invention. The subsequent liquid crystals polymer layer transforms the aligning information layer into a patterned birefringent material layer according to this invention. This is described in greater detail in U.S. Patents 6,300,991; 6,160,597 and 6,369,869, and in "Optical LPP/LCP Devices: A new Generation of Optical Security Elements", F. Moia et al., Proceedings of SPIE; Optical Security and Counterfeit Deterrence Techniques III, Vol. 3973, pp. 196-203, San Jose (CA), January 27-28, 2000.

The orientations of the fast axes within the layers 433, 443 and 453 for the various phase-shift portions $P_{0(45)}$, $P_{180(v)}$, $P_{90(45)}$, $P_{270(v)}$, $P_{90(v)}$ and $P_{270(h)}$ of the third, fourth and fifth exemplary embodiments of the high-density phase-shifting array elements 430, 440 and 450 may be formed by any known or later-developed method of controlling the fast axis orientation of the variable fast axis material used to form the layers 433, 443 and 453. In particular, the only manufacturing requirement is that the various phase-shift portions $P_{0(45)}$, $P_{180(v)}$, $P_{90(45)}$, $P_{270(v)}$, $P_{90(v)}$ and $P_{270(h)}$ can be fabricated in relatively high density arrays. Specifically, the dimensions of the various phase-shift portions $P_{0(45)}$, $P_{180(v)}$, $P_{90(45)}$, $P_{270(v)}$, $P_{90(v)}$ and $P_{270(h)}$ must be able to approach the dimensions of one pixel, or a small group of pixels, of an optical detector array, as described further below. In various exemplary embodiments according to this invention, the arrays of the various phase-shift portions $P_{0(45)}$, $P_{180(v)}$, $P_{90(45)}$, $P_{270(v)}$, $P_{90(v)}$ and $P_{270(h)}$ are implemented by rubbing along different directions various substrate surfaces, coated substrate surfaces and/or alignment layers (not shown) formed in operable aligning proximity to the birefringent material layers 433, 443 and 453.

Alternatively, in various exemplary embodiments according to this invention, the arrays of the various phase-shift portions $P_{0(45)}$, $P_{180(v)}$, $P_{90(45)}$, $P_{270(v)}$, $P_{90(v)}$ and $P_{270(h)}$ are implemented by sequentially applying one or more external fields that causes the material used to form the layers 433, 443 and 453 to align in the desired direction as the various phase-shift portions $P_{0(45)}$, $P_{180(v)}$, $P_{90(45)}$, $P_{270(v)}$, $P_{90(v)}$ and $P_{270(h)}$ are polymerized. For example, to form the pattern 431 in the material layer 433, the first phase angle portions $P_{0(45)}$ can be formed by selectively exposing those portions to a curing stimulus while applying an external magnetic, electrical or polarized light field having a first "45 degree" orientation. Then, the second phase angle portions $P_{180(v}$ can be formed by selectively exposing those portions to the curing stimulus while applying an external magnetic, electrical or polarized light field having a second "vertical" orientation.

It should also be appreciated that, as shown in Fig. 9, the replication directions of the various phase-shift portions $P_{0(45)}$, $P_{180(v)}$, $P_{90(45)}$, $P_{270(v)}$, $P_{90(v)}$ and $P_{270(h)}$ are arranged horizontally and vertically. However, more generally, the replication directions of each of the various phase-shift portions $P_{0(45)}$, $P_{180(v)}$, $P_{90(45)}$, $P_{270(v)}$, $P_{90(v)}$ and $P_{270(h)}$ are completely controllable and selectable in combination with the other elements of the multiple phase-shift generating structure according to this invention. In various exemplary embodiments, the various phase-shift portions $P_{0(45)}$, $P_{180(v)}$, $P_{90(45)}$, $P_{270(v)}$, $P_{90(v)}$ and $P_{270(h)}$ will be of equal size and shape and will cover equal portions of a detector array of a detector subsystem 700.

In general, each of the various phase-shift portions $P_{0(45)}$, $P_{180(v)}$, $P_{90(45)}$, $P_{270(v)}$, $P_{90(v)}$ and $P_{270(h)}$ will extend over an integer number of pixels of the detector array. In general, the boundaries of the various phase-shift portions

$P_{0(45)}$, $P_{180(v)}$, $P_{90(45)}$, $P_{270(v)}$, $P_{90(v)}$ and $P_{270(h)}$ will be aligned with the boundaries between the pixels of the detector array. Thus, each pair or set of the various phase-shift portions $P_{0(45)}$ and $P_{180(v)}$, $P_{90(45)}$ and $P_{270(v)}$, and $P_{90(v)}$ and $P_{270(h)}$ define unit cells within the third, fourth and fifth exemplary embodiments of the high-density phase-shifting array elements 430, 440 and 450 and their corresponding detector arrays. At one extreme, each of the respective various phase-shift portions $P_{0(45)}$, $P_{180(v)}$, $P_{90(45)}$, $P_{270(v)}$, $P_{90(v)}$ and $P_{270(h)}$ can be associated with and aligned with a respective single pixel of a corresponding detector array.

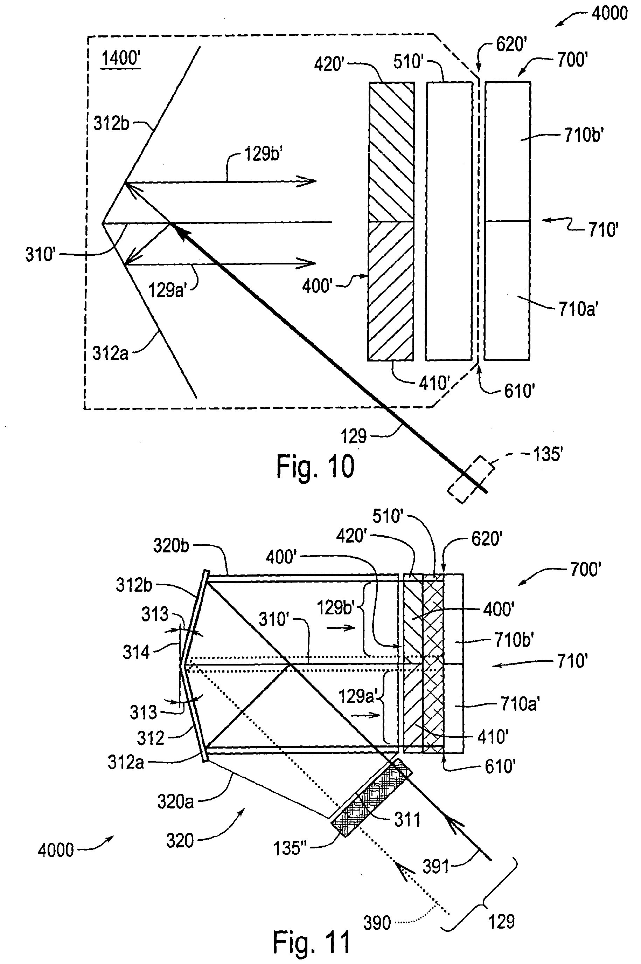

Figs. 10 and 11 are plan views that illustrate a second exemplary phase-shift imaging element 4000 according to this invention. As schematically shown in Fig. 10, the phase-shift imaging element 4000 includes a second exemplary embodiment of a multiple phase-shift generating structure 1400' according to this invention and a detector subsystem 700', which includes the detector device 710' having the detector device portions 710a' and 710b'. The multiple phase-shift generating structure 1400' incorporates a high-density phase-shift array element 400' that includes first and second phase-shifting array sub-elements 410' and 420' according to this invention. The multiple phase-shift generating structure 1400' also includes a beam splitting surface 310', reflective surfaces 312a and 312b and a polarizer element 510'.

In the exemplary embodiment shown in Fig. 11, the beam splitting surface 310' and the reflective surfaces 312a and 312b of the phase-shift imaging element 4000 are provided by an optical block assembly 320, which includes a lower block half 320a and an upper block half 320b. The upper and lower block halves 320a and 320b are joined at the non-polarizing beam splitting surface 310', according to any known or later-developed beam splitter fabrication methods. The upper and lower block halves 320a and 320b also have end surfaces, or mirror mounting surfaces, fabricated to provide or mount the reflective surfaces 312a and 312b. The remaining components of the phase-shift imaging element 4000 are mounted to the opposite end of the optical block assembly 320, as shown.

The transmitted combined wavefront 129 passes through the optical block assembly 320, where the beam splitting surface 310' splits the combined wavefront 129 into the two respective combined sub-wavefronts or "copies" 129a' and 129b'. It should be appreciated that, due to the action of the beam splitting surface 310', the sub-wavefronts or "copies" 129a' and 129b' are mirror images of each other. However, with appropriate signal processing, this difference is inconsequential or, in various embodiment, even advantageous. The sub-wavefront 129a' is directed to the reflective surface 312a and reflected parallel to the beam splitting surface 310' along a first optical path on one side of the beam splitting surface 310'. In contrast, the sub-wavefront 129b' directed to the reflective surface 312b' and reflected parallel to the beam splitting surface 310' along a second optical path on the other side of the beam splitting surface 310'.

The dashed lines 390 and solid lines 391 illustrate first and second exemplary optical paths for different portions of the combined wavefront 129 as the combined wavefront 129 propagates through the phase-shift imaging element 4000. It should be appreciated that the components of the phase-shift imaging element 4000, as well as the orientation of the phase-shift imaging element 4000 relative to the angle of incidence of the input combined wavefront 129, are arranged such that the total optical path lengths of the exemplary optical paths represented by the lines 390 and 391 are substantially equal. The same is true for all optical paths of the various portions of the combined wavefront 129 as the combined wavefront 129 propagates through the phase-shift imaging element 4000.

In various exemplary embodiments, the optical block assembly 320 is arranged relative to the optical input portion 135' such that the combined wavefront 129 is received from a direction that is approximately normal to an input surface 311 of the optical block assembly 320. In various other exemplary embodiments, the input surface 311 intentionally deviates slightly from a normal orientation. This may be more advantageous than perfectly normal incidence when attempting to reduce spurious reflections and fringes. In either case, in various exemplary embodiments, the combined wavefront 129 propagates at a nominal angle of incidence of 45 degrees relative to the beam splitting surface 310'. In such embodiments, the end surfaces of the upper and lower block halves 320a and 320b are fabricated to provide each of the reflective surfaces 312a and 312b at an angle 313 of 22.5 degrees relative to a hypothetical plane 314 that is perpendicular to the beam splitting surface 310'.

As shown in Figs. 10 and 11, the high-density phase-shift array element 400' includes the first and second phase-shifting array sub-elements 410' and 420'. In various exemplary embodiments, the first and second phase-shifting array sub-elements 410' and 420' are portions of a single high-density phase-shifting array element 400', as shown in Figs. 10 and 11.

In such exemplary embodiments, the phase-shifting array sub-element 410' of the high-density phase-shift array element 400' is fabricated as outlined above with respect to either the first exemplary phase-shifting array element 410 or the third exemplary phase-shifting array elements 430 to form the first phase-shifting array sub-element 410' having the phase angle portions $P_0$ and $P_{180}$, or $P_{0(45)}$ and $P_{180(v)}$, respectively. Similarly, the phase-shifting array sub-element 410' of the high-density phase-shift array element 400' is fabricated as outlined above with respect to either the corresponding second exemplary phase-shifting array element 420, the fourth exemplary phase-shifting array element 440 or the fifth exemplary phase-shifting array element 450, to form the second phase-shifting array sub-element 420' having the phase angle portions $P_{90}$ and $P_{270}$, $P_{90(45)}$ and $P_{270(v)}$, or $P_{90(v)}$ and $P_{270(h)}$, respectively.

In various other exemplary embodiments, the first and second phase-shifting array sub-elements 410' and 420' are separate members that are placed adjacent to each other, abutted against each other, or the like to form the high-density phase-shifting array element 400'. Alternatively, the separate first and second phase-shifting array sub-elements 410' and 420' can be joined together after fabrication using adhesive, fasteners, or the like to form a high-density phase-shifting array element 400' that acts as a single mechanical member. In such exemplary embodiments, the first and second phase-shifting array sub-elements 410' and 420' are formed as outlined above according to any of the first-fifth exemplary phase-shifting array elements 410-450 before being joined together to form the high-density phase-shifting array element 400' that acts as a single mechanical member.

Of course, it should further be appreciated that, in any of these exemplary embodiments, the second phase-shifting array sub-element 420' can include the phase angle portions $P_0$ and $P_{180}$, while the phase-shifting array sub-element 410' can include the phase angle portions $P_{90}$ and $P_{270}$. Likewise, it should be appreciated that, in any of these exemplary embodiments, the first phase-shifting array sub-element 410' and the second phase-shifting array sub-element 420' can include different combinations of the phase angle portions $P_0$, $P_{90}$, $P_{180}$ and $P_{270}$ than the combinations described above.

In various exemplary embodiments, the first phase-shifting array sub-element 410', a first portion of the polarizer element 510', and the detector device portion 710a are aligned to receive and process the sub-wavefront 129a' along the first optical path on one side of the beam splitting surface 310'. Along this first optical path, the multiple phase-shift generating structure 1400' generates multiple phase-shifted interference image information 610' at its interface with the detector device portion 710a. Similarly, the second phase-shifting array sub-element 420', a second portion of the polarizer element 510', and the detector device portion 710b' are aligned to receive and process the sub-wavefront 129b' along the second optical path on the other side of the beam splitting surface 310'. Along this second optical path, the multiple phase-shift generating structure 1400' generates multiple phase-shifted interference image information 620' at its interface with the detector device portion 710b'.

It should be appreciated that, in various exemplary embodiments, the sub-wavefronts 129a' and 129b' are received and processed by similarly numbered elements in the same manner as described above for the sub-wavefronts 129a and 129b with respect to the phase-shift imaging element 3000 shown in Figs. 7 and 8, in any of its various embodiments. In particular, the wavefronts 129a' and 129b' are received and processed by similarly numbered elements that are similarly constructed and oriented with respect to the polarization directions of the combined wavefronts 129a' and 129b'.

It should be further appreciated that the structure of the multiple phase-shifted interference image information 610' and 620' will, in various exemplary embodiments, be similar, or identical, to the structure of the multiple phase-shifted interference image information 610 and 620 described above with reference to the phase-shift imaging element 3000 shown in Figs. 7 and 8, in any of its various embodiments. In various exemplary embodiments, when the detector device portions 710a' and 710b' are functionally identical to the detector devices 710a and 710b, the multiple phase-shifted interference image information 610' and 620' may be identical to the multiple phase-shifted interference image information 610' and 620'.

In any case, it should be appreciated that all of the previously-described features and benefits of the various embodiments of the multiple phase-shift generating structure 1400 and the phase-shift imaging element 3000 shown in Figs. 7 and 8 are similarly provided for by various embodiments of the multiple phase-shift generating structure 1400' and the phase-shift imaging element 4000 shown in Figs. 10 and 11. In addition, in various exemplary embodiments, the multiple phase-shift generating structure 1400' and the phase-shift imaging element 4000 enjoy an additional advantage, in that the high-density phase-shifting array element 400' is provided as a single relatively "planar" element. In addition, in various embodiments, the detector device portions 710a' and 710b' may be portions of a single detector device, which provides not only more convenient assembly and signal processing, but also provides inherently improved matching between the gain characteristics, and the like, of all comparable image pixels. As a result, in various exemplary embodiments, both costs and measurement errors are further reduced in the phase-shift imaging element 4000, in comparison to the phase-shift imaging element 3000.

However, it should be further appreciated that the various embodiments of both the phase-shift imaging element 3000 and the phase-shift imaging element 4000 provide for four separate "phase signals" arising from the four interference information portions $Q_0$-$Q_3$, which have different relative phase-shifts, similar to both the multiple phase shifted-image generating apparatus 200 shown in Figs. 2-5, and to previous systems that use 4 separate detector elements, such as that disclosed in Smythe, R., et al, "Instantaneous Phase Measuring Interferometry", Optical Engineering 23:4 (1984) 361-4. However, both of the phase-shift imaging elements 3000 and 4000 generally use simpler and/or fewer critical components, are easier to align and assemble, and/or are more stable and compact, while at the same time these elements eliminate at least some of the non-common mode errors found in prior art systems.

In various exemplary embodiments according to this of invention, the signal processing and software methods used are analogous to those described in the 330 patent. In particular, in various exemplary embodiments of an interferometer according to this invention, four separate "phase signals" are provided as described herein for each of one or more different wavelengths of the laser source 110. However, it should be appreciated that, in various exemplary embodiments according to this invention, the pixel-location coordinates processed in the equations disclosed in the 330 patent will be modified to correspond to the integrated pattern of the multiple phase-shifted interference image information 600 provided in the various exemplary embodiments according to this invention.

For example, Eq. 10 of the 330 patent indicates that, when the multiple phase-shifted interference image information 600 corresponds to that provided according to the description of Figs. 2-5 herein, the phase at a particular (x,y) location may be calculated from comparable congruent pixels as:

$$\Phi(x,y) = \tan^{-1}\{[I_3(x,y)-I_1(x,y)] / [I_0(x,y)-I_2(x,y)]\} \qquad (1)$$

where $I_0$, $I_1$, $I_2$ and $I_3$ are the respective intensities of each of the phase-shifted interferograms 600a-600d incident on the detector 240, i.e., the quadrants $Q_0$, $Q_1$, $Q_2$, and $Q_3$.

With regard to Eq. (1), in the related description set forth in the 330 patent, it should be understood that there are four congruent "sub-wavefront images" or interferograms in the multiple phase-shifted interference image information 600 corresponding to that provided according to the description of Figs. 2-5 outlined above. As a result, comparable pixels in each image or interferogram are indicated to have "congruent pixel addresses" in the congruent images, regardless of whether these images are imaged onto different portions of a single detector array, or multiple detector arrays. Therefore, any related offsets of the actual signal processing addresses due to the actual offsets of comparable pixels on one or more detectors is assumed to be incorporated into the "congruent pixel addresses".

However, in the case of the multiple phase-shifted interference image information 600a' and 600b', or 600a" and 600b", provided by various embodiments of the phase-shift imaging elements 3000 or 4000, respectively, according to this invention, it should be appreciated that the multiple phase-shifted interference image information corresponding to the first sub-expression $[I_3(x,y)-I_1(x,y)]$ within Eq. (1), is interleaved in a single image 620 or 620' as the interference information portions $Q_3$ and $Q_1$ according to this invention. Thus, "congruent pixel addresses" are not appropriate for this first sub-expression within Eq. (1). Rather, for an embodiment according to this invention, where a single image of the multiple phase-shifted interference image information interleaves the interference portions $Q_3$ and $Q_1$, for any contiguous block of two interference portions $Q_3$ and $Q_1$ centered at a location (x,y), which are nominally identified as $Q_3(x,y)$ and $Q_1(x,y)$, one exemplary expression comparable to the first sub-expression above is:

$$[I_{Q3(x,y)}-I_{Q1(x,y)}],$$

where I indicates the image intensity value for each respective interference portion.

Similarly, in various exemplary embodiments according to this invention where a single image of the multiple phase-shifted interference image information interleaves the interference portions $Q_0$ and $Q_2$, for any contiguous block of two interference portions centered at a location (x,y), which are nominally identified as $Q_0$ and $Q_2$, one exemplary expression comparable to the second sub-expression $[I_0(x,y)-I_2(x,y)]$ within Eq. (1) above is:

$$[I_{Q0(x,y)}-I_{Q2(x,y)}].$$

It should be appreciated that, if each respective interference portion corresponds to a set of more than one pixel on the detector, then, in various exemplary embodiments, the image intensity value I indicates the average or representative intensity value for that entire set of pixels. The entire set of pixels can thus be regarded as a "meta-pixel". It should be appreciated that, in various exemplary embodiments, such meta-pixels have an extent corresponding to the extent of the first and second portions of a given high-density polarizer array 330 according to this invention, and such meta-pixels provide one desirable method of spatial averaging that is usable according to the principles of this invention.

It should also be appreciated that, in various exemplary embodiments, each individual interference portion may be a comparable interference portion involved in a measurement determination at at least four different (x,y) locations corresponding to the four borders of that comparable interference portion with its four comparable neighboring interference portions.

Thus, one total expression comparable to Eq. 10 in the 330 patent is:

$$\Phi(x,y) = \tan^{-1}\{[I_{Q3(x,y)}-I_{Q1(x,y)}] / [I_{Q0(x,y)}-I_{Q2(x,y)}]\}. \qquad (2)$$

Alternatively, for any block of three contiguous interference portions along a row or column, that is, for interference portion patterns such as $Q_3$-$Q_1$-$Q_3$, $Q_1$-$Q_3$-$Q_1$, $Q_0$-$Q_2$-$Q_0$, or $Q_2$-$Q_0$-$Q_2$, centered at a location (x,y), the following exemplary alternative expression is also usable:

$$\Phi(x,y) = \tan^{-1}\{[I^{ave}{}_{Q3(x,y)} - I^{ave}{}_{Q1(x,y)}] / [I^{ave}{}_{Q0(x,y)} - I^{ave}{}_{Q2(x,y)}]\} \qquad (3)$$

where $I^{ave}$ indicates the area-averaged image intensity value for each respective interference portion, regardless of whether there are one or two of the various respective interference portions in the three contiguous interference portions.

It should be appreciated that Eq. (3) averages the pixels on each side of an (x,y) center pixel, which nominally removes the minimal gradient or offset error present in Eq. (2). That is, a "comparable average" according to Eq. (3) has a nominal spatial location that, ideally, coincides with the (x,y) center pixel.

It should be appreciated that, with regard to the expressions in the above-outlined discussion, in various exemplary embodiments, the multiple phase-shifted interference image information 610 and 620 or the multiple phase-shifted interference image information 610' and 620', respectively, maybe mirror images of each other, as preciously described. In such cases, it should be appreciated that the (x,y) location address scheme is similarly a mirror image in the multiple phase-shifted interference image information 610 and 620 or the multiple phase-shifted interference image information 610' and 620', respectively. Such a "mirror image" (x,y) location address scheme for the "congruent (x,y) location addresses" makes the mirror image structure of the underlying images inconsequential or even, in various embodiments according to this invention, advantageous.

Based on the foregoing examples and discussion, various modifications and other signal processing methods usable with these and other embodiments according to this invention will be apparent to one skilled in the art.

It should be appreciated that, in various embodiments according to this invention, the two wavelength or "two color interferometry" signal processing and measurement determining methods described in the 330 patent may be applied, when the two wavelengths are close enough together that the various components of the various embodiments described herein are operable with either wavelength. In such a case, one expression for determining a distance or range to an object, comparable to Eq. 14 in the 330 patent, is:

$$R(x,y) = \{[(\lambda_1\lambda_2) / 4\pi(\lambda_1-\lambda_2)] \times [\Phi_{\lambda 1}(x,y) - \Phi_{\lambda 2}(x,y)]\}, \qquad (4)$$

where:

$\lambda_1$ and $\lambda_2$ are the two wavelengths;
$\Phi_{\lambda 1}$ is the phase determination for the first wavelength, determined according to Eq. (2), Eq. (3), or the like; and
$\Phi_{\lambda 2}$ is the phase determination for the second wavelength.

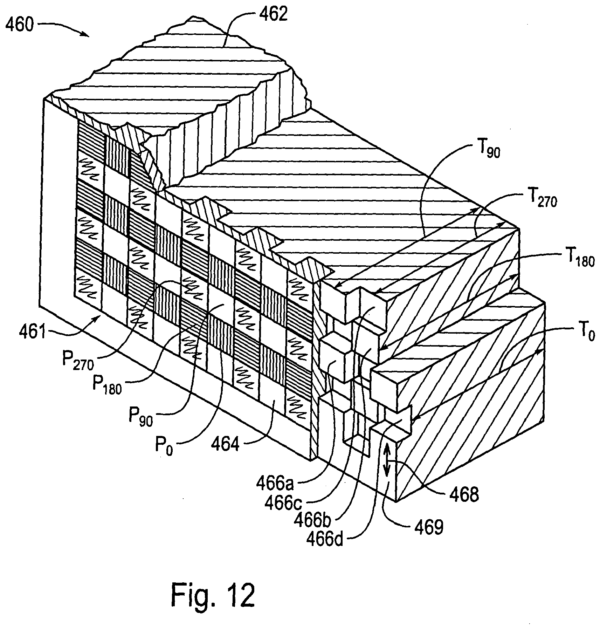

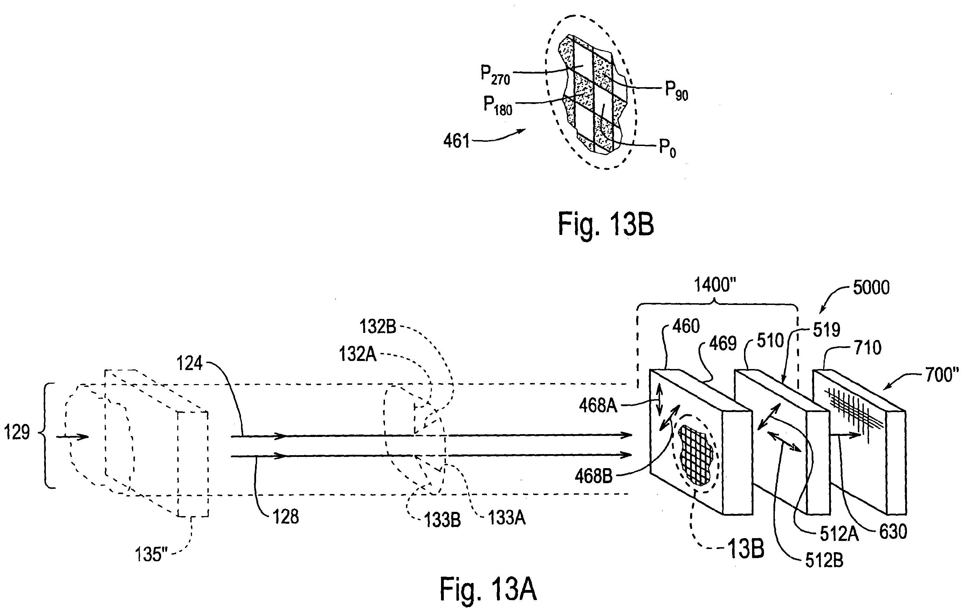

Fig. 12 illustrates a portion of a sixth exemplary embodiment of a high-density phase-shifting array element 460 according to this invention. The high-density phase-shifting array element 460 produces four different relative phase-shifts in its various portions and is usable in various exemplary embodiments of the multiple phase-shift generating structure 1400", as described below with respect to a third exemplary embodiment 5000 of the phase-shift imaging element according to this invention that is shown in Fig. 13.

For purposes of explanation, the high-density phase-shifting array element 460 may be functionally regarded as an interleaved combination of the high-density phase-shifting array elements 410 and 420 shown in Fig. 6. As shown in Fig. 12, in various exemplary embodiments, the sixth exemplary embodiment of the high-density phase-shifting array element 460 is formed using a birefringent substrate 462 such as a low order quartz wave plate. The birefringent substrate 462 has a surface 469 and a fast optical axis or fast axis 468. The nominal thickness $T_{90}$ of the birefringent substrate 462 is determined in the same manner as the nominal thickness $T_{90}$ of the birefringent substrate 422 of the high-density phase-shifting array element 420, to produce the same optical effect. That is, the substrate 462 is nominally a quarter wave plate. Each portion 466a of the high-density phase-shifting array element 460, corresponding to each portion $P_{90}$, has the nominal thickness $T_{90}$. As a result, the portions $P_{90}$ of the sixth exemplary embodiment of the high-density phase-shifting array element 460 produce a relative phase shift of 90 degrees between the components of the wavefront 129, as indicated by the subscript "90".

Similarly, the thickness $T_{270}$ of the recessed portions 466c of the birefringent substrate 462 is determined in the same manner as the thickness $T_{270}$ of the $P_{270}$ portions of the birefringent substrate 422 of the high-density phase-shifting array element 420, to produce the same optical effect. That is, each of the recessed portions 466c of the substrate 462 correspond to a nominal a three-quarter wave plate. Each portion 466c of the high-density phase-shifting array element 460, corresponding to each portion $P_{270}$, has the nominal thickness $T_{270}$. As a result, the portions $P_{270}$ of the

sixth exemplary embodiment of the high-density phase-shifting array element 460 produce a relative phase shift of 270 degrees between the components of the wavefront 129, as indicated by the subscript "270".

The thickness $T_{180}$ of the recessed portions 466b of the birefringent substrate 462 is determined in a manner similar to the thickness $T_{180}$ of the $P_{180}$ birefringent substrate 412 of the high-density phase-shifting array element 420, to produce the same optical effect. That is, each of the recessed portions 466b of the substrate 462 correspond to a nominal half-wave plate. Each portion 466b of the high-density phase-shifting array element 460, corresponding to each portion $P_{180}$, has the nominal thickness $T_{180}$. As a result, the portions $P_{180}$ of the sixth exemplary embodiment of the high-density phase-shifting array element 460 produce a relative phase shift of 180 degrees between the components of the wavefront 129, as indicated by the subscript "180".

The thickness $T_0$ of the recessed portions 466d of the birefringent substrate 462 is determined in a manner similar to the thickness $T_0$ of the birefringent substrate 412 of the high-density phase-shifting array element 420, to produce the same optical effect. That is, each of the recessed portions 466d of the substrate 462 correspond to a nominal full-wave plate. Each portion 466d of the high-density phase-shifting array element 460, corresponding to each portion $P_0$, has the nominal thickness $T_0$. As a result, the portions $P_0$ of the sixth exemplary embodiment of the high-density phase-shifting array element 460 produce a relative phase shift of zero degrees between the components of the wavefront 129, as indicated by the subscript "0".

As shown in Fig. 12, each portion 466a of the high-density phase-shifting array element 460, corresponding to each portion $P_{90}$, is a portion of the surface 469 of the substrate 462. Each of the portions 466b-466d, corresponding to the portions $P_{180}$, $P_{270}$ and $P_0$, respectively, are recesses formed in the substrate 462 with three distinct depths, respectively, that produce and/or correspond to the thicknesses $T_{180}$, $T_{270}$ and To, as previously described. Thus, the sixth exemplary embodiment of the high-density phase-shifting array element 460 includes an array of surface portions and recesses that are formed into a surface 469 of the substrate 462 corresponding to a pattern 461, that therefore also corresponds to the pattern of the phase-shift portions $P_0$-$P_{270}$.

In various exemplary embodiments, the recesses are formed by etching, as previously described with reference to the of the high-density phase-shifting array elements 410 and 420 shown in Fig. 6. More generally, the high-density phase-shifting array element 460 may be formed by any known or later-developed method of fabrication. In particular, the only manufacturing requirement is that the various phase-shift portions $P_0$, $P_{90}$, $P_{180}$ and $P_{270}$ can be fabricated in relatively high-density arrays. Specifically, the dimensions of the various phase-shift portions $P_0$, $P_{90}$, $P_{180}$ and $P_{270}$ must be able to approach the dimensions of one pixel, or a small group of pixels, of an optical detector array, as described further below.

As shown in Fig. 12, the recesses used to form the portions 466b-466d and the remaining areas of the surface 469 used to form the portion 466a are rectangular. However, more generally, it should be appreciated that, in various exemplary embodiments, the shape of recesses and remaining portions of the surface 469 can be any usable shape that corresponds to the shape of a pixel, or a group of pixels, of a detector array of the detector subsystem 700 and the associated signal processing that is used in a phase-shift array imaging element 3000,4000 or the like according to this invention.

It should be appreciated that the various portions 466a-466d of the high-density phase-shifting array element 460 have thicknesses that vary by a step corresponding to the thickness of a quarter-wave plate in substrate 462. Thus, it should be appreciated that in various other exemplary embodiments, the relative nominal etch depths or planes of the array of surface portions and recessed portions corresponding to the phase-shift portions $P_0$-$P_{270}$ may be fabricated in various permutations equivalent to increasing or reducing all of thicknesses of the various portions 466a-466d by one or more steps corresponding to the thickness of a quarter-wave plate in substrate 462. Based on the discussions above and below, other alternative variations and suitable patterns will be apparent to one skilled in the art.

As shown in Fig. 12, in various exemplary embodiments, the surface 469 is covered with a planarizing layer 464 that fills in the recesses in the surface 469 formed by etching the portions 466b-466d. If the planarizing layer 464 is provided, it can be formed of a material that does not apply any thickness-dependent phase shift to the wavefront 129 that is incident on the substrate 462 and can have an index of refraction that matches the nominal index of refraction of the birefringent substrate 462 so that the optical path lengths of the various optical paths through the high-density phase-shifting array element 460 tend to be made more similar, or ideally, equal. However, it should be appreciated that, in various exemplary embodiments, the planarizing layer 464 can be omitted.

As shown in Fig. 12, the sixth exemplary embodiment of the high-density phase-shifting array element 460 includes a repeating arrangement of four adjacent phase-shift portions $P_0$-$P_{270}$ distributed over the surface 469 in the pattern 461. In particular, as shown in Fig. 12, the pattern 461 creates a repeating interleaved placement of the first-fourth phase-shift portions $P_0$-$P_{270}$. In various exemplary embodiments, when the sixth exemplary embodiment of the high-density phase-shifting array element 460 is incorporated into various exemplary embodiments of the multiple phase-shift generating structure 1400", as described below with respect to a third exemplary embodiment 5000 of the phase-shift imaging element according to this invention that is shown in Fig. 13, the interleaved pattern of the first-fourth phase-shift portions $P_0$-$P_{270}$ extends to cover substantially the entire surface area of the detector device 710 used to implement the detector subsystem 700.

It should also be appreciated that, as shown in Fig. 6, the replication directions of each of the four phase-shift portions $P_0$-$P_{270}$ are arranged horizontally and vertically. However, more generally, the replication directions of each of the four phase-shift portions $P_0$-$P_{270}$ is completely controllable and selectable in various operable patterns of the four phase-shift portions $P_0$-$P_{270}$ and with the signal processing for the multiple phase-shift generating structure according to this invention. In various exemplary embodiments, each the various phase-shift portions $P_0$, $P_{90}$, $P_{180}$ and $P_{270}$ will be of equal size and shape and will cover equal portions of a detector array of the detector subsystem 700.

In various exemplary embodiments, each of the various phase-shift portions $P_0$, $P_{90}$, $P_{180}$ and $P_{270}$ will extend over an integer number of pixels of the detector array of the detector subsystem 700. In various exemplary embodiments, the boundaries of the various phase-shift portions $P_0$, $P_{90}$, $P_{180}$ and $P_{270}$ will be aligned with the boundaries between the pixels of the detector array. Thus, in such exemplary embodiments, each set of the various phase-shift portions $P_0$-$P_{270}$, define unit cells within the sixth exemplary embodiment of the high-density phase-shifting array elements 46 and the corresponding detector arrays. At one extreme, each of the respective various phase-shift portions $P_0$, $P_{90}$, $P_{180}$ and $P_{270}$ can be associated with and aligned with a respective single pixel of the corresponding detector array.

As shown in Fig. 12, it should be appreciated that the fast axis 468 of the birefringent substrate 462 lies in a plane that is normal to the surface 469. In various exemplary embodiments, the fast axis 468 is parallel to the vertical edges of the phase shift portions $P_0$-$P_{270}$. However, it should be appreciated that, in various other exemplary embodiments, the fast axis 468 could lie parallel to the horizontal edges of the various phase shift portions, or at 45 degrees relative to these edges, or in any other operable orientation, depending on the relative orientations of the polarized components of the combined wavefront 129 and other related design factors. It should also be appreciated that, in this sixth exemplary embodiment of the high-density phase-shifting array element 460, the fast axis 468 is fixed and constant throughout the entire substrates 462 and the phase shift portions are obtained by controllably varying the fabricated thicknesses within the substrates 462.

As previously described, in various exemplary embodiments, the various portions 466a-466d of the high-density phase-shifting array element 460 have thicknesses that vary by a step corresponding to the thickness of a quarter-wave plate in substrate 462. For example, in various exemplary embodiments that use a typical commercially-available quartz wave-plate material as the substrate 462, a thickness step of 17.5 microns is suitable for a laser source that emits a laser wavefront having a wavelength of 633 nm.

It should be appreciated that, in general, the relative phase-shift between the phase $\Phi_{fast}$ of a light component polarized along a fast axis of a birefringent material and the phase $\Phi_{slow}$ a light component polarized along a slow axis of a birefringent material is:

$$\Phi_{slow} - \Phi_{fast} = (2\pi t/\lambda)(n_{slow} - n_{fast}) = 2\pi t\beta/\lambda \qquad (5)$$

where

$\Phi_{fast}$ - $\Phi_{slow}$ is the relative phase-shift;
t is the thickness of the birefringent material;
$\lambda$ is the wavelength of the light components;
$n_{slow}$ is the index of refraction of the birefringent material along the slow axis;
$n_{fast}$ is the index of refraction of the birefringent material along the fast axis; and
is the birefringence of the material, that is, the difference between the indices of refraction of the birefringent material along the fast and slow axes.

Thus, the various thicknesses and/or thickness step dimensions usable in various exemplary embodiments according to this invention that use various birefringent substrates and/or birefringent material layers can be determined according to Eq. (6), which describes the thickness of a birefringent material that is required to change the phase of a light component polarized along a slow axis of a birefringent material relative to the phase of a light component polarized along a fast axis of a birefringent material by a fraction 1/x of the wavelength of the light components $\lambda$:

$$t_{1/x\text{-wave}} = (k+1/x)\frac{\lambda}{\beta}, \qquad (6)$$

where k is an integer greater than or equal to zero, corresponding to a number of full waves phase-shifts included in the thickness t.

Thus, in various exemplary embodiments described herein, for a given wavelength of the light components $\lambda$, and a given birefringence $\beta$:

$T_0$ and/or $T'_0$ corresponds to a thickness $(k+1/1)\lambda/\beta$,
$T_{90}$ and/or $T'_{90}$ corresponds to a thickness $(k+1/4)\lambda/\beta$,
$T_{180}$ and/or $T'_{180}$ corresponds to a thickness $(k+1/2)\lambda/\beta$, and
$T_{270}$ and/or $T'_{270}$ corresponds to a thickness $(k+3/4)\lambda/\beta$.

In various exemplary embodiments, a thickness step or etch step should be minimized in order to maintain as low of an aspect ratio as possible. Thus, in various exemplary embodiments, k is set to zero and a material having a relatively high birefringence is chosen. For example, in comparison to quartz, which has a birefringence of 0.009 and thus gives a minimum quarter-wave step dimension of 17.5 um at 633 nm, in various exemplary embodiments, the birefringent material calcite, which has a birefringence of 0.172, gives a minimum quarter-wave step dimension of 0.92 microns. In various exemplary embodiments, one of the previously discussed reactive mesogen materials, which has a birefringence of 0.16, gives a minimum quarter-wave step dimension of 1.075 microns.

It should be appreciated that, in various exemplary embodiments where the ideal thicknesses of the various portions of the high-density phase-shifting array element according to this invention are not attained during fabrication, or the phase shifts resulting from various portions are otherwise not ideal, that any phase-shift imaging element according to this invention can be calibrated and/or compensated for by subsequent calibration procedures and signal processing. Such calibration procedures and signal processing can be performed using various phase correction factors or other techniques to compensate for various phase errors and/or variations across the retardation array, and, in various exemplary embodiments, at levels of resolution as fine as the pixel level.

Fig. 13 is an exploded view illustrating a third exemplary embodiment of a phase-shift imaging element 5000 according to this invention. As shown in Fig. 11, the phase-shift imaging element 5000 includes including a third exemplary embodiment of a multiple phase-shift generating structure 1400" according to this invention and a detector subsystem 700". In various exemplary embodiments, a single detector 710 of any suitable known or later-developed type is used to implement the detector subsystem 700". The multiple phase-shift generating structure 1400" incorporates any exemplary embodiment of the sixth exemplary high-density phase-shifting array element 460 according to this invention, combined with a polarizer element 510. In contrast to any of the previously described embodiments, no beam splitter is required in the phase-shift imaging element 5000.

As shown in Fig. 13, the combined wavefront 129 is transmitted by the optical input portion 135". The transmitted combined wavefront 129 includes the reference wavefront 124 and the object wavefront 128. The transmitted combined wavefront 129 propagates as a single wavefront that fills the high-density phase-shifting array element 460.

It should be appreciated, from the foregoing discussions of the structure and operation of the high-density phase-shifting array element 460, that the transmitted combined wavefront 129 that propagates from the high-density phase-shifting array element 460 includes a pattern of four different interleaved phase-shifted portions having different relative phase-shifts corresponding to the pattern 461 of the first-fourth phase-shift portions $P_0$-$P_{270}$ that are present in the high-density phase-shifting array element 460.

The transmitted combined wavefront 129 passing out of the high-density phase-shifting array element 460, including the interleaved phase-shift pattern, is directed onto the polarizer element 510. The polarizer element 510 is oriented to transmit the in-phase components of the orthogonally polarized sub-wavefront components 124 and 128 of the combined sub-wavefront 129. As a result, the multiple phase-shifted interference image information 630 includes an interleaved pattern of first "0 degree relative phase-shift" or $Q_0$ interference portions corresponding to the portions $P_0$, second "90 degree relative phase-shift" or $Q_1$ interference portions corresponding to the portions $P_{90}$, third "180 degree relative phase-shift" or $Q_2$ interference portions corresponding to the portions $P_{180}$, and fourth "270 degree relative phase-shift" or $Q_3$ interference portions corresponding to the portions $P_{270}$, interleaved at a high spatial frequency corresponding to the interleaved pattern 461 of the portions $P_0$-$P_{270}$.

The 2-dimensionally interleaved pattern of $Q_0$-$Q_3$ interference portions in the multiple phase-shifted interference image information 630 that passes out of the polarizer array element 510 are received as a single image that extends substantially over the entire surface area of the detector device 710 that is used to implement the detector subsystem 700". It should be appreciated that the 2-dimensionally interleaved pattern of first, second, third and fourth relative-phase interference portions in the multiple phase-shifted interference image information 600" corresponds to a high-density interleaving of the $Q_0$-$Q_3$ quadrants, 232-238, shown in Fig. 4, transmitted as a single image onto the surface of the detector device 710.

In various exemplary embodiments, the patterned surface 469 of the high-density phase-shifting array element 460 is oriented towards the polarizer element 510 and the detector 710. More generally, in various exemplary embodiments, the respective fabrication, orientation and assembly of the high-density phase-shifting array element 460, the polarizer element 510 and the detector 710 can be similar to any of the various embodiments previously described for the respective fabrication, orientation and assembly of the corresponding elements of the phase-shift imaging elements 3000 and 4000, described with reference to Figs. 7, 8, 10 and 11. In various exemplary embodiments, regardless of their respective fabrication methods, the polarizer element 510, the high-density phase-shifting array element 460 and the detector 710 are effectively bonded or joined together to form the phase-shift imaging element 5000 shown in Fig. 13 as a monolithic phase-shift imaging element.

It should be appreciated that, in various exemplary embodiments according to this invention, it is advantageous to fabricate the polarizer element 510, the high-density phase-shifting array element 460 and the detector 710 such that each portion of the effective optical path length of the combined wavefronts 129 are as similar as possible, and ideally, equal. It should be appreciated that, in various exemplary embodiments, a distance d (not shown) between the patterned surface 469 of the high-density phase-shifting array element 460 and a detector surface of the detector 710 should be less than the maximum depth of focus of the image that is presented at the detector 710. In various exemplary embodiments, the distance d is approximately 1-2 mm or less. In various other exemplary embodiments, the distance d is less than 0.2 mm.

The polarization direction 512 of the polarizer array element 510 is aligned relative to the polarization directions 132 and 133 of the reference wavefront 124 and the object wavefront 128 in a similar way to that previously described for the polarizer array elements 510a and 510b shown in Fig. 8. In a first exemplary embodiment of the phase-shift imaging element 5000, the reference wavefront 124 and the object wavefront 128 are polarized along the orthogonal directions 132A and 133A as shown in Fig. 13. In this first exemplary embodiment, the polarizer array element 510 has the polarization direction 512A as indicated on the polarizer array element 510.

In a second exemplary embodiment of the phase-shift imaging element 5000, the reference wavefront 124 and the object wavefront 128 are polarized along the orthogonal directions 132B and 133B as shown in Fig. 13. In this second exemplary embodiment, the polarizer array element 510 has the polarization direction 512B as indicated on the polarizer array element 510. As a result, in either case, the polarizer element 510 transmits and interferes the in-phase components of the orthogonally polarized components 124 and 128 of the wavefront 129 in the interleaved phase-shift pattern passing out of the high-density phase-shifting array element 460 to produce the multiple phase-shifted interference image information 630.

However, it should be appreciated that, in various other exemplary embodiments, the polarizer array element 510 can be oriented to transmit and interfere the out-of-phase components of the orthogonally polarized components 124 and 128 of the wavefront 129. Nevertheless, the resulting multiple phase-shifted interference image information will still contain four different useable interference portions similar to the 2-dimensionally interleaved pattern of $Q_0$-$Q_3$ interference portions in the multiple phase-shifted interference image information 630.

It should be appreciated that, in various exemplary embodiments, when two laser wavelengths are used to create and absolute interferometer, the wavelengths may be sufficiently similar so that one high-density phase-shifting array element 460 is suitable for both wavelengths.

It should be appreciated that various exemplary embodiments of the multiple phase shift generating structure 1400" and the exemplary phase shift imaging element 5000 provide four different phases of relative phase-shift interference information arising from a single image that is derived from a single undivided wavefront. Thus, it should be appreciated that all of the previously described features and benefits of the various embodiments of the multiple phase-shift generating structure 1400 and the phase-shift imaging element 3000 shown in Figs. 7 and 8, and the multiple phase-shift generating structure 1400' and the phase-shift imaging element 4000 shown in Figs. 10 and 11, are similarly provided by various embodiments of the multiple phase-shift generating structure 1400" and the phase-shift imaging element 5000 shown in Fig. 13.

In addition, in various exemplary embodiments, the multiple phase-shift generating structure 1400" and the phase-shift imaging element 5000 shown in Fig. 13 enjoy an additional advantage in that the high-density phase-shifting array element 460 is provided as a single element. Furthermore, because the high-density phase-shifting array element 460 allows more than two different "types" of interference portions to be provided along a single optical path, that is, within a single image on the detector 710, no beam splitting element is required. This results not only in fewer optical element aberrations and more convenient assembly and/or signal processing, but also in improved matching between the gain characteristics and the like, of all comparable image pixels. This occurs because all comparable pixels are located in the same small region of the detector.

Furthermore, all comparable pixels are located in the same small region of the detector. Accordingly, the optical path lengths from a particular portion of the object to each of the particular corresponding $Q_0$-$Q_3$ interference portions in a particular local portion of the multiple phase-shifted interference image information 630 are inherently similar. Thus, the related relative phase-shift information and the related measurement determination will generally be insensitive to reasonably expected rotational and/or translational motions of the exemplary phase shift imaging element 5000. As a result, in various exemplary embodiments, both costs and measurement errors are further reduced in the phase-shift imaging element, in comparison to the phase-shift imaging elements 3000 and 4000.

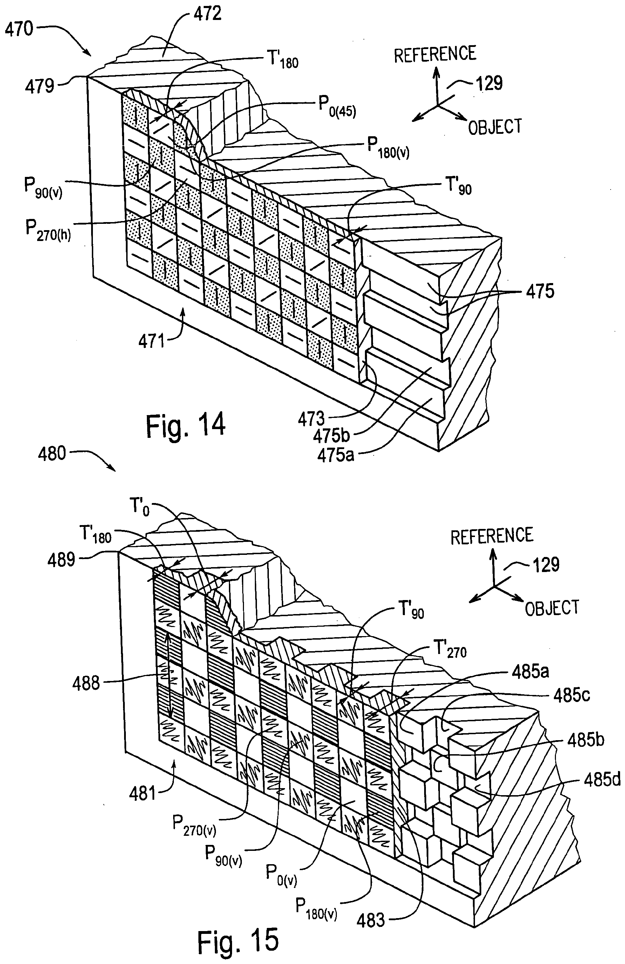

Fig, 14 illustrates a portion of a seventh exemplary embodiment of a high-density phase-shift array element 470 according to this invention. The high-density phase-shifting array element 470 is usable in various exemplary embodiments of the multiple phase-shift generating structure 1400", as described above with respect to the third exemplary embodiment of the phase-shift imaging element 5000. As shown in Fig. 14, the seventh exemplary high-density phase-shift array element 470 includes a null-phase-shift substrate 472. It should be appreciated that the null phase-shift substrate 472 can be formed using an amorphous or other non-birefringent material. In such exemplary embodiments, the thickness of the substrate 472 can be any desired value. That is possible because such substrates 472 do not apply any thickness-dependent phase shift to light incident upon the substrate 472. The substrate 472 includes recessed portions 475. In particular, first portions 475a underlie phase-shift portions $P_{90(v)}$ and $P_{270(h)}$, while second portions 475b underlie phase-shift portions $P_{0(45)}$ and $P_{180(v)}$, as described in detail below.

For purposes of explanation, the high-density phase-shifting array element 470 may be functionally regarded as an interleaved combination of the high-density phase-shifting array elements 430 and 450 shown in Fig. 9. The high-density phase-shifting array element 470 includes a birefringent material layer 473 including a surface 479. Similarly to the high-density phase-shifting array elements 430 and 450, the birefringent material layer 473 is formed of a birefringent material that can have its fast axis direction selectively patterned, as previously described.

As shown in Fig. 14, the birefringent material layer 473 of the seventh exemplary embodiment of the high-density phase-shifting array element 470 has a nominal thickness $T'_{90}$ overlying and/or determined by the first portions 475a. The nominal thickness $T'_{90}$ of the birefringent material layer 473 is determined in the same manner as the nominal thickness $T'_{90}$ of the birefringent material layer 453 of the high-density phase-shifting array element 450, to produce the same optical effect. As shown in Fig. 14, the birefringent material layer 473 includes 90-degree phase shift portions $P_{90(v)}$ and 270 degree phase shift portions $P_{270(h)}$ arranged in an alternating pattern along the rows coinciding with the first portions 475a. Each portion $P_{90(v)}$ and each portion $P_{270(h)}$ of the birefringent material layer 473 has the nominal thickness $T'_{90}$.

In various exemplary embodiments, each portion $P_{90(v)}$ is fabricated such that the fast axis of the birefringent material layer 473 in that portion is oriented vertically. That is, the fast axis in each portion $P_{90(v)}$ is oriented parallel to the expected operational orientation of a vertically-oriented one of the orthogonal components of a combined wavefront 129. In contrast, each portion $P_{270(h)}$ is fabricated such that the fast axis of the birefringent material layer 473 in that portion is oriented horizontally. That is, the fast axis in each portion $P_{270(h)}$ is oriented parallel to the expected operational orientation of a horizontally-oriented one of the orthogonal components of a combined wavefront 129. This is indicated by the exemplary REFERENCE and OBJECT orthogonal components and the typical alignment lines shown in various portions $P_{90(v)}$ and $P_{270(h)}$ in the exemplary embodiment shown in Fig. 14. It should be appreciated that, with these relative orientations, the portions $P_{90(v)}$ and $P_{270(h)}$ function identically to the similarly numbered portions of the high-density phase-shifting array element 450, to produce the same optical effect.

In an analogous manner, as shown in Fig. 14, the birefringent material layer 473 of the seventh exemplary embodiment of the high-density phase-shifting array element 470 has a nominal thickness $T'_{180}$ overlying and/or determined by the second portions 475b. The nominal thickness $T'_{180}$ of the birefringent material layer 473 is determined in the same manner as the nominal thickness $T'_{180}$ of the birefringent material layer 433 of the high-density phase-shifting array element 430, to produce the same optical effect. As shown in Fig. 14, the birefringent material layer 473 includes 180-degree phase shift portions $P_{180(v)}$ and zero degree phase shift portions $P_{0(45)}$ arranged in an alternating pattern along the rows coinciding with the second portions 475b. Each portion $P_{180(v)}$ and each portion $P_{0(45)}$ of the birefringent material layer 473 has the nominal thickness $T'_{180}$.

In various exemplary embodiments, each portion $P_{180(v)}$ is fabricated such that the fast axis of the birefringent material layer 473 in that portion is oriented vertically. That is, the fast axis in each portion $P_{180(v)}$ is oriented parallel to the expected operational orientation of a vertically-oriented one of the orthogonal components of a combined wavefront 129. In contrast, each portion $P_{0(45)}$ is fabricated such that the fast axis of the birefringent material layer 473 in that portion is oriented at 45 degrees. That is, the fast axis in each portion $P_{0(45)}$ is oriented midway between the expected operational orientation of the orthogonal components of a combined wavefront 129. This is indicated by the exemplary REFERENCE and OBJECT orthogonal components and the typical alignment lines shown in various portions $P_{180(v)}$ and $P_{0(45)}$ in the exemplary embodiment shown in Fig. 14. It should be appreciated that, with these relative orientations, the portions $P_{180(v)}$ and $P_{0(45)}$ function identically to the similarly numbered portions of the high-density phase-shifting array element 430, to produce to produce the same optical effect.

It should be appreciated from the above-outlined description, that the portions $P_{0(45)}$, $P_{90(v)}$, $P_{180(v)}$ and $P_{270(h)}$ of the seventh exemplary embodiment of the high-density phase-shifting array element 470 are functionally equivalent to the portions $P_0$, $P_{90}$, $P_{180}$ and $P_{270}$ of the sixth exemplary embodiment of the high-density phase-shifting array element 460, with respect to their net optical effects in multiple phase-shifted interference image information. Thus, in various exemplary embodiments of the phase-shift imaging element 5000 according to this invention, the high-density phase-shifting array elements 470 and 460 are nominally interchangeable. Accordingly, the high-density phase-shifting array elements 470 and 460 may be employed according to similar design considerations, similarly dimensioned, and similarly assembled in the phase-shift imaging element 5000 to produce similar or identical interleaved phase-shifted image information, for example, as described with reference to Fig. 13 above.

As shown in Fig. 14, in various exemplary embodiments, fabricating the interleaved thicknesses $T'_{180}$, $T'_{90}$ is facilitated by preliminarily fabricating the first and second recessed portions 475a and 475b formed in the substrate 472 with two distinct depths that produce and/or correspond to the thicknesses $T'_{180}$ and $T'_{90}$, respectively. The two distinct depths of the first and second recessed portions 475a and 475b may be formed in the substrate 472 by known etching or micro-embossing techniques, or any other appropriate known or later-developed technique. In various exemplary embodiments, the surfaces of the first and second recessed portions 475a and 475b receive various alignment treatments as described in above and in the incorporated references, if needed, and are filled with the birefringent material layer 473 of a birefi-ingent material.

Any of the polymerizable birefringent materials described previously that can receive a fast axis aligning and patterning process, and that are compatible with the various fast axis alignment treatments used in a particular embodiment, can be used to form the layer 473. In particular, in the embodiment shown in Fig. 14, in various portions, the material that forms the layer 473 provides a retardation effect that depends on the thickness of the layer 473 in that portion, and a fast axis direction that can be controllably varied and determined for that portion based on the conditions that the various portions of the layer 473 experience as those portions of the layer 473 are polymerized, as previously described. In various exemplary embodiments, the surface 479 of the birefringent material layer 473 is made coplanar with a peripheral surface of the substrate 472.

Fig, 15 illustrates a portion of an eighth exemplary embodiment of a high-density phase-shift array element 480 according to this invention. The high-density phase-shifting array element 480 is usable in various exemplary embodiments of the multiple phase-shift generating structure 1400", as described above with respect to the third exemplary embodiment of the phase-shift imaging element 5000. As shown in Fig. 15, the eighth exemplary high-density phase-shift array element 480 includes a null-phase-shift substrate 482. It should be appreciated that the null phase-shift substrate 482 can be formed using an amorphous or other non-birefringent material. In such exemplary embodiments, the thickness of the substrate 482 can be any desired value. That is possible because such substrates 482 do not apply any thickness-dependent phase shift to light incident upon the substrate 482. The substrate 482 includes portions 485. Recessed first portions 485a underlie phase-shift portions $P_{90(v)}$, recessed second portions 485b underlie phase-shift portions $P_{180(v)}$, recessed third portions 485c underlie phase-shift portions $P_{270(v)}$ and recessed fourth portions 485d underlie phase-shift portions $P_{0(v)}$, as described in detail below.

For purposes of explanation, the high-density phase-shifting array element 480 may be regarded as operating similarly to the high-density phase-shifting array elements 460 shown in Fig. 12, in that the fast axis direction 488 is everywhere the same in the high-density phase-shifting array element 480. However, in contrast to the high-density phase-shifting array elements 460 shown in Fig. 12, in the high-density phase-shifting array element 480 the substrate material is non-birefringent, such that the substrate provides no relative phase shift. Rather, in the high-density phase-shifting array element 480, it is the fill material in a birefringent material layer 483 that is birefringent and produces the relative phase-shift portions $P_{0(v)}$-$P_{270(v)}$ shown in Fig. 15. Thus, in terms of fabrication and materials, the high-density phase-shifting array element 480 may be fabricated similarly to the high-density phase-shifting array element 470, as described above. However, in this eighth exemplary embodiment, the fast axis alignment direction is everywhere the same.

The high-density phase-shifting array element 480 includes a birefringent material layer 483 including a surface 489. The birefringent material layer 483 can be formed of any of the birefringent materials previously discussed with reference to the birefringent material layer 473 shown in Fig. 14. In particular, the material that forms the layer 483 provides an amount of retardation that depends on the thickness of the layer 483. As indicated above, the direction along which the fast axis of the birefringent material lies can be set in based on the alignment conditions present as the layer 483 is polymerized.

As shown in Fig. 15, the birefringent material layer 483 of the eighth exemplary embodiment of the high-density phase-shifting array element 480 has phase-shift portions $P_{90(v)}$ corresponding to a nominal thickness $T'_{90}$ overlying and/or determined by the recessed first portions 485a. The nominal thickness $T'_{90}$ of the birefringent material layer 483 is determined in the same manner as the nominal thickness $T'_{90}$ of the birefringent material layer 473 of the high-density phase-shifting array element 470, to produce the same retardation effect. Similarly, the birefringent material layer 483 has phase-shift portions $P_{180(v)}$ corresponding to a nominal thickness $T'_{180}$ overlying and/or determined by the recessed second portions 485b. The nominal thickness $T'_{180}$ of the birefringent material layer 483 is determined in the same manner as the nominal thickness $T'_{180}$ of the birefringent material layer 473 of the high-density phase-shifting array element 470, to produce the same retardation effect.

In an analogous manner, the birefringent material layer 483 has phase-shift portions $P_{270(v)}$ corresponding to a nominal thickness $T'_{270}$ overlying and/or determined by the portions 485c. The nominal thickness $T'_{270}$ of the birefringent material layer 483 overlying and/or determined by the recessed third portions 485c is determined such that the high-density phase-shifting array element 480 produces a three-quarter wavelength retardation effect in those portions. In an analogous manner, the birefringent material layer 483 has phase-shift portions $P_{180(v)}$ corresponding to a nominal

thickness $T'_0$ overlying and/or determined by the recessed fourth portions 485d. The nominal thickness $T'_0$ of the birefringent material layer 483 overlying and/or determined by the portions 485d is determined such that the high-density phase-shifting array element 480 produces a full wavelength retardation effect in those portions. It should be appreciated that the various thicknesses and/or substrate step heights discussed above can be determined according to Eq. (6), as discussed previously, where the birefringence value used is that of the birefringent material layer 483 in its aligned and polymerized state.

As shown in Fig. 15, the fast axis 488 of the birefringent material layer 483 is oriented vertically. That is, the fast axis 488 of the birefringent material layer 483 is oriented parallel to the expected operational orientation of a vertically oriented one of the orthogonal components of a combined wavefront 129. This is indicated by the exemplary REFERENCE and OBJECT orthogonal components and the fast axis alignment line 488 shown in Fig. 15. It should be appreciated that with these relative orientations, all of the portions $P_{0(v)}$-$P_{270(v)}$ function identically to the similarly number portions $P_0$-$P_{270}$ of the high-density phase-shifting array element 460, shown in Fig. 12, to produce the same optical effects.

It should be appreciated, from the above-outlined description, that the portions $P_{0(v)}$-$P_{270(v)}$ of the eighth exemplary embodiment of the high-density phase-shifting array element 480 are functionally equivalent to the portions $P_0$-$P_{270}$ of the sixth exemplary embodiment of the high-density phase-shifting array element 460, with respect to their net optical effects in multiple phase-shifted interference image information. Thus, in various exemplary embodiments of the phase-shift imaging element 5000 according to this invention, the high-density phase-shifting array elements 480 and 460 are nominally interchangeable. Accordingly, the high-density phase-shifting array elements 480 and 460 may be employed according to similar design considerations, similarly dimensioned, and similarly assembled in the phase-shift imaging element 5000 to produce similar or identical interleaved phase-shifted image information, for example, as described with reference to Fig. 13 above.

As shown in Fig. 15, in various exemplary embodiments, fabricating the interleaved thicknesses $T'_0$, $T'_{90}$, $T'_{180}$, and $T'_{270}$, is facilitated by the preliminarily fabricating the recessed portions 485a-485d formed in the substrate 482 with four distinct depths that produce and/or correspond to the thicknesses $T'_0$-$T'_{270}$, respectively. The four distinct depths of the recessed first-fourth portions 485a-485d may be formed in the substrate 482 by known etching or micro-embossing techniques, or any other appropriate known or later-developed technique. In various exemplary embodiments, the surfaces of the recessed first-fourth portions 485a-485d receive various alignment treatments as described above and in the previously incorporated references, if needed, and are filled with the birefringent material layer 483 of any appropriate birefringent material.

Any of the polymerizable birefringent materials described previously that can receive a fast axis aligning process, and that are compatible with the various fast axis alignment treatments used in a particular embodiment, can be used. In particular, in the embodiment shown in Fig. 15, in various portions, the material that forms the layer 483 provides a retardation effect that depends on the thickness of the layer 483 in that portion. The fast axis direction 488 is set for all portions based on the conditions that the layer 483 experiences as the layer 483 is polymerized, as previously described. In various exemplary embodiments, the surface 489 of the birefringent material layer 483 is made coplanar with a peripheral surface of the substrate 482.

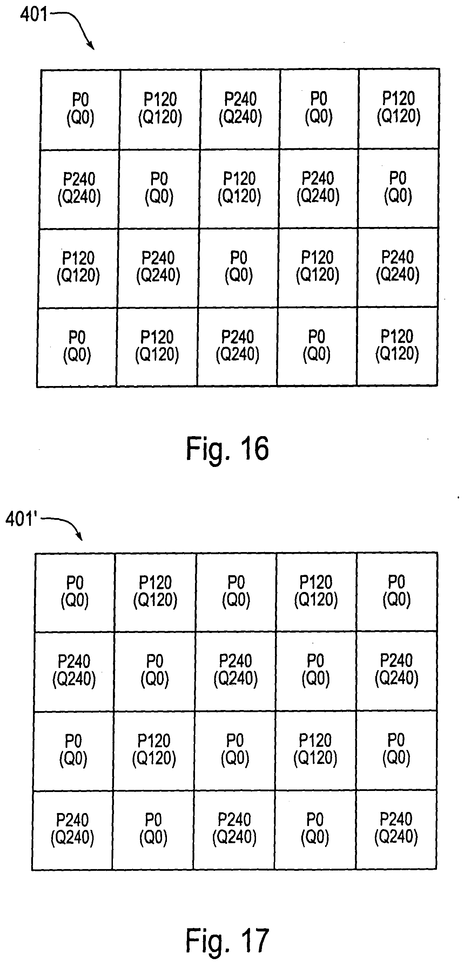

Figs. 16 and 17 show two patterns 401 and 401', respectively, of relative phase-shift portions that can be used in place of the patterns 461, 471 and/or 481 shown in Figs. 12, 14 and 15, respectively. As shown in Figs. 16 and 17, these patterns 401 and 401' define arrays of three different phase-shift portions, in contrast to the patterns 461, 471 and 481, which define arrays of four different phase-shift portions. That is, in the patterns 401 and 401' shown in Figs. 16 and 17, the phase-shift portions provide relative phase shifts that are offset from each other by 120 degrees of phase shift, instead of the 90 degrees of relative phase shift that separate the phase-shift portions in the patterns 461, 471 and 481.

In the first exemplary three-phase pattern 401 shown in Fig. 16, each of the three different phase-shift portions $P_0$, $P_{120}$ and $P_{240}$ are consistently repeated along a diagonal direction, which slants down and to the right in the particular exemplary embodiment shown Fig. 16. Additionally, in the first exemplary three-phase pattern 401 shown in Fig. 16, the three different phase-shift portions $P_0$, $P_{120}$ and $P_{240}$ are distributed in a simple pattern such that each type of phase-shift portion is adjacent to the other two types of phase-shift portions in both the vertical and horizontal directions. Similarly, in the first exemplary three-phase pattern 401 shown in Fig. 16, the three different phase-shift portions $P_0$, $P_{120}$ and $P_{240}$ are distributed in a regular pattern such that each type of phase-shift portion represented at least once in each set or "square" of four contiguous phase shift portions.

However, while the three phase-shift portions $P_0$, $P_{120}$ and $P_{240}$ are distributed in a regular pattern in the first exemplary three-phase pattern 401 shown in Fig. 16, it is difficult to compare the interference information arising from the respective phase-shift portions $P_0$, $P_{120}$ and $P_{240}$ at the same point in a resulting image, as may be desired in various exemplary embodiments which require particularly high inference measurement accuracy and spatial resolution. This difficulty arises because the effective spatial averaging points for each respective local family of each of the three different phase-shift portions $P_0$, $P_{120}$ and $P_{240}$ do not coincide.

In the second exemplary three-phase pattern 401' shown in Fig. 17, one of the three different phase-shift

portions $P_0$, $P_{120}$ and $P_{240}$ is consistently repeated along a diagonal direction, which slants down and to the right in the particular exemplary embodiment shown Fig. 17, and the other two of the three different phase-shift portions $P_0$, $P_{120}$ and $P_{240}$ are alternately repeated along that diagonal direction. In particular, in the particular exemplary embodiment of the second exemplary three-phase pattern 401' shown in Fig. 17, the first phase-shift portion $P_0$ is consistently repeated along the diagonal direction and the two portions $P_{120}$ and $P_{240}$ are alternately repeated along the diagonal direction.

As a result, in the second exemplary three-phase pattern 401' shown in Fig. 17, the three different phase-shift portions $P_0$, $P_{120}$ and $P_{240}$ are distributed in a more complicated pattern such that provides an enhanced spatial averaging configuration. In particular, in the particular exemplary embodiment of the second exemplary three-phase pattern 401' shown in Fig. 17, for the first phase-shift portion $P_0$, the other two phase-shift portions are laterally adjacent and symmetrically distributed around the first phase-shift portion $P_0$. Moreover, other ones of the first phase-shift portions $P_0$ are diagonally and symmetrically distributed around that first phase-shift portion $P_0$.

Similarly, in the particular exemplary embodiment of the second exemplary three-phase pattern 401' shown in Fig. 17, for the other phase-shift portions $P_{120}$ and $P_{240}$, the first phase-shift portion $P_0$ is laterally adjacent and symmetrically distributed around those phase-shift portions, while the other one of these two phase-shift portions $P_{120}$ and $P_{240}$ are diagonally and symmetrically distributed around that phase-shift portion. As a result, for each set or "square" of nine contiguous phase shift portions, the effective spatial averaging points for each respective local family of each of the three different phase-shift portions $P_0$, $P_{120}$ and $P_{240}$ do coincide.

It should be appreciated that the patterns 401 or 401' can each be employed in an embodiment of a high-density phase shift array element that is fabricated in a manner analogous to the embodiments 460 and 480, described above with reference to Figs. 12 and 15, respectively. It should be appreciated that the fast axis alignment direction is consistent for each portion throughout the high-density phase shift array element in these embodiments. The various thicknesses and/or substrate step heights needed to provide the patterns 401 and 401' can be determined according to Eq. (6), as previously described.

It should further be appreciated that such embodiments of a high density phase shift array element that uses the patterns 401 or 401' can be used in alternative embodiments constructed similarly to the phase-shift imaging element 5000 shown in Fig. 13, to provide an embodiment of the multiple phase-shifted interference image information 600 that includes three interleaved interference portions, $Q_0$, $Q_{120}$ and $Q_{240}$, respectively arranged in a pattern corresponding to the pattern 401 or 401' of the phase-shift portions $P_0$, $P_{120}$ and $P_{240}$.

An interferometric measurement value can be determined from the three corresponding phase signals which arise in a detector subsystem 700 which receives the multiple phase-shifted interference image information 600 that includes the three interleaved interference portions, as described below. The three intensity signals are designated as $I_{Q0(X,Y)}$, $I_{Q120(X,Y)}$, and $I_{Q240(X,Y)}$, where each respective intensity signal symbol indicates the area-averaged image intensity value for each respective type of interference portion, regardless of whether there are one, two or more of the various respective interference portions utilized and averaged in a particular computation scheme for determining an interferometric measurement value associated with a particular (x,y) location. In general, the three intensity signals will be related approximately as follows in the vicinity of a particular (x,y) location:

$$I_{Q0(x,y)} = A_0 \sin\left(2\pi \frac{d_{(x,y)}}{\lambda}\right) , \qquad (7)$$

$$I_{Q120(x,y)} = A_0 \times \sin\left(2\pi \frac{d_{(x,y)}}{\lambda} + \frac{2\pi}{3}\right) , \text{ and} \qquad (8)$$

and

$$I_{Q240(x,y)} = A_0 \times \sin\left(2\pi \frac{d_{(x,y)}}{\lambda} - \frac{2\pi}{3}\right) , \qquad (9)$$

where:

$d_{(x,y)}$ is a nominally "object beam" optical path length to a corresponding (x,y) point on the object,
$A_0$ is the nominal peak amplitude of the interference pattern in the vicinity of the (x,y) location, and

λ is the wavelength of the light in the interference pattern.

New signals can then be created by pair-wise subtracting the $I_{Q0(X,Y)}$, $I_{Q120(X,Y)}$, and $I_{Q240(X,Y)}$ signals from each other:

$$V_R = I_{Q240(x,y)} - I_{Q120(x,y)} = A_0 \left( \sin\left( 2\pi \frac{d_{(x,y)}}{\lambda} - \frac{2\pi}{3} \right) - \sin\left( 2\pi \frac{d_{(x,y)}}{\lambda} + \frac{2\pi}{3} \right) \right) = -A_0 \sqrt{3} \cos 2\pi \frac{d_{(x,y)}}{\lambda} \quad , \quad (10)$$

$$V_S = I_{Q0(x,y)} - I_{Q240(x,y)} = A_0 \left( \sin\left( 2\pi \frac{d_{(x,y)}}{\lambda} \right) - \sin\left( 2\pi \frac{d_{(x,y)}}{\lambda} - \frac{2\pi}{3} \right) \right) = A_0 \sqrt{3} \cos\left( 2\pi \frac{d_{(x,y)}}{\lambda} - \frac{2\pi}{6} \right), \quad (11)$$

and

$$V_T = I_{Q120(x,y)} - I_{Q0(x,y)} = A_0 \left( \sin\left( 2\pi \frac{d_{(x,y)}}{\lambda} + \frac{2\pi}{3} \right) - \sin\left( 2\pi \frac{d_{(x,y)}}{\lambda} \right) \right) = A_0 \sqrt{3} \cos\left( 2\pi \frac{d_{(x,y)}}{\lambda} + \frac{2\pi}{6} \right). \quad (12)$$

Then, to get a quadrature signal $V_{QUAD}$ that complements the signal $V_R$ for an interferometric measurement calculation, $V_S$ and $V_T$ are combined:

$$\begin{aligned} V_{QUAD} = V_S - V_T &= A_0 \sqrt{3} \left( \cos\left( 2\pi \frac{d_{(x,y)}}{\lambda} - \frac{2\pi}{6} \right) - \cos\left( 2\pi \frac{d_{(x,y)}}{\lambda} + \frac{2\pi}{6} \right) \right) \\ &= A_0 \sqrt{3} * 2\sin 2\pi \frac{d_{(x,y)}}{\lambda} \sin\left( -\frac{2\pi}{6} \right) \\ &= A_0 3 \sin 2\pi \frac{d_{(x,y)}}{\lambda} \end{aligned} \quad (13)$$

After identifying the applicable quarter-wavelength measurement-value quadrant within an incremental wavelength λ, the interpolated quadrature phase position within the quarter wavelength is then calculated by:

$$\frac{V_{QUAD}}{-V_R} = \sqrt{3} * \tan\left( 2\pi \frac{d_{(x,y)}}{\lambda} \right). \quad (14)$$

Finally, solving for the interpolated interferometric measurement value $d_{(x,y)}$ within the applicable quarter-wavelength measurement-value quadrant generates:

$$d_{(x,y)} = \frac{\lambda}{2\pi} * \tan^{-1}\left( \frac{V_{QUAD}}{-V_R * \sqrt{3}} \right), \text{ and} \quad (15)$$

and

$$d_{(x,y)} = \frac{\lambda}{2\pi} * \tan^{-1}\left(\frac{\left(I_{Q0(x.y)} - I_{Q240(x.y)}\right) - \left(I_{Q120(x.y)} - I_{Q0(x.y)}\right)}{-\left(I_{Q240(x.y)} - I_{Q120(x.y)}\right)*\sqrt{3}}\right). \qquad (16)$$

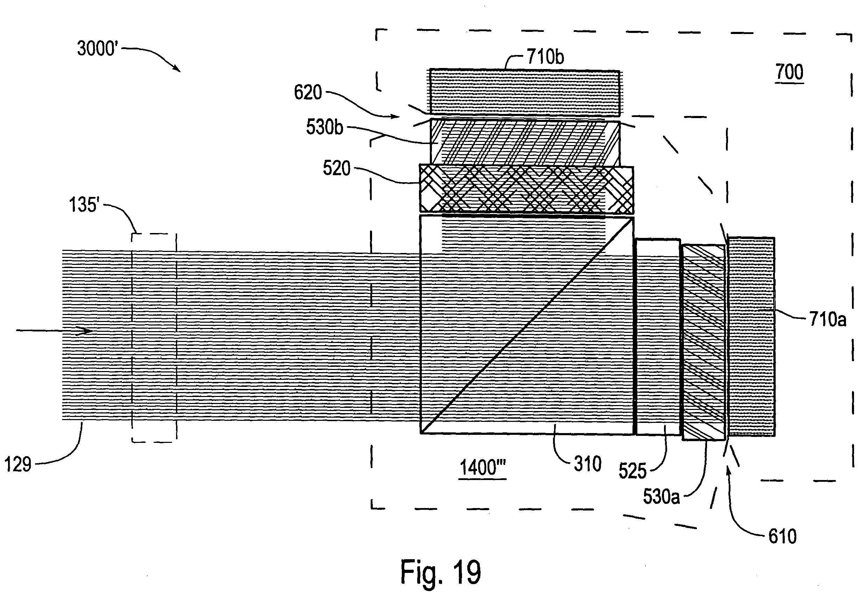

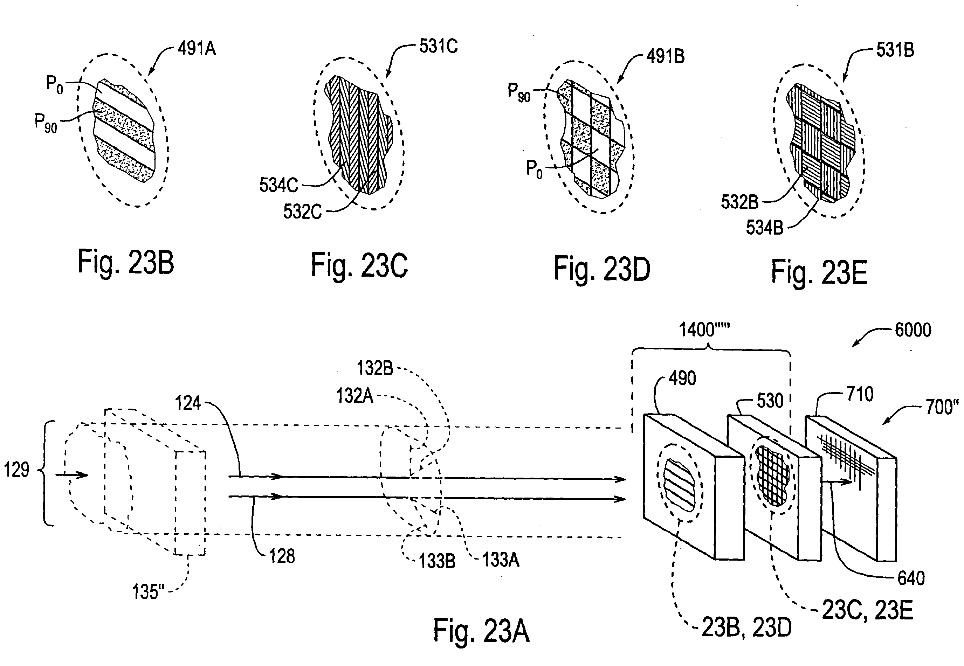

Fig. 18 illustrates a portion of one exemplary embodiment of a high-density polarizer array 530 according to this invention. The high-density polarizer array 530 is usable in various exemplary embodiments of the multiple phase-shift generating structure 1400'" and 1400"", as described below with respect to the fourth and fifth exemplary embodiments 3000' and 4000' of a phase-shift imaging element according to this invention that is shown in Figs. 19-22. The high-density polarizer array 530 is also usable in various exemplary embodiments of the multiple phase-shift generating structure 1400""", as described below with respect to the sixth exemplary embodiment 6000 of a phase-shift imaging element according to this invention that is shown in Fig. 23. It should be appreciated that the exemplary embodiments 3000' and 4000' and similar phase-shift imaging elements according to this invention, similarly to the exemplary embodiments 3000 and 4000 described above with respect to Figs. 6-16, are usable in place of the multiple phase-shift image generating apparatus 200 shown in Figs. 2-5 and, more generally, as the multiple phase-shift image generating portion 160 described with reference to Fig. 1.

As shown in Fig. 18, the high-density polarizer array 530 includes alternating first polarization portions 532 and second polarization portions 534. In particular, as shown in Fig. 18, the first and second polarization portions 532 and 534 alternate in both the horizontal and vertical directions of the high-density polarizer array 530. This creates a checkerboard placement of the first and second polarization portions 532 and 534. In various exemplary embodiments, when the high-density polarizer array 530 is incorporated into various embodiments of the phase-shift imaging element 6000 according to this invention, the checkerboard pattern of first and second polarization portions 532 and 534 extends to cover substantially the entire surface area of each portion of the detector device 710 used to implement the detector subsystem 700.

The first polarization portions 532 and second polarization portions 534 of the high-density polarizer array 530 may be formed by any known or later-developed method of fabrication. In particular, the only manufacturing requirement is that the first polarization portions 532 and second polarization portions 534 be fabricated in relatively high-density arrays. Specifically, the dimensions of the first polarization portions 532 and second polarization portions 534 must be able to approach the dimensions of one pixel, or a small group of pixels, of an optical detector array, as described further below. In various exemplary embodiments according to this invention, as shown in Fig. 18, each of the first and second polarization portions 532 and 534 is implemented using a wire grid polarizing element formed by an array of parallel conductive elements 536 separated by spaces 538. U.S. Patents 6,108,131, 6,122,103 and 6,243,199 disclose systems and methods for forming such wire grid polarizing elements.

It should be appreciated that, as shown in Fig. 18, the first and second polarization portions 532 and 534, respectively, transmit horizontally and vertically polarized components of an incident light wavefront. However, more generally, it should be appreciated that the polarization directions of the first and second polarization portions 532 and 534 are arbitrarily selectable in combination with the complementary elements of a multiple phase-shift generating structure according to this invention. However, in various exemplary embodiments, the polarization directions for the first and second polarization portions 532 and 534 will be rotated by 45 degrees relative to the two orthogonally polarized incident wavefronts 124 and 128 comprising the combined wavefront 129, and will be mutually orthogonal, to obtain the best relevant contrast in the resulting images.

Thus, in various exemplary embodiments, when the two orthogonally polarized incident wavefronts 124 and 128 are oriented along the polarization directions 132A and 133A as shown in Fig. 13, the parallel conductive elements 536 and spaces 538 in the first polarization portions 532 will be oriented along a 45 degree angle. Likewise, when the two orthogonally polarized incident wavefronts 124 and 128 are oriented along the polarization directions 132A and 133A, as shown in Fig. 13, the parallel conductive elements 536 and spaces 538 in the second polarization portions 534 will be oriented along an orthogonal 45 degree angle.

It should also be appreciated that, in the exemplary embodiment shown in Fig. 18, the replication directions of the first and second polarization portions 532 and 534 are arranged horizontally and vertically. However, more generally, the replication directions of each of the first and second polarization portions 532 and 534 are completely controllable and selectable in combination with the complementary elements of a multiple phase-shift generating structure according to this invention. In various exemplary embodiments, the first and second polarization portions 532 and 534 will be of equal size and shape and will cover equal portions of the detector device 710.

In various exemplary embodiments, each of the first or second polarization portions 532 and 534 will extend over an integer number of pixels of the detector device 710. In various exemplary embodiments, the boundaries of the first and second polarization portions 532 and 534 will be aligned with the boundaries between the pixels of the detector device 710. Thus, in such exemplary embodiments, each pair or set of the first and second polarization portions 532 and 534 define unit cells within the high-density polarizer array 530 and the detector device 710. At one extreme, each of the respective first and second polarization portions 532 and 534 can be associated with and aligned with a respective single pixel of the detector device 710.

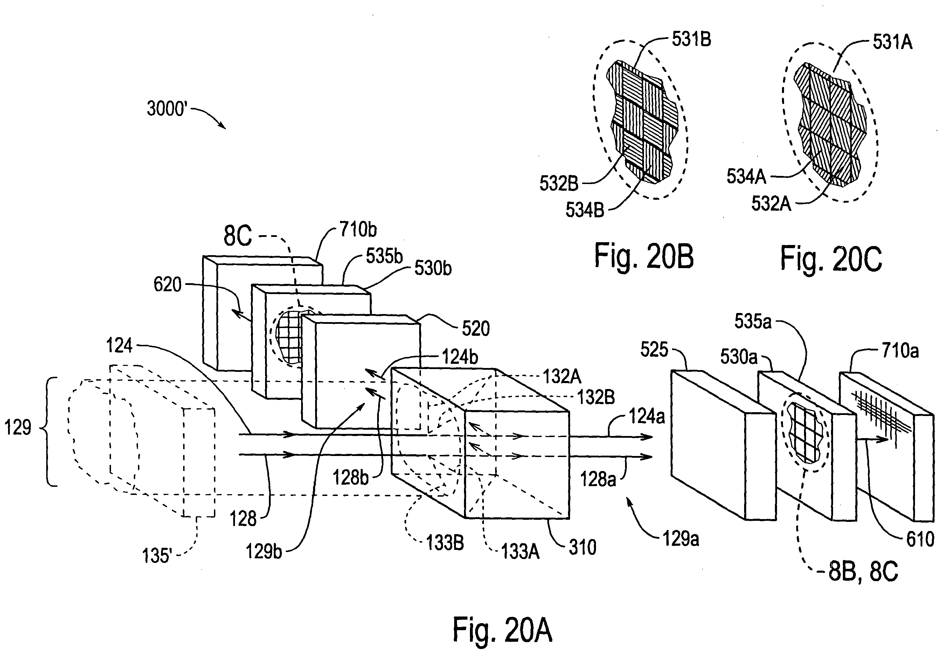

Figs. 19 and 20 illustrate a fourth exemplary phase-shift imaging element 3000' according to this invention. As shown in Fig. 19, the phase-shift imaging element 3000' includes a fourth exemplary embodiment of a multiple phase-shift generating structure 1400'" according to this invention and the first exemplary embodiment of the detector subsystem 700 described above, which includes the detector devices 710a and 710b. In the fourth exemplary embodiment shown in Figs. 19 and 20, the fourth multiple phase-shift generating structure 1400'" incorporates a pair of high-density polarizer arrays 530a and 530b according to this invention. The fourth exemplary embodiment of the multiple phase-shift generating structure 1400'" also includes the beam splitter 310, a quarter-wave plate 520 and a blank or neutral plate 525.

The blank or neutral plate 525 and the first high-density polarizer array 530a are adjacent to the beam splitter 310 along a first direction. Along this first direction, the multiple phase-shift generating structure 1400'" generates multiple phase-shifted interference image information 610 at its interface with the detector device 710a. The quarter-wave plate 520 and the second high-density polarizer array 530b are adjacent to the beam splitter 310 along a second direction. Along this second direction, the multiple phase-shift generating structure 1400'" generates multiple phase-shifted interference, image information 620' at its interface with the detector device 710b.

Elements 135' and 310 shown in Fig. 20 operate identically with respect to the wavefront 129 as elements 135' and 310 shown in Fig. 8. Thus, a description of the operation of these elements will not be repeated. However, it should be appreciated that, in contrast to the exemplary embodiment shown in Fig.8, in the exemplary embodiment shown in Fig. 20, the beamsplitter 310 directs the sub-wavefront 129a to the neutral plate 525 and the high-density polarizer array 530a along one direction. Similarly, as shown in Fig. 20, the sub-wavefront 129b is directed to the quarter-wave plate 520 and the high-density polarizer array 530b along the other direction.

The quarter-wave plate 520 and the neutral or blank plate 525 operate similarly to the quarter-wave plate 223 and the blank or neutral plate 224 of the first portion 222 of the phase-shifting interference element 220 shown in Figs. 2-4. However, in contrast to the phase-shifted-image generating apparatus 200 disclosed in the 330 patent and described with reference to Figs. 2-5, in the exemplary phase shift imaging element 3000' according to this invention, the quarter-wave plate 520 is filled with a single sub-wavefront and the neutral or blank plate 525 is similarly filled with a single sub-wavefront.

Like the quarter-wave plate 223, the quarter-wave plate 520 shifts the relative phase between the two orthogonally polarized sub-wavefront components 124b and 128b comprising the combined sub-wavefront 129b by 90° to produce a phase-shifted combined sub-wavefront. Similarly, like the blank or neutral wave plate 224, the blank or neutral plate 525 matches the optical path length of the quarter-wave plate 520, but does not shift the relative phase between the two orthogonally polarized incident sub-wavefront components 124a and 128a comprising the combined sub-wavefront 129a.

The combined sub-wavefront 129a passing out of the blank or neutral plate 3525 is then directed onto the high-density polarizer array 530a. The high-density polarizer array 530a transmits the orthogonally polarized sub-wavefront components 124a and 128a of the combined sub-wavefront 129a differently in the first polarizing portions 532 and the second polarizing portions 534. As a result, the multiple phase-shifted interference image information 610 includes a checkerboard pattern of first interference portions and second interference portions interleaved at a high spatial frequency corresponding to the checkerboard pattern of the first polarizing portions 532 and the second polarizing portions 534.

In various exemplary embodiments, the polarizing elements of the first polarizing portions 532 and the second polarizing portions 534, such as the parallel conductive elements 536 separated by spaces 538, as shown in Fig. 18, or polarizing films, or the like, are provided on the surface 535a of the high-density polarizer array 530a that is nearest to the surface of the detector device 710a, as shown by the exploded view shown in Fig. 20. Similarly, the polarizing elements of the first polarizing portions 532 and the second polarizing portions 534, are provided on the surface 535b of the high-density polarizer array 530b that is nearest to the surface of the detector device 710b.

It should be appreciated that, in various other exemplary embodiments, the high-density polarizer array 530a may be fabricated directly on the surface of the blank or neutral plate 525 that is closest to the detector device 710a. Similarly, in various exemplary embodiments, the high-density polarizer array 530b may be fabricated directly on the surface of the quarter-wave plate 520 that is closest to the detector device 710b. Thus, it should be appreciated that, in various exemplary embodiments, the structures and/or functions of the high-density polarizer arrays 530a and/or 530b may be merged with and/or indistinguishable from the corresponding the quarter-wave plate 520 and/or the blank or neutral plate 525. In particular, in various exemplary embodiments the structure and function of the blank or neutral plate 525 may be provided by a substrate of the high-density polarizer array 530a.

It should be appreciated that, in various other exemplary embodiments, the high-density polarizer arrays 530a and/or 530b may be fabricated directly on the surface of the detector devices 710a and 710b, respectively. When the high-density polarizer 530a or 530b is a wire-grid polarizer, a thin insulating layer should be used between the active portions of the detector device 710a or 710b and the elements of the wire-grid polarizer. Thus, it should be appreciated that, in various exemplary embodiments, the structure and function of the high-density polarizer arrays 530a and/or 530b and the detector devices 710a and/or 710b, respectively, may be merged.

In various exemplary embodiments, the polarizing elements of the high-density polarizer arrays 530a and 530b are separated from the surface of the detector elements of the detector devices 710a and 710b, respectively, by only a thin film insulating layer or a negligible air gap, or the like. In such "abutting" embodiments, the best alignment between the first and second polarizing portions 532 and 534 and the detector elements of the detector devices 710a and 710b is facilitated, and "leakage" of interference light of different relative phases between adjacent detector elements or pixels is reduced, and, ideally, minimized. Furthermore, when the polarizing elements of the first polarizing portions 532 and the second polarizing portions 534 are wire grid polarizing elements, any diffraction effects associated with each element will be confined to, and averaged by, the abutting pixel(s), and thus will not disturb the acquired multiple phase-shifted interference image information 610 and/or 620.

In various implementations of the fourth exemplary embodiment of the phase-shift imaging element 3000', the reference wavefront 124 and the object wavefront 128 are polarized along the orthogonal directions 132A and 133A shown in Fig. 20. In such implementations, the high-density polarizer arrays 530a and 530b include a pattern 531A, which includes the first polarizing portions 532A and the second polarizing portions 534A, having respective polarization directions as indicated by the respective "grid lines" in the detailed view of the pattern 531A. In such a case, it should be appreciated that the first polarization portions 532A and the second polarization portions 534A function similarly to the first polarizing portions 227 and the second polarization portions 228, respectively, as described above with reference to Fig. 3. As a result, the high-density polarizer array 530a transmits the multiple phase-shifted interference image information 610. Similarly, the high-density polarizer array 530b transmits the multiple phase-shifted interference image information 620'.

As a result, as discussed above with respect to Fig. 8, the multiple phase-shifted interference image information 610 includes the checkerboard pattern of "$Q_0$" and "$Q_2$" interference portions. In this case, however, the "$Q_0$" interference portions corresponding to a relative phase shift of zero degrees between the sub-wavefront components 124a and 128a that pass through the blank or neutral plate 525 and the first polarization portions 532A of the high-density polarizer array 530a. The "$Q_2$" interference portions corresponding to a relative phase shift of 180 degrees between the sub-wavefront components 124a and 128a that pass through the blank or neutral plate 525 and the second polarization portions 534A of the high-density polarizer array 530a.

In a first exemplary implementation, the $Q_0$ and $Q_2$ interference portions correspond to the pattern 531A of the first polarizing portions 532A and the second polarizing portions 534A, respectively, of the high-density polarizer array 530a. Thus, the $Q_0$ and $Q_2$ interference portions within the multiple phase-shifted interference image information 610 are interleaved in a checkerboard pattern at a high spatial frequency corresponding to the pattern 531A. It should be appreciated that this checkerboard pattern of $Q_0$ and $Q_2$ interference portions corresponds to a high-density interleaving of the $Q_0$ quadrant 232 and the $Q_2$ quadrant 236 shown in Fig. 4, transmitted as a single image onto the surface of the detector device 340a.

Similarly as discussed above with respect to Fig. 8, the multiple phase-shifted interference image information 620 includes a checkerboard pattern of "$Q_1$" and "$Q_3$" interference portions. The $Q_1$ interference portions correspond to a relative phase shift of 90 degrees between the phase-shifted sub-wavefront components 124b and 128b that pass through the quarter-wave plate 520 and the first polarization portions 532A of the high-density polarizer array 530b. In contrast, the $Q_3$ interference portions correspond to a relative phase shift of 270 degrees between the phase-shifted sub-wavefront components 124a and 128a that pass through the quarter-wave plate 520 and the second polarization portions 534A of the high-density polarizer array 530b.

In the first exemplary embodiment, the $Q_1$ and $Q_3$ interference portions correspond to the pattern 531A of the first polarizing portions 532A and the second polarizing portions 534A, respectively, of the high-density polarizer array 530b. Thus, the $Q_1$ and $Q_3$ interference portions within the multiple phase-shifted interference image information 620 are interleaved in a checkerboard pattern at a high spatial frequency corresponding to the pattern 531A. It should be appreciated that this checkerboard pattern of $Q_1$ and $Q_3$ interference portions corresponds to a high-density interleaving of the $Q_1$ quadrant 234 and the $Q_3$ quadrant 238 shown in Fig. 4, transmitted as a single image onto the surface of the detector device 710b.

In a second exemplary implementation of the fourth exemplary embodiment of the phase-shift imaging element 3000', the reference wavefront 124 and the object wavefront 128 are polarized along the orthogonal directions 132B and 133B shown in Fig. 20. In this second exemplary embodiment, the high-density polarizer arrays 530a and 530b include the first polarizing portions 532B and the second polarizing portions 534B include a pattern 531B, which includes the first polarizing portions 532B and the second polarizing portions 534B, having respective polarization directions as indicated by the respective "grid lines" in the detailed view of the pattern 531B. In such a case, it should be appreciated that all of the interacting polarization directions for each respective element of this second exemplary embodiment are rotated by the same 45 degree angle compared to their counterpart elements in the fourth exemplary embodiment of the phase-shift imaging element 3000' described above.

Thus, it should be appreciated that, in various exemplary embodiments, this second exemplary implementation operates in substantially the same manner as the first exemplary implementation of the fourth exemplary embodiment of the phase-shift imaging element 3000' described above. As a result, in various exemplary embodiments, the multiple phase-shifted interference image information 610 and the multiple phase-shifted interference image information 620 provided by this second exemplary implementation of the fourth exemplary embodiment of the of the phase-shift imaging element 3000' include the same checkerboard patterns described above with respect to the first exemplary implementation of the fourth exemplary embodiment of the phase-shift imaging element 3000'.

It should be appreciated that, as shown in Fig. 19, because the fourth exemplary embodiment of the multiple phase shift generating structure 1400'" and the fourth exemplary embodiment of the phase shift imaging element 3000' are each monolithic or integrated structures, the various optical paths shown in Figs. 19 and 20 are not independent of each other. That is, any vibrations or other rotational and/or translational motions that may be encountered are inherently equally applied to all of the optical paths. Thus, any errors created by such rotational and/or translational motions are common-mode errors, and thus do not affect the accuracy of the determined measurements generated by the control system 170.

Furthermore, it should be appreciated that the "0° relative phase shift" interference portions, referred to as the $Q_0$ interference portions, and the "180° relative phase shift" interference portions, referred to as the $Q_2$ interference portions, are interleaved in a high spatial frequency checkerboard pattern across the surface of the detector device 710a. As a result, it should be appreciated that the various non-common mode errors present in the multiple phase shifted-image generating apparatus 200 shown in Figs. 2-5, due to spatial separation of phase-shifted interferograms 600a and 600c in the $Q_0$ and $Q_2$ quadrants, are reduced, and, ideally, are eliminated. That is, because the 0° and 180° phase shift interference portions are adjacent to each other at each location throughout the detector device 710a, it can be assumed that each location is imaging substantially the same portion of portion of the object 130 in the 0° and 180° phase shift interference portions at each location. Furthermore, for the pixels at each location, inconsistencies in the transfer function from the incident light intensity to the output signal amplitude are reduced, and, ideally, are minimal. Thus, in various exemplary embodiments, errors related to these factors are reduced and/or minimized, and in many exemplary embodiments, ideally, are eliminated.

It should be appreciated that, in various exemplary embodiments according to this invention, such benefits arise because multiple phase-shifted interference image information 600 is provided for multiple phases within a small region on a detector subsystem 150. Stated another way, in various exemplary embodiments according to this invention, such benefits arise because a single image arising from a single sub-wavefront includes information for each of two or more different relative phase shifts, and that information is interleaved throughout the image. It should be appreciated that, in various exemplary embodiments according to this invention, the same benefits are derived from the "90° relative phase shift" interference portions, referred to as the $Q_1$ interference portions, and the "270° relative phase shift" interference portions, referred to as the $Q_3$ interference portions, that are interleaved in a high spatial frequency checkerboard pattern across the surface of the detector device 710b, for the same reasons.

It should be appreciated that the fourth exemplary embodiment of the multiple phase shift generating structure 1400'" and the fourth exemplary embodiment of the phase shift imaging element 3000' provide two different phases of relative phase-shift interference information arising from a single image that is derived from a single sub-wavefront. Similarly, the fourth exemplary embodiment of the multiple phase shift generating structure 1400'" and the fourth exemplary embodiment of the phase shift imaging element 3000' provide four different phases of relative phase-shift interference information arising from only two spatially-separated images that are each respectively derived from a single respective sub-wavefront.

In various exemplary embodiments, the components of the fourth exemplary embodiment of the phase-shift imaging element 3000' are selected and assembled to insure that the optical path lengths of the combined sub-wavefronts 129a and 129b are substantially equal. Thus, any focusing, aperture, and/or magnification properties, or the like, of the optical input portion 135' will produce the same image effects at the detector devices 710a and 710b. In various such exemplary embodiments, the neutral or blank plate 525 is omitted, but the high-density polarizer array 530a and the detector device 710a are rigidly set at a spacing that provides and optical path length equal to that of the quarter-wave plate 520.

In addition, in various exemplary embodiments, the detector devices 710a and 710b are selected as a matched set and/or calibrated to match the outputs of comparable detector elements of pixels between the two detector devices. It should be appreciated that using two detector devices allows the image of each respective sub-wavefront or image of the multiple phase-shifted interference image information 610' and 620 to be larger than can be obtained if both images are imaged into spatially separated regions of a single similarly-sized detector device. The available signal and spatial resolution of the fourth exemplary embodiment of the phase shift imaging element 3000' are improved accordingly.

However, this exemplary embodiment does have a partial disadvantage, in that differences in the nominal image light intensity and/or inconsistencies in the transfer function from the incident light intensity to the output signal amplitude may be present between the comparable detector elements or pixels of the different detector devices. It should be appreciated that due to such differences, some residual non-common mode errors remain in some, but not all, of the operations associated with the measurements generated by the control system 170. It should be appreciated further, that these residual errors are reduced in the various exemplary embodiments described above that match and/or calibrate the two detector devices.

It should be appreciated that the various advantages and operational issues set forth with respect to Eqs. (1)-(4) outlined above with respect to Figs. 7 and 8 are equally applicable to the exemplary embodiment shown in Figs. 19 and 20, and will be readily appreciated by those of ordinary skill in the art. Thus, a detailed application of Eqs. (1)-(4) to the embodiment shown in Figs. 19 and 20 will be omitted.

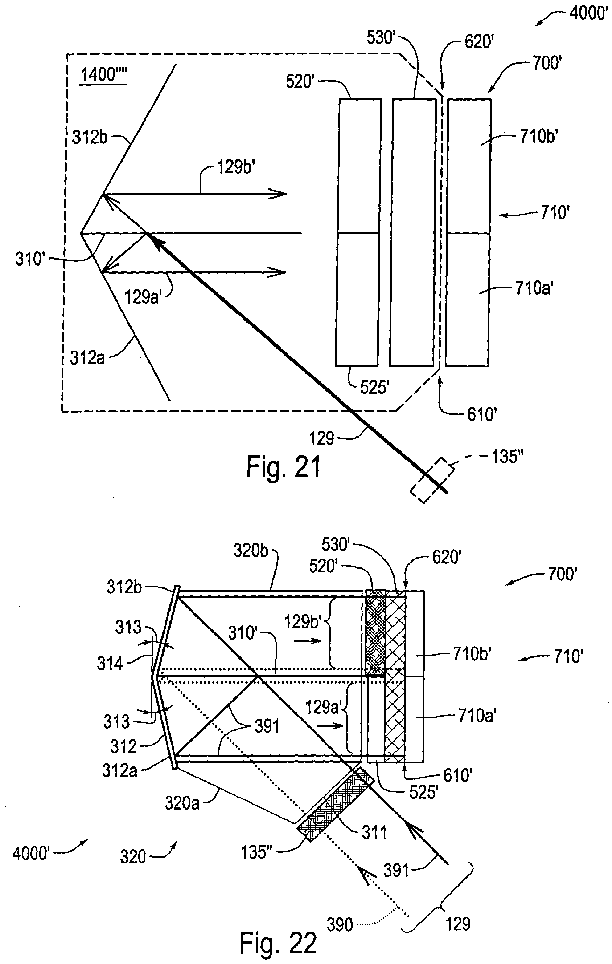

Figs. 21 and 22 are plan views that illustrate a fifth exemplary embodiment of a phase-shift imaging element 4000' according to this invention. As schematically shown in Fig. 21, the fifth exemplary embodiment of the phase-shift imaging element 4000' includes a fifth exemplary embodiment of a multiple phase-shift generating structure 1400'''' according to this invention and the detector subsystem 700'. The fifth exemplary embodiment of the multiple phase-shift generating structure 1400'''' incorporates a pair of high-density polarizer array elements 530a' and 530b' according to this invention. The fifth exemplary embodiment of the multiple phase-shift generating structure 1400'''' also includes the beam splitting surface 310', the reflective surfaces 312a and 312b, a blank or neutral plate 325' and a quarter-wave plate 320'.

It should be appreciated that the common elements in the exemplary embodiments shown in Figs. 10 and 21, and in Figs. 11 and 22 operate identically. Accordingly, the description of these elements will not be repeated. In the fifth exemplary embodiment of the phase-shift imaging element 4000' shown in Figs. 21 and 22, the blank or neutral plate 525', a first portion of the high-density polarizer array 530', and the detector device portion 710a are aligned to receive and process the sub-wavefront 129a' along the first optical path on one side of the beam splitting surface 310'. Along this first optical path, the multiple phase-shift generating structure 1400'''' generates multiple phase-shifted interference image information 610' at its interface with the detector device portion 710a'. Similarly, the quarter-wave plate 520', a second portion of the high-density polarizer array 530', and the detector device portion 710b' are aligned to receive and process the sub-wavefront 129b' along the second optical path on the other side of the beam splitting surface 310'. Along this second optical path, the multiple phase-shift generating structure 1400'''' generates multiple phase-shifted interference image information 620' at its interface with the detector device portion 710b'.

It should be appreciated that the various advantages and operational issues outlined above with respect to Figs. 10 and 11, as well as those outlined above with respect to Figs. 19 and 20 are equally applicable to the exemplary embodiment shown in Figs. 21 and 22, and will be readily appreciated by those of ordinary skill in the art. In particular, the operational and analysis issues outlined above relative to Figs. 10 and 11 with respect to Eqs. (1)-(4) also apply to the exemplary embodiment shown in Figs. 21 and 22. Thus, a detailed application of Eqs. (1)-(4) to the embodiment shown in Figs. 21 and 22 will be omitted.

Fig. 23 is an exploded view illustrating a sixth exemplary embodiment of a phase-shift imaging element 6000 according to this invention. As shown in Fig. 23, the phase-shift imaging element 6000 includes a sixth exemplary embodiment of a multiple phase-shift generating structure 1400''''' according to this invention and a detector subsystem 700''. In various exemplary embodiments, a single detector 710 of any suitable known or later-developed type is used to implement the detector subsystem 700''. As shown in Fig. 23, the multiple phase-shift generating structure 1400''''' incorporates any of the high-density phase-shifting array element elements 410 or 430 described above or a high-density phase-shifting array element 490 according to this invention, combined with the high-density polarizer array 530 according to this invention. As in the third exemplary phase-shift imaging element 5000 previously described with respect to Fig. 13, no beam splitter is required in the phase-shift imaging element 6000.

As shown in Fig. 23, the combined wavefront 129 is transmitted by the optical input portion 135''. The transmitted combined wavefront 129 includes the reference wavefront 124 and the object wavefront 128. The transmitted combined wavefront 129 propagates as a single wavefront that fills the high-density phase-shifting array element 490, which provides the combined functions of two interleaved retarder plates having a quarter-wave retardation difference between them, as described in detail below. Thus, in various exemplary embodiments, the transmitted combined wavefront 129 that propagates from the high-density phase-shifting array element 490 includes an interleaved pattern of at least two phase-shift portions having different relative phase-shifts that are separated by 90 degrees of relative phase shift.

The transmitted combined wavefront 129 passing out of the high-density phase-shifting array element 490, including the interleaved pattern of 90-degree-different relative phase-shifts, is directed onto the high-density polarizer array 530. As described above with respect to Figs. 18-22, in various exemplary embodiments one of the first and second polarization portions 532 and 534 of the high-density polarizer array 530 is oriented to transmit and interfere the in-phase components of the orthogonally polarized components 124 and 128 in various portions of the transmitted combined wavefront 129 passing out of the high-density phase-shifting array element 490 and having a first one of the different relative phase-shifts that are separated by 90 degrees. Similarly, the other of the first and second polarization portions 532 and 534 of the high-density polarizer array 530 is orthogonally oriented to transmit and interfere the out-of-phase components of the orthogonally polarized components 124 and 128 in various portions of the transmitted combined wavefront 129 passing out of the high-density phase-shifting array element 490 and having a second one of the different relative phase-shifts that are separated by 90 degrees.

As a result, in various exemplary embodiments, a 2-dimensionally interleaved pattern of $Q_0$-$Q_3$ interference portions is produced in the multiple phase-shifted interference image information 640 that passes out of the polarizer array element 530. This 2-dimensionally interleaved pattern of $Q_0$-$Q_3$ interference portions is received as a single image that extends substantially over the entire surface area of the detector device 710 that is used to implement the detector subsystem 700".

In various exemplary embodiments, similar to various embodiments described above, the patterned surface of the high-density phase-shifting array element 490 is oriented towards the polarizer element 530 and the detector 710. More generally, in various exemplary embodiments, the respective fabrication, orientation and assembly of the high-density phase-shifting array element 490, the polarizer element 530 and the detector 710 can be similar to any of the various embodiments previously described for the respective fabrication, orientation and assembly of the corresponding elements of the phase-shift imaging elements 3000 and 4000, described above with reference to Figs. 7, 8, 10 and 11. In various exemplary embodiments, regardless of their respective fabrication methods, the polarizer element 530, the high-density phase-shifting array element 490 and the detector 710 are effectively bonded or joined together to form the phase-shift imaging element 6000 shown in Fig. 23 as a monolithic phase-shift imaging element.

It should be appreciated that, in various exemplary embodiments according to this invention, it is advantageous to fabricate the polarizer element 530, the high-density phase-shifting array element 490 and the detector 710 such that each portion of the effective optical path length of the combined wavefront 129 are as similar as possible, and ideally, equal. It should be appreciated that, in various exemplary embodiments, a distance d (not shown) between the active portion of the high-density phase-shifting array element 490 and a detector surface of the detector device 710 should be less than the maximum depth of focus of the image that is presented at the detector device 710. In various exemplary embodiments, the distance d is approximately 1-2 mm or less. In various other exemplary embodiments, the distance d is less than 0.2 mm.

In various exemplary embodiments, the high-density polarizer array 530 includes a pattern of first polarizing portions 532 and second polarizing portions 534 that complement a pattern of zero-degree phase-shift portions $P_0$ and 90-degree phase-shift portions $P_{90}$ included in the high-density phase-shifting array element 490. The complementary patterns of the high-density phase-shifting array element 490 and the high-density polarizer array 530 combine to produce a desired 2-dimensionally interleaved pattern of first, second, third and fourth relative-phase interference portions that are interleaved at a high spatial frequency in the multiple phase-shifted interference image information 640.

In such embodiments, it should be appreciated that the 2-dimensionally interleaved pattern of first, second, third and fourth relative-phase interference portions in the multiple phase-shifted interference image information 640 corresponds to a high-density interleaving of the $Q_0$-$Q_3$ quadrants, 232-238, shown in Fig. 4, transmitted as a single image onto the surface of the detector device 710 that is used to implement the detector subsystem 700". Various exemplary embodiments of such complementary patterns, and the various resulting exemplary embodiments of the multiple phase-shifted interference image information 149' are described in greater detail below.

In a first exemplary implementation of the phase-shift imaging element 6000, the reference wavefront 124 and the object wavefront 128 are polarized along the orthogonal directions 132A and 133A shown in Fig. 23. In this first exemplary implementation, the high-density polarizer array 530 includes a pattern 531C, which includes the strip-like first polarizing portions 532C and the strip-like second polarizing portions 534C, having respective polarization directions as indicated by the respective "grid lines" in the detailed view of the pattern 531C.

In this exemplary implementation, when the high-density polarizer array 530 includes the pattern 531C, the first exemplary implementation of the sixth exemplary embodiment of the phase-shift imaging element 6000 includes the high-density phase-shifting array element 490, which includes a pattern 491 A. The pattern 491 A, as shown in the detailed view shown in Fig. 23B, includes alternatingly-arranged strip-like zero-degree phase-shift portions $P_0$ and strip-like 90-degree phase-shift portions $P_{90}$. In various exemplary embodiments, the strip-like zero-degree phase-shift portions $P_0$ and strip-like 90-degree phase-shift portions $P_{90}$ of the high-density phase-shifting array element 490 are fabricated by forming the appropriate thickness in a birefringent material layer or a birefringent substrate according to any of the previously described methods, such as the strip-like embodiments shown in Fig. 14. However, it should be appreciated that, in this particular exemplary implementation, the fast axis direction of the birefringent material layer or a birefringent substrate is everywhere uniformly vertical, as in the embodiment shown in Fig. 15.

In such exemplary implementations, it should be appreciated that the first polarization portions 532C function to transmit and interfere the in-phase components of the orthogonally polarized components 124 and 128 in the transmitted combined wavefront 129 passing out of the high-density phase-shifting array element 490. Similarly, the second polarization portions 534C function to transmit and interfere the out-of-phase components of the orthogonally polarized components 124 and 128 in the transmitted combined wavefront 129 passing out of the high-density phase-shifting array element 490. The structure of the multiple phase-shifted interference image information 640 corresponding to this exemplary embodiment is further described with reference to Fig. 24, below.

In a second exemplary implementation of the phase-shift imaging element 6000, the reference wavefront 124 and the object wavefront 128 are polarized along the orthogonal directions 132B and 133B shown in Fig. 23. In this second exemplary implementation, the high-density polarizer array 530 includes the pattern 531B, which includes the first polarizing portions 532B and the second polarizing portions 534B, as described above with respect to Fig. 20,.

In this second exemplary implementation, when the high-density polarizer array 530 includes the pattern 531B, the first exemplary implementation of the sixth exemplary embodiment of the phase-shift imaging element 6000 includes the high-density phase-shifting array element 490, which includes a pattern 491B. The pattern 491B, as shown in the detailed view of Fig. 19D, includes a checkerboard pattern of zero-degree phase-shift portions $P_0$ and 90-degree phase-shift portions $P_{90}$. In various exemplary embodiments, the checkerboard pattern of zero-degree phase-shift portions $P_0$ and 90-degree phase-shift portions $P_{90}$ of the high-density phase-shifting array element 490 are fabricated by forming the appropriate thickness in a birefringent material layer or a birefringent substrate according to any of the previously described methods, such as the embodiments shown in Figs. 6 or 15. In this particular exemplary implementation, the fast axis direction of the birefringent material layer or a birefringent substrate is everywhere uniformly vertical, as in the embodiments shown in Figs. 6 and 15.

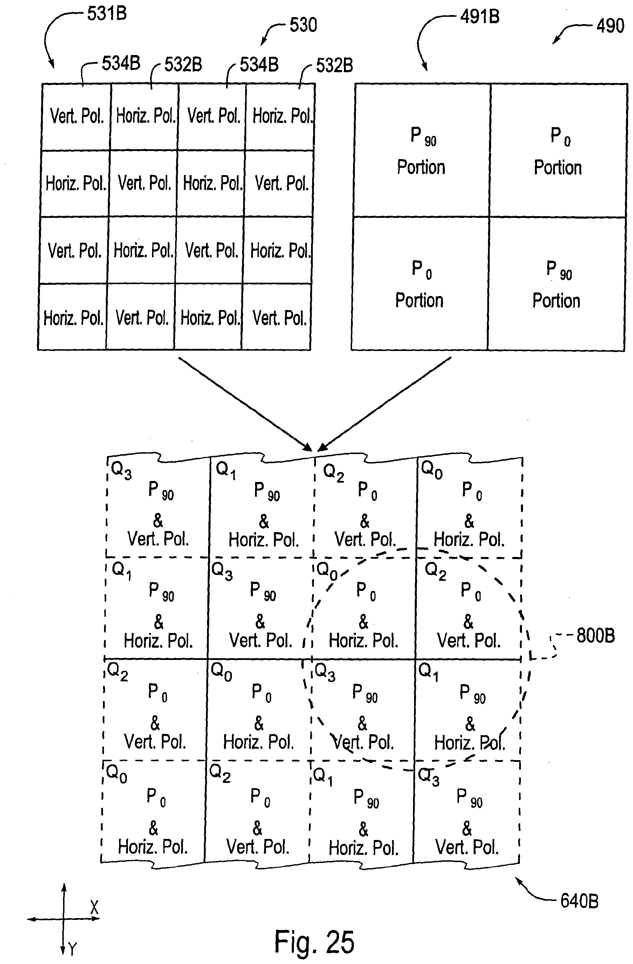

In such exemplary implementations, it should be appreciated that the first polarization portions 532B function to transmit and interfere the in-phase components of the orthogonally polarized components 124 and 128 in the transmitted combined wavefront 129 passing out of the high-density phase-shifting array element 490. Similarly, the second polarization portions 534B function to transmit and interfere the out-of-phase components of the orthogonally polarized components 124 and 128 in the transmitted combined wavefront 129 passing out of the high-density phase-shifting array element 490. The structure of the multiple phase-shifted interference image information 640 corresponding to this exemplary embodiment is further described with reference to Fig. 25, below.

More generally, it should be appreciated that there are a number of usable combinations of patterns of the high-density phase-shifting array element and the high-density polarizer array 530 that can be used in the fourth exemplary embodiment of the phase-shift imaging element 6000. Furthermore, various other alternative methods of fabricating various embodiments of the high-density polarizer array 530 and the high-density phase-shifting array element 490 in various complementary polarization and fast axis and orientations are possible, as will be apparent based on the discussions outlined both above and below. Thus, the foregoing implementations of the sixth exemplary embodiment of the phase-shift imaging element 6000 which uses a high-density polarizer array 530 are exemplary only, and not limiting.

It should be appreciated that various exemplary embodiments of the multiple phase shift generating structures 1400" and 1400"" and the exemplary phase shift imaging elements 5000 and 6000 provide three or more different phases, including but not limited to the three different phases and four different phases disclosed in relation to various exemplary embodiments discussed above and below, of relative phase-shift interference information arising from a single image that is derived from a single undivided wavefront. Thus, it should be appreciated that all of the previously described features and benefits of the various embodiments of the multiple phase-shift generating structure 1400' and the phase-shift imaging element 3000 shown in Figs. 7 and 8, and the multiple phase-shift generating structure 1400' and the phase-shift imaging element 4000 shown in Figs. 10 and 11, are similarly provided by various embodiments of the multiple phase-shift generating structures 1400" and 1400"" and the phase-shift imaging elements 5000 and 6000 shown in Figs. 13 and 23, respectively.

In addition, in various exemplary embodiments, the multiple phase-shift generating structures 1400" and 1400"" and the phase-shift imaging elements 5000 and 6000 shown in Figs. 13 and 23 enjoy an additional advantage in that the high-density phase-shifting array elements 460, 470, 480 or 490 and the like are provided as single elements. Furthermore, because the high-density phase-shifting array elements 460, 470, 480 or 490 and the like allow more than two different "types" of differently phase-shifted interference portions to be provided along a single optical path, that is, within a single image on the detector 710, no beam splitting element is required. This results not only in fewer optical element aberrations and more convenient assembly and/or signal processing, but also in improved matching between the gain characteristics and the like, of all comparable image pixels. This occurs because all comparable pixels are located in the same small region of the detector.

Furthermore, all comparable pixels are located in the same small region of the detector. Accordingly, the optical path lengths from a particular portion of the object to each of the particular corresponding $Q_0$-$Q_3$ interference portions in a particular local portion of the multiple phase-shifted interference image information 630 or 640 are inherently similar. Thus, the related relative phase-shift information and the related measurement determination will generally be insensitive to reasonably expected rotational and/or translational motions of the exemplary phase shift imaging elements 5000 or 6000. As a result, in various exemplary embodiments, both costs and measurement errors are further reduced in the phase-shift imaging elements 5000 and 6000, in comparison to the phase-shift imaging elements 3000, 3000', 4000 and 4000'.

Figs. 24-27 are schematic diagrams illustrating in greater detail patterns and operation of the first and second, as well as third and fourth, particular implementations of the sixth exemplary embodiment of the phase-shift imaging element 6000 shown in Fig. 23 that incorporates, both the high-density polarizer array 530 shown in Figs. 18-22 and the high-density phase-shifting array element 490 according to this invention.

In particular, Fig. 24 is a schematic diagram illustrating the patterns and operation of the first exemplary implementation of the sixth exemplary phase-shift imaging element 6000 described above with reference to Fig. 23. This first exemplary implementation is usable when the reference wavefront 124 and the object wavefront 128 are polarized along the orthogonal directions 132A and 133A shown in Fig. 23. Fig. 24 shows a portion of the exemplary pattern 531C of the high-density polarizer array 530 and, a portion of the exemplary pattern 491A of the high-density phase-shifting array element 490 that is nominally aligned with the portion of the exemplary pattern 531C. These elements have been previously described with reference to the first exemplary implementation of the sixth phase-shift imaging element 6000 shown in Fig. 23.

Fig. 24 also shows a nominally aligned portion of the resulting interleaved pattern 640A of the "$Q_0$-$Q_3$" interference portions in the multiple phase-shifted interference image information 640 that is transmitted as a single image onto the surface of the detector device 710. This interleaved pattern 640A is obtained from the combination of the pattern 531C of the high-density polarizer array 530 and the pattern 491A of the high-density phase-shifting array element 490, as described above with reference to the first exemplary implementation of the sixth exemplary phase-shift imaging element 6000 shown in Fig. 23. The optical generation and characteristics of the various $Q_0$-$Q_3$ interference portions are the same as previously described. A nominal lateral resolution indicator 800A is also shown, as discussed in detail further below.

In various exemplary embodiments, the edges of the $Q_0$-$Q_3$ interference portions in the multiple phase-shifted interference image information 640A are nominally aligned with the edges of detector elements of the detector device 710. That is, each of the $Q_0$-$Q_3$ interference portions are an integer number of pixels high, and an integer number of pixels wide, and are nominally aligned with a corresponding set of pixels. For example, in various exemplary embodiments, when only coarse lateral resolution is required, the integer number of pixels may be on the order of approximately 16 pixels or more. In various exemplary embodiments where finer lateral resolution is required, the integer number of pixels may be on the order of approximately 4-8 pixels. In various exemplary embodiments where the finest lateral resolution is required, the integer number of pixels may be approximately 1-4 pixels. The dimensions of the various elements of the high-density polarizer array 530 and the high-density phase-shifting array element 490 are designed accordingly, and will be apparent to one skilled in the art.

As described above, this first exemplary implementation of the sixth exemplary phase-shift imaging element 6000 provides four different phases of relative phase-shift interference information, that is, the $Q_0$-$Q_3$ interference information portions, arising from a single image. Thus, this first exemplary implementation of the sixth exemplary phase-shift imaging element 6000 provides four separate "phase signals" arising from the four $Q_0$-$Q_3$ interference information portions, similar to the phase signals provided by the phase-shift imaging elements 3000, 3000', 4000 and 4000' described above.

Thus, by analogy with discussions above related to Eq. (2) and Figs. 7, 8, 10, 11 and 19-22, for various exemplary embodiments according to this invention where a single image of the multiple phase-shifted interference image information interleaves the four $Q_0$-$Q_3$ interference information portions, as shown in Fig. 24, for any 2x2 region of four contiguous different interference portions centered at a location (x,y), which will nominally be the interference portions $Q_{3(X,Y)}$, $Q_1(x,y)$, $Q_{0(x,y)}$ and $Q_{2(x,y)}$, one expression comparable to Eq. 10 in the 330 patent and to Eq. (2) above is:

$$\Phi(x,y) = \tan^{-1}\{[I_{Q3(x,y)}-I_{Q1(x,y)}] \, / \, [I_{Q0(x,y)}-I_{Q2(x,y)}]\} \qquad (17)$$

where I indicates the image intensity value for each respective interference portion.

Similarly to the discussion above related to Eqs. (2) and (3), it should be appreciated that, if each respective interference portion corresponds to a set of more than one pixel on the detector, in various exemplary embodiments, the image intensity value I indicates the average or representative intensity value for that entire set of pixels. The entire set of pixels can thus be regarded as a "meta-pixel". It should be appreciated that, in various exemplary embodiments, such meta-pixels have an extent corresponding to the extent of the respective overlapping area combinations of the first and second portions of a high-density polarizer array 530 and the zero degree phase-shift portions $P_0$ and the 90-degree phase-shift portions $P_{90}$ of the pattern 491A of the high-density phase-shifting array element 490 according to this invention. In various exemplary embodiments, such meta-pixels provide one desirable method of spatial averaging usable according to the principles of this invention.

Also similarly to the discussion above related to Eqs. (2) and (3), it should be appreciated that, in various exemplary embodiments, each individual interference portion may be a comparable interference portion involved in a measurement determination at at least four different (x,y) locations corresponding to the four borders of the individual interference portion with the four comparable individual neighboring interference portions that neighbor, e.g., are adjacent to, that individual interference portion.

Furthermore, by analogy with discussions outlined above related to Eq. (3), for any 3x3 region of nine contiguous interference portions centered at a location (x,y) coinciding with the central pixel, the following exemplary alternative expression is also usable:

$$\Phi(x,y) = \tan^{-1}\{[I^{ave}_{Q3(x,y)} - I^{ave}_{Q1(x,y)}] / [I^{ave}_{Q0(x,y)} - I^{ave}_{Q2(x,y)}]\} \qquad (18)$$

where $I^{ave}$ indicates the area-averaged image intensity value for each respective interference portion, regardless of whether there are one, two, or four of the various respective interference portions in the region of nine contiguous interference portions.

It should be appreciated that Eq. (18) averages the pixels on each side of an (x,y) center pixel, which nominally removes the minimal gradient or offset error present in Eq. (17). That is, in various exemplary embodiments, a "comparable average" according to Eq. (18) has a nominal spatial location that, ideally, coincides with the (x,y) center pixel. It should be appreciated that, in various exemplary embodiments, each individual interference portion may be a comparable interference portion involved in a measurement determination at at least eight different (x,y) locations corresponding to the four edge-adjacent comparable neighboring interference portions of that individual interference portion, and the four diagonally-located comparable neighboring interference portions of that individual interference portion.

Based on the foregoing examples and discussion, various modifications and other signal processing methods usable with these and other embodiments according to this invention will be apparent to one skilled in the art.

Fig. 25 is a schematic diagram illustrating the patterns and operation of the second exemplary implementation of the sixth exemplary phase-shift imaging element 6000, as described above with reference to Fig. 23. This second exemplary implementation is usable when the reference wavefront 124 and the object wavefront 128 are polarized along the orthogonal directions 132B and 133B shown in Fig. 23. Fig. 25 shows a portion of the exemplary pattern 531B of the high-density polarizer array 530, and a portion of the exemplary pattern 491B of the high-density phase-shifting array element 490 that is nominally aligned with the portion of the exemplary pattern 531B. These elements have been previously described with reference to the second exemplary implementation of the sixth exemplary phase-shift imaging element 6000 shown in Fig. 23.

Fig. 25 also shows a nominally-aligned portion of the resulting interleaved pattern 640B of $Q_0$-$Q_3$ interference portions in the multiple phase-shifted interference image information 640 that is transmitted as a single image onto the surface of the detector device 710. This interleaved pattern 640B is obtained from the combination of the pattern 531B of the high-density polarizer array 530 and the pattern 491B of the high-density phase-shifting array element 490, as described above with reference to the second exemplary implementation of the sixth exemplary phase-shift imaging element 6000 shown in Fig. 23. The optical generation and characteristics of the various $Q_0$-$Q_3$ interference portions are the same as previously described. A nominal lateral resolution indicator 800B is also shown, as discussed in detail further below.

Similarly to the first exemplary implementation described with reference to Fig. 24, in various exemplary embodiments, the edges of the $Q_0$-$Q_3$ interference portions in the multiple phase-shifted interference image information 640B are nominally aligned with the edges of detector elements of the detector device 710. That is, each of the $Q_0$-$Q_3$ interference portions are an integer number of pixels high, and an integer number of pixels wide, and are nominally aligned with a corresponding set of pixels. The dimensions of the various elements of the high-density polarizer array 530 and the high-density phase-shifting array element 490 are designed accordingly, and will be apparent to one skilled in the art.

It should be appreciated that this second exemplary implementation also provides four separate "phase signals" arising from the four $Q_0$-$Q_3$ interference information portions, similar to the four phase signals provided by the first exemplary embodiment described above. Thus, by analogy with the discussions outlined above related to the first exemplary implementation shown in Fig. 24, Eq. (17) is also usable with this second exemplary implementation, for any 2x2 region of four contiguous different interference portions centered at a location (x,y). However, it should be appreciated that, due to the particular structure of the second exemplary implementation, as shown by the dashed outline lines in the pattern 640B shown in Fig. 25, the centers of regions of four contiguous different interference portions occur only at (x,y) locations coinciding with the centers of the edges between a 90-degree phase-shift portion $P_{90}$ and a zero-degree phase-shift portion $P_0$ in the pattern 491B of the high-density phase-shifting array element 490. Thus, Eq. (17) may only be applied to make measurement determinations at these particular locations for the second exemplary implementation.

However, it should be appreciated that at each (x,y) location midway between the aforementioned (x,y) locations coinciding with the centers of the edges between a 90-degree phase-shift portion $P_{90}$ and a zero-degree phase-shift portion $P_0$, the "averaging " Eq. (18) is usable with this second particular implementation, for a region of eight contiguous interference portions that is 2 interference portions wide along the x direction and 4 interference portions high along the y direction, or vice-verse. Based on the foregoing examples and discussion, various modifications and other signal processing methods usable with the second exemplary implementation will be apparent to one skilled in the art.

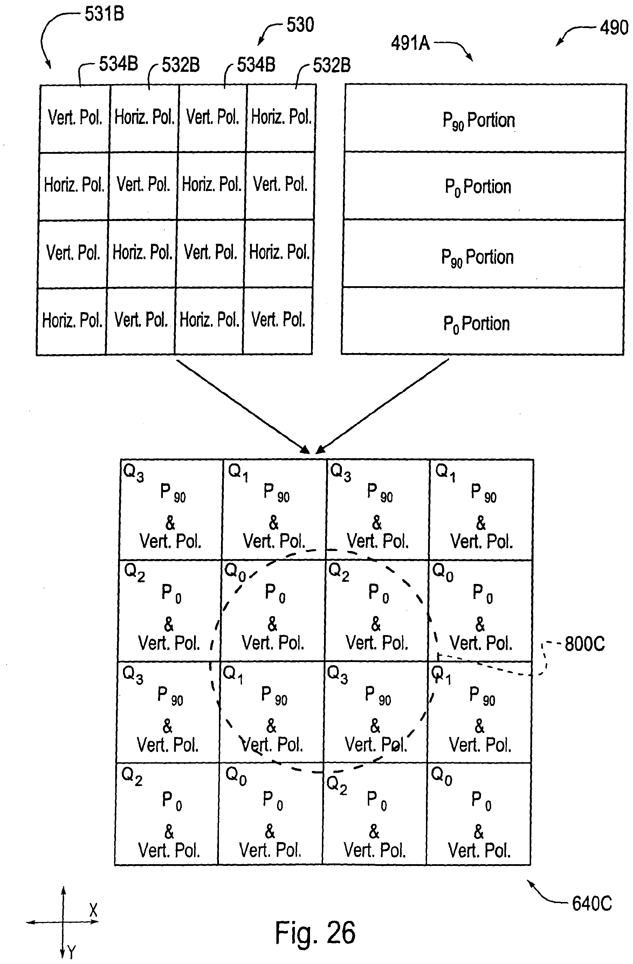

Fig. 26 is a schematic diagram illustrating the patterns and operation of a third exemplary implementation of the sixth exemplary phase-shift imaging element 6000 as described above with reference to Fig. 23. This third exemplary implementation is usable when the reference wavefront 124 and the object wavefront 128 are polarized along the orthogonal directions 132B and 133B shown in Fig. 23. Fig. 26 shows a portion of the exemplary pattern 531B of the high-density polarizer array 530, and a portion of the exemplary pattern 491A of the high-density phase-shifting array element 490 that is nominally aligned with the portion of the exemplary pattern 531B. These elements have been previously described with reference to the first and second exemplary implementations of the fourth exemplary embodiment of the phase-shift imaging element 6000 shown in Fig. 23.

Fig. 26 also shows a nominally-aligned portion of the resulting interleaved pattern 640C of $Q_0$-$Q_3$ interference portions in the multiple phase-shifted interference image information 640 that is transmitted as a single image onto the surface of the detector device 710. This interleaved pattern 640C is obtained from the combination of the pattern 531B of the high-density polarizer array 530 and the pattern 491A of the high-density phase-shifting array element 490, as described above with reference to the sixth exemplary embodiment of the phase-shift imaging element 6000 shown in Fig. 23. The optical generation and characteristics of the various $Q_0$-$Q_3$ interference portions are the same as previously described. A nominal lateral resolution indicator 800C is also shown, as discussed in detail further below.

Similarly to the first exemplary implementation described with reference to Fig. 24, in various exemplary embodiments, the edges of the $Q_0$-$Q_3$ interference portions in the multiple phase-shifted interference image information 640C are nominally aligned with the edges of detector elements of the detector device 710. That is, each of the $Q_0$-$Q_3$ interference portions are an integer number of pixels high, and an integer number of pixels wide, and are nominally aligned with a corresponding set of pixels. The dimensions of the various elements of the high-density polarizer array 530 and the high-density phase-shifting array element 490 are designed accordingly, and will be apparent to one skilled in the art.

It should be appreciated that this third exemplary implementation provides four separate "phase signals" arising from the four $Q_0$-$Q_3$ interference information portions, similar to the four phase signals provided by the first exemplary implementation described above with respect to Fig. 24. Despite a minor difference in the arrangement of the four $Q_0$-$Q_3$ interference information portions between the pattern 640A of the first exemplary implementation shown in Fig. 24 and the pattern 640C of this third exemplary implementation, Eq. (17) is similarly usable with this third exemplary implementation, for any 2x2 region of four contiguous different interference portions centered at a location (x,y). Similarly, for any 3x3 region of nine contiguous interference portions centered at a location (x,y) coinciding with a central pixel, Eq. (18) is usable. Based on the foregoing examples and discussion, various modifications and other signal processing methods usable with the third particular implementation will be apparent to one skilled in the art.

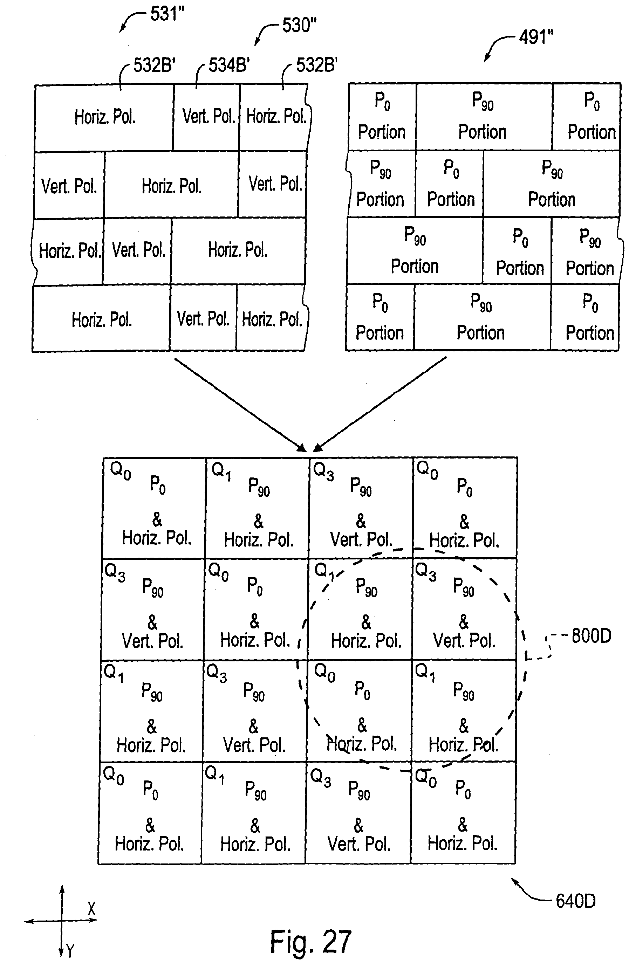

Fig. 27 is a schematic diagram illustrating the patterns and operation of a fourth exemplary implementation of the sixth exemplary phase-shift imaging element 6000. This fourth exemplary implementation is usable when the reference wavefront 124 and the object wavefront 128 are polarized along the orthogonal directions 132B and 133B shown in Figure 23. In contrast to the implementations illustrated in Figs. 24-26, the implementation illustrated in Fig. 27 shows an exemplary implementation that provides only 3 different interference portions, the $Q_0$, $Q_1$ and $Q_3$ interference portions. Thus, this exemplary implementation is usable for measurement determinations that use only 3 phases.

Fig. 27 shows a portion of an alternative exemplary pattern 531" of the high-density polarizer array 530, and a portion of an alternative exemplary pattern 491" of the high-density phase-shifting array element 490 that is nominally aligned with the portion of the exemplary pattern 531". The general characteristics of these elements are similar to those previously described with reference to the similarly number elements shown in Fig. 23. Fig. 27 also shows a nominally aligned portion of the resulting interleaved pattern 640D of $Q_0$, $Q_1$ and $Q_3$ interference portions in the multiple phase-shifted interference image information 640 that is transmitted as a single image onto the surface of the detector device 710. This interleaved pattern 640D is obtained from the combination of the pattern 531" of the high-density polarizer array 530 and the pattern 491" of the high-density phase-shifting array element 490, in this fourth exemplary implementation of the sixth exemplary phase-shift imaging element 6000 shown in Fig. 23. The optical generation and characteristics of the various $Q_0$, $Q_1$ and $Q_3$ interference portions are the same as previously described.

Similarly to the first exemplary implementation described with reference to Fig. 24, in various exemplary embodiments, the edges of the $Q_0$, $Q_1$ and $Q_3$ interference portions in the multiple phase-shifted interference image information 640 are nominally aligned with the edges of detector elements of the detector device 710. That is, each of the $Q_0$, $Q_1$ and $Q_3$ interference portions are an integer number of pixels high, and an integer number of pixels wide, and are nominally aligned with a corresponding set of pixels. The dimensions of the various elements of the high-density polarizer array 530 and the high-density phase-shifting array element 490 are designed accordingly, and will be apparent to one skilled in the art.

It should be appreciated that this fourth exemplary implementation provides three separate "phase signals" arising from the three $Q_0$, $Q_1$ and $Q_3$ interference information portions. Due to this minor difference between the pattern 640A of the first exemplary implementation and the pattern 640D of this fourth exemplary implementation, instead of Eq. (17), Eq. (19) is usable with this fourth exemplary implementation, for any three contiguous different interference portions centered at a location (x,y). The three contiguous different interference portions may be along a row, along a column, or an "L" shape of any orientation. In the case of an "L" shape, the (x,y) location is nominally the interior corner of the "L". Thus, for any region of three such contiguous different interference portions centered at a location (x,y), which will nominally be identified as the interference portions $Q_3(x,y)$, $Q_1(x,y)$, and $Q_0(x,y)$, one expression comparable to Eq. 10 in the 330 patent and to Eq. (2) above is:

$$\Phi(x,y) = \tan^{-1}\{[I_{Q3(x,y)}-I_{Q1(x,y)}] / [2I_{Q0(x,y)} - (I_{Q3(x,y)}+I_{Q1(x,y)})]\} \qquad (19)$$

where I indicates the image intensity value for each respective interference portion.

Similarly, because this fourth exemplary implementation provides only three separate "phase signals" arising from the three $Q_0$, $Q_1$ and $Q_3$ interference information portions, due to this minor difference between the pattern 640A of the first exemplary implementation and the pattern 640D of this fourth exemplary implementation, instead of Eq. (18), Eq. (20) is usable with this fourth exemplary implementation. Thus, for any 4 contiguous interference portions, which can include at least three different types of interference portions, centered at a location (x,y), Eq. (20) is usable. The four contiguous interference portions may be along a row, along a column, or within a 2x2 block. That is, the following exemplary alternative expression is also usable:

$$\Phi(x,y) = \tan^{-1}\{[I^{ave}_{Q3(x,y)}- I^{ave}_{Q1(x,y)}] / [2I^{ave}_{Q0(x,y)} - (I^{ave}_{Q3(x,y)}+I^{ave}_{Q1(x,y)})]\} \qquad (20)$$

where $I^{ave}$ indicates the area-averaged image intensity value for each respective interference portion, regardless of the number of the various respective interference portions in the region of four contiguous interference portions.

It should be appreciated that, in each of Eqs. (19) and (20), in comparison to Eqs. (17) and (18), the "$I_{Q2(x,y)}$" terms are absent. Thus, some of the signal offsets that may be present in the $I_{Q0(x,y)}$ signals are not removed. However, because of the previously described "common-mode" error benefits that are obtained when using various embodiments according to the principle of this invention, many of the signal offsets in the $I_{Q0(x,y)}$ signals can be assumed to be the same as those in the $I_{Q3(x,y)}$ and $I_{Q1(x,y)}$ signals. Thus, it should be appreciated that subtracting the sub-expression $(I^{ave}_{Q3(x,y)}+I^{ave}_{Q1(x,y)})$ in Eq. (20) effectively removes most of the offset effects present in the $I_{Q0(x,y)}$ signals.

Thus, despite a minor disadvantage, the pattern configurations shown in Fig. 27, as well as other patterns configurations producing various combinations of 3 different interference portions, are usable in various embodiments according to the principles of this invention. Based on the foregoing examples and discussion, various modifications and other signal processing methods usable with the fourth particular embodiment will be apparent to one skilled in the art. More generally, based on the foregoing examples and discussion related to the various patterns shown in Figs. 24-27, various other pattern modifications and other pattern combinations usable according to the principles of this invention will be apparent to one skilled in the art.

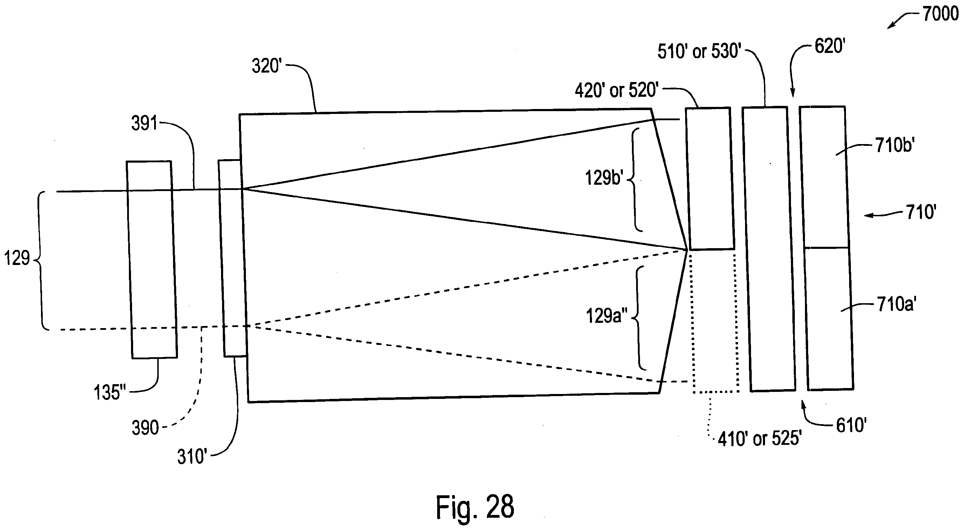

Fig. 28 shows one exemplary embodiment of a phase-shift imaging element 7000 which functions similarly to the phase-shift imaging elements 4000 and 4000' shown in Figs. 11 and 22. Thus, the following detailed description of Fig. 28 focuses only on the distinctions between the phase-shift imaging elements 7000 relative to the phase shifting imaging elements 4000 and 4000'. In the phase-shift imaging element 7000 shown in Fig. 28, the beam splitting surface 310' and the reflective surfaces 312a and 312b used in the phase-shift imaging element 4000' are replaced by a diffractive optical element 310", which functions similarly to the beamsplitting surface 310' to split the combined wavefront 129 into two respective combined sub-wavefronts or "copies" 129a" and 129b' along respective optical paths. It should be appreciated that the various angles, lengths and proportions shown in Fig. 28 are illustrative only, and may be exaggerated for clarity. In various exemplary embodiments, the chosen angles, lengths and proportions will depend heavily on the divergence of the optical beams that is achievable with a particular diffractive optical element 310".

It should be appreciated that the diffractive optical element 310" is fabricated such that the sub-wavefront 129a", in contrast to the wavefront 129a' shown in Figs. 11 and 22, is not a mirror image of the sub-wavefront 129b'. Furthermore, the optical block assembly 320', in contrast to the optical block 320, is a block of homogeneous material, which acts primarily to provide various mounting surfaces and to maintain critical spacing in various embodiments of the phase-shift imaging element 7000. Depending on the orientation of the sub-wavefronts 129a" and 129b' provided by the diffractive optical element 310", in various exemplary embodiments, the optical block 320' includes a prism-shaped end portion positioned adjacent to the polarizer element 400' or to the blank or neutral plate 525' and the quarter wave plate 520', respectively. The configuration of the prism shaped end of the optical block 320' is selected to insure that the optical path lengths of the exemplary optical paths represented by the lines 390 and 391 are substantially equal. The same is true for all optical paths of the various portions of the combined wavefront 129 as it propagates through the phase-shift imaging element 7000.

In other respects, the phase-shift imaging element 7000 functions similarly to the phase-shift imaging elements 4000 and 4000' shown in Figs. 11 and 22. Thus, it should be appreciated that all of the previously described features and benefits of the various embodiments of the multiple phase-shift generating structure 1400" and the phase-shift imaging element 4000 shown in Fig. 10 or the multiple phase-shift generating structure 1400"" and the phase-shift imaging element 4000' shown in Fig. 22 are similarly provided by various embodiments of the phase-shift imaging element 7000 shown in Fig. 28.

As previously discussed, in various exemplary embodiments, for a laser source wavelength of approximately 633 nm, the high-density phase-shifting array element 322 can be a typical, commercially-available quartz quarter-wave plate, having the regions of the neutral portions 1125 etched to a nominal etch depth of 17.5 microns. To conveniently and/or economically fabricate such a high-density phase-shifting array element 322, in various embodiments, it is advantageous that the minimum x and/or y dimension of the regions 1125, 1125' and 1125" shown in Figs. 12-16 are approximately the same as the etch depth or layer.

Thus, in various exemplary embodiments when the pixel size and center-to-center spacing of the detector elements of the detector 340" is approximately 6 microns, and each of the $Q_0$-$Q_3$ interference portions in the multiple phase-shifted interference image information 149'A, 149'B or 149'C are an integer number of pixels high and an integer number of pixels wide, the minimum $Q_0$-$Q_3$ interference portions may be regions having side lengths of approximately 3x6 = 18 microns, or 4x6 = 24 microns, etc. Accordingly, in the exemplary embodiments shown in Figs. 12-16, each of the portions 332 and 334 could have side lengths of approximately 18 microns. In a complementary way, the corresponding quarter-wave plate and neutral plate portions 1120 and 1125 shown in Figs 12 and 14 would have narrow dimensions of 18 microns. Similarly, in Fig. 13, the quarter-wave plate and neutral plate portions 1120" and 1125" would have side lengths of approximately 2x18 = 36 microns.

Of course, in various exemplary embodiments, larger or smaller dimensions may also be used. It should be appreciated that, as new materials and/or processes are obtained that allow for thinner quarter-wave dimensions or that allow for higher aspect ratios between the etching depths and the lengths of the sides of the neutral and quarter-wave regions 1120 and 1125, and the like, the dimensions of the can be economically reduced down to the limit of the dimensions of the underlying pixels of the detector 340". It should also be appreciated that, more generally, in various embodiments, the aspect ratio of the each of the $Q_0$-$Q_3$ interference portions in the multiple phase-shifted interference image information 149'A, 149'B, 149'C and/or 149'D will match the aspect ratio of the pixels of the detector 340". The dimensions of the various elements of the high-density polarizer array 330" and the high-density phase-shifting array element 322 will be designed accordingly, and will be apparent to one skilled in the art.

In various exemplary embodiments of the phase-shift imaging elements 3000, 3000', 4000, 4000', 5000, 6000 and/or 7000 according to this invention, the optical input portion 135 as representative of the various embodiments 135' or 135", includes a half-wave plate at its output, and outputs the combined wavefront 129 from the output imaging lens through the half-wave plate. As is known in the art, a selected orientation of the fast axis of the half-wave plate can rotate the polarization of the two orthogonally polarized incident wavefronts 124 and 128, which form the combined wavefront 129, by a selected amount. For example, either of orientations along the directions 132A and 133A, or along the directions 132B and 133B, as shown in Figs. 8 and 13, are easily achieved, regardless of the initial orientation of the orthogonally polarized incident wavefronts 124 and 128 prior to entering the optical input portion 135. Of course, alternatively, the entire phase-shift imaging element may be rotated around the optical input axis to achieve a desired polarization angle relationship. However, this may be more complicated, unstable, or inconvenient than including an adjustable half-wave plate in the optical input portion 135.

Furthermore, in various exemplary embodiments of the phase-shift imaging elements 3000, 3000', 4000, 4000', 5000, 6000 and/or 7000 according to this invention, the optical input portion 135 as representative of the various embodiments 135' or 135" inputs the combined wavefront 129 through an "input" imaging lens, then spatially filters the combined wavefront 129 through an aperture, and propagates the resulting combined wavefront 129 through an "output" imaging lens. Such telecentric arrangements are known in the art for various interferometers that are similar to that shown in Fig. 1. The lenses of the optical input portion 135 may have a focal length f, and may provide a magnification M. It should be appreciated that the values for these parameters can be appropriately selected for a particular application of an apparatus according to this invention by experimentation or it can be appropriately selected by basic optical analysis.

In various exemplary embodiments according to this invention, two related considerations when appropriately selecting the values for these parameters are the speckle size, i.e., the size of speckles that are produced by certain objects at the surface of the detectors in various embodiments of the detector subsystem 700, and the lateral resolution determined by the optical input portion 135. In general, in applications where speckle is present, the nominal speckle size coincides with the nominal lateral resolution of the system.

In various exemplary embodiments, Eq. (21) can be used to analyze and adjust the nominal lateral resolution LR, and/or nominal speckle size S:

$$LR = S \approx 1.22(M + 1) * \lambda * f / a,\qquad(21)$$

where:

M is the magnification;
f is the focal length of the imaging lenses;
a is the effective aperture dimension; and
$\lambda$ is the wavelength of the light emitted by the laser source 110.

It should be appreciated that the speckle size obtained in various exemplary embodiments, where a collimated, coherent reference beam wavefront is mixed with the object beam wavefront by a polarizer near the detector, may actually be approximately twice that indicated by Eq. (21). It should be appreciated that the speckle size may be adjusted in various exemplary embodiments by changing an aperture of the input optical system. Moreover, that the aperture may be experimentally adjusted to achieve the speckle size and/or lateral resolution desired for a given application.

In general, in various exemplary embodiments, it is desirable that none of the comparable $Q_0$-$Q_3$ pixels in a set of $Q_0$-$Q_3$ pixels used to determine a measurement value corresponding to a particular location on the object 130 have a unique speckle content. Such a unique speckle content would distort the image intensity value I of the related comparable pixel, and, thus, introduce an error in the related measurement determination. Similarly, in various exemplary embodiments, it is desirable that none of the comparable $Q_0$-$Q_3$ pixels in a set of $Q_0$-$Q_3$ pixels used to determine measurement value corresponding to a particular location on the object 130 correspond to a unique local height on the object 130. Such a unique height would produce a unique nominal phase difference and a unique image intensity value I of the related comparable pixel. As a result, the related measurement determination would not reflect the best estimate of the average height at the particular location on the object 130.

Thus, in various exemplary embodiments, the lateral resolution provided in the image on a detector by the optical input portion 135 is nominally as large or larger than the largest lateral dimension of each complete set of comparable interference portions $Q_0$-$Q_3$ in the multiple phase-shifted interference image information 600 generated using the various exemplary embodiments of the systems and methods according to this invention. That is, in various exemplary embodiments, the lateral spatial averaging provided by the lateral resolution of the optical input portion 135 is nominally equal to or larger than the lateral spatial resolution corresponding to each complete set of comparable interference portions $Q_0$-$Q_3$ in the multiple phase-shifted interference image information 600 generated using the various exemplary embodiments of the systems and methods according to this invention.

The lateral resolution indicators 800A-800D in Figs. 24-27 indicate, respectively, for various exemplary embodiments, the approximate exemplary relationship between a set of comparable $Q_0$-$Q_3$ pixels and the lateral resolution provided by the optical input portion 135. In various other exemplary embodiments, a relatively larger lateral resolution is used, and becomes the limiting factor in the lateral spatial resolution of the systems of such embodiments.

In any case, it should be appreciated that, in various exemplary embodiments according to this invention, at least the lateral resolution, the dimensions of the various portions of a high-density polarizer array 530 and/or the various portions of the various high-density phase-shifting array element 490 according to this invention, and the pixel size of detector are chosen interdependently, in light of various limiting design factors, costs and the like, to achieve various desirable features and relationships as outlined above.

It should be appreciated that, while various embodiments that generate interleaved two-, three-, and four-phase interference information have been emphasized above, the various elements, techniques, and combinations of elements disclosed above exemplify various additional elements, techniques and combinations of elements that are usable to generate up to several more phases of interleaved interference information, including redundant and/or "cyclic" interleaved phase information. For example, additional retardation thicknesses are easily incorporated into various high-density phase-shifting arrays according to this invention, to provide additional relative phase-shifts. Furthermore, various high-density polarizing arrays according to this invention can be used in combination with such high-density phase-shifting arrays having additional retardation thicknesses. It should be appreciated that, in various exemplary embodiments, such additional interleaved phase information is usable in combination with various corresponding signal processing methods to achieve higher levels of interpolated accuracy and resolution.

Thus, while this invention has been described in conjunction with the exemplary embodiments outlined above, it is evident that many alternatives, modifications and variations will be apparent to those skilled in the art. Accordingly, the exemplary embodiments of the invention, as set forth above, are intended to be illustrative, not limiting.

**Claims**

1. An interferometer for analyzing a dimension of an object based on interleaved multiple phase-shifted interference information, comprising:

a transmitting portion (102) configured to direct first and second orthogonally polarized lights (122, 126) from a coherent light beam (112) to a reference element and a region of an object (130), respectively, and to combine first and second orthogonally polarized components of light returned from the reference element and a region of the object into a combined wavefront (129) corresponding to the region of the object, and to output the combined wave-front (129); and
a multiple phase shift image generating portion (1600, 3000, 4000, 5000, 3000', 4000', 6000, 7000) arranged to input the combined wavefront (129) and the multiple phase shift image generating portion (1600, 3000, 4000, 5000, 3000', 4000', 6000, 7000) comprising:

a detector subsystem (700, 700', 700") comprising at least a first detector array portion (710a, 710a', 710) arranged a first optical path, each detector array portion including an array of detector pixels arranged in rows that extend along a row direction and columns that extend along a column direction; and
a multiple phase-shift generating structure (1400, 1400', 1400", 1400"', 1400"",1400""') arranged proximate to the detector subsystem (700, 700', 700") to input the combined wavefront (129) configured to generate and output multiple phase-shifted interference image information (600, 610, 610', 630, 640) at least along the first optical path to be received by the first detector array portion (710a, 710a', 710),

wherein:

the multiple phase-shift generating structure (1400, 1400', 1400", 1400"', 1400"",1400""') is configured to comprise at least one of configurations A, B and C, wherein in each of the configurations A, B and C the multiple phase-shifted interference image information (600, 610, 610', 630, 640) that is generated and output along the first optical path to be received by the first detector array portion (710a, 710a', 710) comprises a first interference image of the region of the object, the first interference image of the region of the object including a 2-dimensional pattern (640A, 640B, 640C, 640D) comprising interleaved interference portions of different respective types (Q0, Q1, Q2, Q3, Q120, Q240) having different respective amounts of relative phase shift between their interference light components, wherein the different respective types of interleaved interference portions (Q0, Q1, Q2, Q3, Q120, Q240) are interleaved periodically along pattern row and pattern column directions that are respectively parallel to the row and column directions of the first detector array portion (710a, 710a', 710), the interleaved interference portions of the first interference image comprising:

a plurality of a first type of interference portions (Q0) that each have a first amount of relative phase shift between their interference light components, wherein the first type of interference portions (Q0) are repeated periodically along the pattern row direction interleaved with and separated by at least one other type of interference portion (Q1, Q2, Q3), and periodically along the pattern column direction interleaved with and separated by at least one other type of interference portion (Q1, Q2, Q3) in the 2-dimensional pattern in the first interference image of the region of the object, and across an area of the first interference image that approximately corresponds to an area of the first detector array portion (710a, 710a', 710); and
a plurality of a second type of interference portions (Q2) that each have a second amount of relative phase shift between their interference light components, wherein the second amount of relative phase shift is different than the first amount, and the second type of interference portions (Q2) are repeated periodically along the pattern row direction interleaved with and separated by at least one other type of interference portion (Q0, Q1, Q3), and repeated periodically along the pattern column direction interleaved with and separated by at least one other type of interference portion (Q0, Q1, Q3) in the 2-dimensional pattern in the first interference image of the region of the object, and across the area of the first interference image that approximately corresponds to an area of the first detector array portion (710a, 710a', 710); and wherein:

the configuration A (1400, 1400', 1400") includes a first high density phase-shifting array element (410, 410', 460, 470, 480) arranged along the first optical path and a first polarizer element (510a, 510', 510) configured to provide a single polarization direction along the first optical path, wherein:

the first high density phase-shifting array element (410, 410', 460, 470, 480) is arranged proximate to the first polarizer element (510a, 510', 510), and is arranged and configured to input the combined wavefront (129, 129a) and to transmit it to the first polarizer element (510a, 510', 510) such that its orthogonally polarized components have different relative phase shifts in different portions of the transmitted combined wavefront;

the first polarizer element (510a, 510', 510) is arranged proximate to the first detector array portion (710a, 710a', 710), and is arranged to input the transmitted combined wavefront, and is configured to interfere aligned interference light components of its orthogonally polarized components that have different relative phase shifts in different portions of the transmitted combined wavefront, and to output the resulting multiple phase-shifted interference image information (600, 610, 610', 630, 640) along the first optical path to be received by the first detector array portion (710a, 710a', 710);

the first high density phase-shifting array element (410, 410', 460, 470, 480) comprises a 2-dimensional phase-shift pattern (411, 431, 461, 471, 481) comprising interleaved phase-shift portions of different respective types (P0, P90, P180, P270, P120, P240) that provide different respective amounts of relative phase shift between the orthogonally polarized components of the input combined wavefront (129, 129a), wherein the different respective types of interleaved phase-shift portions (P0, P90, P180, P270, P120, P240) are interleaved periodically along phase-shift pattern row and phase-shift pattern column directions that are respectively parallel to the row and column directions of the first detector array portion (710a, 710a', 710), the interleaved phase-shift portions of the first high density phase-shifting array element (410, 410', 460, 470, 480) comprising:

a plurality of a first type of phase-shift portions (P0) that each provide a first amount of relative phase shift between the orthogonally polarized components of the input combined wavefront (129, 129a), wherein the first type of phase-shift portions (P0) are repeated periodically along the phase-shift pattern row direction interleaved with and separated by at least one other type of phase-shift portion (P90, P180, P270), and periodically along the phase-shift pattern column direction interleaved with and separated by at least one other type of phase-shift portion (P90, P180, P270), and across an area of the first high density phase-shifting array element (410, 410', 460, 470, 480) that approximately corresponds to an area of the first detector array portion (710a, 710a', 710); and

a plurality of a second type of phase-shift portions (P180) that each provide a second amount of relative phase shift between the orthogonally polarized components of the input combined wavefront (129, 129a), wherein the second amount of relative phase shift is different than the first amount of relative phase shift, and the second type of phase-shift portions (P180) are repeated periodically along the phase-shift pattern row direction interleaved with and separated by at least one other type of phase-shift portion (P0, P90, P270), and periodically along the phase-shift pattern column direction interleaved with and separated by at least one other type of phase-shift portion (P0, P90, P270), and across the area of the first high density phase-shifting array element that approximately corresponds to an area of the first detector array portion (710a, 710a', 710);

wherein the second type of phase-shift portions (P180) are repeatedly interleaved with and separated by the first type of phase-shift portions (P0) along at least one of the phase-shift pattern row and the phase-shift pattern column directions in the 2-dimensional phase-shift pattern (411, 431, 461, 471, 481) in the first high density phase-shifting array element (410, 410', 460, 470, 480), and,

the configuration B (1400''', 1400'''') includes a first high density polarizer array element (530a, 530') arranged along the first optical path and a first phase-shifting element (525, 525') configured to provide a single amount of relative phase shift along the first optical path, wherein:

the first phase-shifting element (525, 525') is arranged proximate to the first high density polarizer array element (530a, 530'), and is configured and arranged to input the combined wavefront (129, 129a) and to transmit it to the first high density polarizer array element (530a, 530') such that its orthogonally polarized components undergo the same relative phase shift in different portions of the transmitted combined wavefront;

the first high density polarizer array element (530a, 530') is arranged proximate to the first detector array portion (710a, 710a'), and is arranged to input the transmitted combined wavefront and is configured to transmit and interfere aligned interference light components of its orthogonally polarized components using different polarization directions in different portions of the transmitted combined wavefront, and to output the resulting multiple phase-shifted interference image information (600, 610, 610', 630, 640) along the first optical path to be received by the first detector array portion (710a, 710a');

the first high density polarizer array element (530a, 530') comprises a 2-dimensional polarization pattern (531 A, 531 B) comprising interleaved polarization portions of different respective types (532A, 534A, 532B, 534B) that provide different respective directions of polarization that transmit and interfere different respective sets of interference light components of the orthogonally polarized components of the transmitted combined wavefront (129, 129a) wherein the interference light components of the different respective sets are aligned along the different respective polarization directions, and the different respective types of interleaved polarization portions (532A, 534A, 532B, 534B) are interleaved periodically along polarization pattern row and polarization pattern column directions that are respectively parallel to the row and column directions of the first detector array portion (710a, 710a'), the interleaved polarization portions of the first high density polarizer array element (530a, 530') comprising:

a plurality of a first type of polarization portions (532A, 532B) that each provide a first polarization direction that transmits and interferes a first set of aligned interference light components of the orthogonally polarized components of the transmitted combined wavefront (129) wherein the first set of aligned interference light components are aligned along the first polarization direction, and wherein the first type of polarization portions (532A, 532B) are repeated periodically along the polarization pattern row direction interleaved with and separated by a second type of polarization portion (534A, 534B), and periodically along the polarization pattern column direction interleaved with and separated by the second type of polarization portion (534A, 534B), and across an area of the first high density polarizer array element (530a, 530') that approximately corresponds to an area of the first detector array portion (710a, 710a'); and

a plurality of the second type of polarization portions (534A, 534B) that each provide a second polarization direction that transmits and interferes a second set of aligned interference light components of the orthogonally polarized components of the transmitted combined wavefront wherein the second set of aligned interference light components are aligned along the second polarization direction, and wherein the second polarization direction is orthogonal to than the first polarization direction, and the second type of polarization portions (534A, 534B) are repeated periodically along the polarization pattern row direction interleaved with and separated by the first type of polarization portion (532A, 532B), and periodically along the polarization pattern column direction interleaved with and separated by the first type of polarization portion (532A, 532B), and across the area of the first high density polarizer array element (530a, 530') that approximately corresponds to an area of the first detector array portion (710a, 710a'),
and
the configuration C (1400"'') includes a first high density phase-shifting array element (490) arranged along the first optical path and a first high density polarizer array element (530) arranged along the first optical path, wherein:

the first high density phase-shifting array element (490) is arranged proximate to the first high density polarizer array element (530), and is arranged and configured to input the combined wavefront (129) and to transmit it to the first high density polarizer array element (530) such that its orthogonally polarized components have different relative phase shifts in different portions of the transmitted combined wavefront;

the first high density polarizer array element (530) is arranged proximate to the first detector array portion (710), and is arranged to input the transmitted combined wavefront, and is configured to transmit and interfere aligned interference light components of its orthogonally polarized components using different polarization directions in different portions of the transmitted combined wavefront, and to output the resulting multiple phase-shifted interference image information (600, 610, 610', 630, 640) along the first optical path to be received by the first detector array portion (710);

the first high density phase-shifting array element (490) comprises a 2-dimensional phase-shift pattern (491 A, 491B) comprising interleaved phase-shift portions of different respective types (P0, P90, P180, P270, P120, P240) that provide different respective amounts of relative phase shift between the orthogonally polarized components of the input combined wavefront (129), wherein the different respective types of interleaved phase-shift portions (P0, P90, P180, P270, P120, P240) are interleaved periodically along at least a first direction that is parallel to a first one of the row and column directions of the first detector array portion (710), the interleaved phase-shift portions of the first high density phase-shifting array element (490) comprising:

a plurality of a first type of phase-shift portions (P0) that each provide a first amount of relative phase shift between the orthogonally polarized components of the input combined wavefront (129), wherein the first type of phase-shift portions (P0) are repeated periodically along at least the first direction interleaved with and separated by at least one other type of phase-shift portion (P90) along at least the first direction, and across an area of the first high density phase-shifting array element that approximately corresponds to an area of the first detector array portion (710); and

a plurality of a second type of phase-shift portions (P90) that each provide a second amount of relative phase shift between the orthogonally polarized components of the input combined wavefront (129), wherein the second amount of relative phase shift is different than the first amount of relative phase shift, and the second type of phase-shift portions (P90) are repeated periodically along at least the first direction interleaved with and separated by at least the first type of phase-shift portion (P0) along at least the first direction, and repeated periodically across the area of the first high density phase-shifting array element that approximately corresponds to an area of the first detector array portion (710); and

the first high density polarizer array element (530) comprises a 2-dimensional polarization pattern (531C, 531B) comprising interleaved polarization portions of different respective types (532C, 534C 532B, 534B) that provide different respective directions of polarization that transmit and interfere different respective sets of interference light components of the orthogonally polarized components of the transmitted combined wavefront (129) wherein the interference light components of the different respective sets are aligned along the different respective polarization directions, and the different respective types of interleaved polarization portions are interleaved periodically along at least a second direction that is parallel to the other one of the row and column directions of the first detector array portion (710) which is orthogonal to the first direction, the interleaved polarization portions of the first high density polarizer array element (530) comprising:

a plurality of a first type of polarization portions (532C, 532B) that each provide a first polarization direction that transmits and interferes a first set of aligned interference light components of the orthogonally polarized components of the transmitted combined wavefront wherein the first set of aligned interference light components are aligned along the first polarization direction, and wherein the first type of polarization portions (532C, 532B) are repeated periodically along at least the second direction interleaved with and separated by at least one other type of polarization portion (534C, 534B), and across an area of the first high density polarizer array element (530) that approximately corresponds to an area of the first detector array portion (710); and

a plurality of a second type of polarization portions (534C, 534B) that each provide a second polarization direction that transmits and interferes a second set of aligned interference light components of the orthogonally polarized components of the transmitted combined wavefront wherein the second set of aligned interference light components are aligned along the second polarization direction, and wherein the second polarization direction is different than the first polarization direction, and the second type of polarization portions (534C, 534B) are repeated periodically along at least the second direction interleaved with and separated by at least the first type of polarization portion (532C, 532B), and across the area of the first high density polarizer array element (530) that approximately corresponds to an area of the first detector array portion (710).

2. The interferometer of claim 1, wherein:

in the configuration A, the first type of phase-shift portions and the second type of phase-shift portions are repeated periodically at least 6 times along the phase-shift pattern row direction and at least 6 times along the phase-shift pattern column direction, and across the area of the first high density phase-shifting array element that approximately corresponds to the area of the first detector array portion;

in the configuration B, the first type polarization portions and the second type of polarization portions are repeated periodically at least 6 times along the polarization pattern row direction and at least 6 times along the polarization pattern column direction, and across the area of the first high density polarizer array element that approximately corresponds to the area of the first detector array portion; and

in the configuration C, the first type of phase-shift portions and the second type of phase-shift portions are repeated periodically at least 6 times along at least the first direction, and across the area of the first high density phase-shifting array element that approximately corresponds to the area of the first detector array portion, and the first type of polarization portions and the second type of polarization portions are repeated periodically at least 6 times along at least the second direction, and across the area of the first high density polarizer array element that approximately corresponds to the area of the first detector array portion.

3. The interferometer of claim 2, wherein:

in the configuration A, the first type of phase-shift portions and the second type of phase-shift portions each have a dimension along the phase-shift pattern row direction that is not more than a dimension corresponding to N pixels along the row direction in the first detector array portion, and a dimension along the phase-shift pattern column direction that is not more than a dimension corresponding to M pixels along the column direction in the first detector array portion;

in the configuration B, the first type polarization portions and the second type of polarization portions each have a dimension along the phase-shift pattern row direction that is not more than a dimension corresponding to N pixels along the row direction in the first detector array portion, and a dimension along the phase-shift pattern column direction that is not more than a dimension corresponding to M pixels along the column direction in the first detector array portion;

in the configuration C, the first type of phase-shift portions and the second type of phase-shift portions each have a dimension along the first direction that is not more than a dimension corresponding to N pixels along the first direction in the first detector array portion, and the first type of polarization portions and the second type of polarization portions each have a dimension along the second direction that is not more than a dimension corresponding to N pixels along the second direction in the first detector array portion; and

N is an integer that is at most 16 and M is an integer that is at most 16.

4. The interferometer of claim 3, wherein N is an integer that is at most 4 and M is an integer that is at most 4.

**5.** The interferometer of claim 2, wherein:

the multiple phase-shift generating structure is configured to comprise at least one of the configurations A and C, and not the configuration B;

the interleaved interference portions of the first interference image further comprise a plurality of a third type of interference portions (Q1) that each have a third amount of relative phase shift between their interference light components, wherein the third type of interference portions (Q1) are repeated periodically along the pattern row direction interleaved with and separated by at least one other type of interference portion of the first and second types (Q0, Q2) in the 2-dimensional pattern in the first interference image of the region of the object, and periodically along the pattern column direction interleaved with and separated by at least one other type of interference portion of the first and second types (Q0, Q2) in the 2-dimensional pattern in the first interference image of the region of the object, and across the area of the first interference image that approximately corresponds to an area of the first detector array portion; and

in the configuration A, the first high density phase-shifting array element (460, 470, 480) further comprises a plurality of a third type of phase-shift portions (P90) that each provide a third amount of relative phase shift between the orthogonally polarized components of the input combined wavefront (129), wherein the third amount of relative phase shift is different than the first and second amounts of relative phase shift, and the third type of phase-shift portions (P90) are repeated periodically along the phase-shift pattern row direction interleaved with and separated by at least one other type of phase-shift portion of the first and second types (P0, P180), and periodically along the phase-shift pattern column direction interleaved with and separated by at least one other type of phase-shift portion of the first and second types (P0, P180), and across the area of the first high density phase-shifting array element that approximately corresponds to an area of the first detector array portion.

**6.** The interferometer of claim 5, wherein:

the interleaved interference portions of the first interference image further comprise a plurality of a fourth type of interference portions (Q3) that each have a fourth amount of relative phase shift between their interference light components, wherein the fourth type of interference portions (Q3) are repeated periodically along the pattern row direction interleaved with and separated by at least one other type of interference portion (Q0, Q1, Q2), and periodically along the pattern column direction interleaved with and separated by at least one other type of interference portion (Q0, Q1, Q2); wherein the fourth type of interference portions (Q3) are repeated periodically along the pattern row direction interleaved with and separated by at least one other type of interference portion of the first, second and third types (Q0, Q1, Q2) in the 2-dimensional pattern in the first interference image of the region of the object, and periodically along the pattern column direction interleaved with and separated by at least one other type of interference portion of the first, second and third types (Q0, Q1, Q2) in the 2-dimensional pattern in the first interference image of the region of the object, and across the area of the first interference image that approximately corresponds to an area of the first detector array portion; and

in the configuration A, the first high density phase-shifting array element (460, 470, 480) further comprises a plurality of a fourth type of phase-shift portions (P270) that each provide a fourth amount of relative phase shift between the orthogonally polarized components of the input combined wavefront (129), wherein the fourth amount of relative phase shift is different than the first, second and third amounts of relative phase shift, and the fourth type of phase-shift portions (P270) are repeated periodically along the phase-shift pattern row direction interleaved with and separated by at least one other type of phase-shift portion of the first, second and third types (P0, P90, P180), and periodically along the phase-shift pattern column direction interleaved with and separated by at least one other type of phase-shift portion of the first, second and third types (P0, P90, P180), and across the area of the first high density phase-shifting array element that approximately corresponds to an area of the first detector array portion.

**7.** The interferometer of claim 6, wherein:

the multiple phase-shift generating structure is configured to comprise at least the configuration C, and not the configurations A or B; and

in the configuration C the first type of interference portions (Q0) in the 2-dimensional pattern in the first interference image of the region of the object are spatially congruent with a first type of portions of the multiple phase-shift generating structure (1400"") wherein a polarization portion of the first type (532C, 532B) overlaps with a relative phase-shift portion of the first type (P0), as seen along a direction of the first optical path, and the second type of interference portions (Q2) in the 2-dimensional pattern in the first interference image of the region of the object are spatially congruent with a second type of portions of the multiple phase-shift generating structure (1400''''') wherein a polarization portion of the second type (534C, 534B) overlaps with a relative phase-shift portion of the first type (P0) as seen along the direction of the first optical path, and the third type of interference portions (Q1) in the 2-dimensional pattern in the first interference image of the region of the object are spatially congruent with a third type of portions of the multiple phase-shift generating structure (1400''''') wherein a polarization portion of the first type (532C, 532B) overlaps with a relative phase-shift portion of the second type (P90) as seen along the direction of the first optical path, the fourth type of interference portions (Q3) in the 2-dimensional pattern in the first interference image of the region of the object are spatially congruent with a fourth type of portions of the multiple phase-shift generating structure (1400''''') wherein a polarization portion of the second type (534C, 534B) overlaps with a relative phase-shift portion of the second type (P90) as seen along the direction of the first optical path.

8. The interferometer of claim 7, wherein:

in the configuration C, the first type of phase-shift portions and the second type of phase-shift portions comprise stripe-like portions in the 2-dimensional phase-shift pattern (491 A), and extend along the second direction and across the area of the first high density phase-shifting array element that approximately corresponds to the area of the first detector array portion, and the first type of polarization portions and the second type of polarization portions comprise stripe-like portions in the 2-dimensional polarization pattern (531 C), and extend along the first direction, and across the area of the first high density polarizer array element that approximately corresponds to the area of the first detector array portion.

9. The interferometer of claim 7, wherein:

in the configuration C, the first type of phase-shift portions are repeated periodically along each of the first and second directions interleaved with and separated by the second type of phase-shift portions in the 2-dimensional phase-shift pattern (491 B), and across the area of the first high density phase-shifting array element that approximately corresponds to the area of the first detector array portion, and the first type of polarization portions are repeated periodically along each of the first and second directions interleaved with and separated by the second type of polarization portions in the 2-dimensional polarization pattern (531), and across the area of the first high density polarizer array element that approximately corresponds to the area of the first detector array portion.

10. The interferometer of claim 6, wherein:

the multiple phase-shift generating structure is configured to comprise at least the configuration A, and not the configurations B or C; and
in the configuration A the first, second, third and fourth type of interference portions (Q0, Q2, Q1, Q3) in the 2-dimensional pattern in the first interference image of the region of the object are respectively spatially congruent with the first, second, third and fourth types phase-shift portions (P0, P90, P180, P270) in the 2-dimensional phase-shift pattern (461, 471, 481) of the high density phase-shifting array element (460, 470, 480), as seen along a direction of the first optical path.

11. The interferometer of claim 2, wherein:

in the configuration A, the first polarizer element comprises a wire grid polarizer element fabricated on a surface positioned to abut a surface of the first detector array portion;
in the configuration B, the first high density polarizer array element comprises a wire grid polarizer element fabricated on a surface positioned to abut a surface of the first detector array portion; and
in the configuration C, the first high density polarizer array element comprises a wire grid polarizer element fabricated on a surface positioned to abut a surface of the first detector array portion.

12. The interferometer of claim 11, wherein:

in the configuration A, the first polarizer element comprises a wire grid polarizer element fabricated on a surface of the first high density phase-shifting array element that faces the first detector array portion;
in the configuration B, the first high density polarizer array element comprises a wire grid polarizer element fabricated on a surface of the first phase-shifting element that faces the first detector array portion; and
in the configuration C, the first high density polarizer array element comprises a wire grid polarizer element fabricated on a surface of the first high density phase-shifting array element that faces the first detector array portion.

**13.** The interferometer of claim 1, wherein:

the configuration A (1400, 1400') further includes a beam splitting surface (310, 310') that is arranged to input the combined wavefront (129) and to split the combined wavefront 129 and direct a first split combined wavefront (129a) along the first optical path to where the first high density phase-shifting array element (410, 410', 460, 470, 480) is arranged to input the combined wavefront (129a); and
the configuration B (1400''', 1400'''') further includes a beam splitting surface (310, 310') that is arranged to input the combined wavefront (129) and to split the combined wavefront (129) and direct a first split combined wavefront (129a) along the first optical path to where the first phase-shifting element (525, 525') is arranged to input and transmit the combined wavefront (129a)

**14.** The interferometer of claim 13, wherein:

the detector subsystem (700, 700') comprises a second detector array portion (710b, 710b') arranged along a second optical path,
the multiple phase-shift generating structure (1400, 1400', 1400''', 1400'''') is configured to generate and output multiple phase-shifted interference image information (620, 620') along the second optical path to be received by the second detector array portion (710b, 710b'),

wherein:

the multiple phase-shift generating structure (1400, 1400', 1400''', 1400'''') is configured to comprise at least one of the configurations A, B, and not the configuration C, and in each of the configurations A, B the multiple phase-shifted interference image information (620, 620') that is output along the second optical path to be received by the second detector array portion (710b, 710b') comprises a second interference image of the region of the object, the second interference image of the region of the object including a 2-dimensional pattern comprising interleaved interference portions of different respective types (Q0, Q1, Q2, Q3, Q120, Q240) having different respective amounts of relative phase shift between their interference light components, wherein the different respective types of interleaved interference portions (Q0, Q1, Q2, Q3, Q120, Q240) are interleaved periodically along pattern row and pattern column directions that are respectively parallel to the row and column directions of the second detector array portion (710b, 710b'), the interleaved interference portions of the second interference image comprising:

a plurality of a third type of interference portions (Q1) that each have a third amount of relative phase shift between their interference light components, wherein the third amount of relative phase shift is different than the first and second amounts of relative phase shift of the first and second types of interference portions (Q0, Q2) of the first interference image, and the third type of interference portions (Q1) are repeated periodically along the pattern row direction interleaved with and separated by at least one other type of interference portion (Q3, Q0, Q2), and periodically along the pattern column direction interleaved with and separated by at least one other type of interference portion (Q3, Q0, Q2) in the 2-dimensional pattern in the second interference image of the region of the object, and across an area of the second interference image that approximately corresponds to an area of the second detector array portion (710b, 710b'); and
a plurality of a fourth type of interference portions (Q3) that each have a fourth amount of relative phase shift between their interference light components, wherein the fourth amount of relative phase shift is different than the first, second and third amounts, and the fourth type of interference portions (Q3) are repeated periodically along the pattern row direction interleaved with and separated by at least one other type of interference portion (Q0, Q1, Q2), and repeated periodically along the pattern column direction interleaved with and separated by at least one other type of interference portion (Q0, Q1, Q2) in the 2-dimensional pattern in the second interference image of the region of the object, and across the area of the second interference image that approximately corresponds to an area of the second detector array portion (710b, 710b');
in the configuration A (1400, 1400') the beam splitting surface (310, 310') furthermore directs a second split combined wavefront (129b) along the second optical path, and the configuration A furthermore includes:

a second high density phase-shifting array element (420, 420') arranged along the second optical path

54

and second path polarizer element (510b, 510') configured to provide a single polarization direction along the second optical path, wherein: the second high density phase-shifting array element (420, 420') is arranged proximate to the second path polarizer element (510b, 510'), and is arranged and configured to input the combined wavefront (129b) and to transmit it to second path polarizer element (510b, 510') such that its orthogonally polarized components have different relative phase shifts in different portions of the transmitted combined wavefront;

the second path polarizer element (510b, 510') comprises one of a second polarizer element (510b) and a portion of the first polarizer element (510'), and is arranged proximate to the second detector array portion (710b, 710b'), and is arranged to input the transmitted combined wavefront (129b) and is configured to interfere aligned interference light components of its orthogonally polarized components that have different relative phase shifts in different portions of the transmitted combined wavefront, and to output the resulting multiple phase-shifted interference image information (620, 620') along the second optical path to be received by the second detector array portion (710b, 710b');

the second high density phase-shifting array element (420, 420') comprises a 2-dimensional phase-shift pattern (421, 451) comprising interleaved phase-shift portions of at least two different respective types (P0, P90, P180, P270, P120, P240) that provide different respective amounts of relative phase shift between the orthogonally polarized components of the input combined wavefront (129b), wherein each type of phase-shift portions included in the at least two different respective types of interleaved phase-shift portions is repeated periodically along phase-shift pattern row and phase-shift pattern column directions that are respectively parallel to the row and column directions of the second detector array portion (710b, 710b') and is interleaved with and separated by at least one other type of phase-shift portion included in the at least two different respective types of interleaved phase-shift portions along each of the phase-shift pattern row and phase-shift pattern column directions and across an area of the second high density phase-shifting array element (420, 420') that approximately corresponds to an area of the second detector array portion (710b, 710b'); and

the second high density phase-shifting array element (420, 420') and the second path polarizer element (510b, 510') are configured and arranged to provide the second interference image of the region of the object including a 2-dimensional pattern comprising interleaved interference portions including at least the third type of interference portions (Q1) and the fourth type of interference portions (Q3), and,

in the configuration B (1400''', 1400'''') the beam splitting surface (310, 310') furthermore directs a second split combined wavefront (129b) along the second optical path, and the configuration B furthermore includes:

a second-path high density polarizer array element (530b, 530') arranged along the second optical path and a second phase-shifting element (520, 520') configured to provide a single amount of relative phase shift along the second optical path, wherein:

the second phase-shifting element (520, 520') is arranged proximate to the second-path high density polarizer array element (530b, 530'), and is configured and arranged to input the combined wavefront (129b) and to transmit it to the second-path high density polarizer array element (530b, 530') such that its orthogonally polarized components undergo the same relative phase shift in different portions of the transmitted combined wavefront (129b);

the second-path high density polarizer array element (530b, 530') comprises one of a second polarizer element (530b) and a portion of the first high density polarizer array element (530'), and is arranged proximate to the second detector array portion (710b, 710b'), and is arranged to input the transmitted combined wavefront (129b) and is configured to interfere aligned interference light components of its orthogonally polarized components that have different relative phase shifts in different portions of the transmitted combined wavefront, and to output the resulting multiple phase-shifted interference image information (620, 620') along the second optical path to be received by the second detector array portion (710b, 710b');

the second-path high density polarizer array element (530b, 530') comprises a 2-dimensional polarization pattern (531 A, 531 B) comprising interleaved polarization portions of two different respective types (532A, 534A; 532B, 534B) that provide different directions of polarization that transmit and interfere different respective sets of interference light components of the orthogonally polarized components of the transmitted combined wavefront (129b) wherein the interference light components of the different respective sets are aligned along the different respective polarization directions, and each type of polarization portion included in the two different respective types of interleaved polarization portions (532A, 534A, 532B, 534B) is repeated periodically along polarization pattern row and polarization pattern column directions that are respectively parallel to the row and column directions of the second detector array portion (710b, 710b'), and is interleaved with and separated by the other type of polarization portion along each of the polarization pattern row and polarization pattern column directions and across an area of the second-path high density polarizer array element (530b, 530') that approximately corresponds to an area of the second detector array portion (710b, 710b'); and the second-path high density polarizer array element (530b, 530') the second phase-shifting element (520, 520') are configured and arranged to provide the second interference image of the region of the object including a 2-dimensional pattern comprising interleaved interference portions including at least the third type of interference portions (Q1) and the fourth type of interference portions (Q3).

**Patentansprüche**

1. Interferometer zum Analysieren einer Abmessung eines Gegenstandes auf der Grundlage von verschachtelten mehrfach phasenverschobenen Interferenzinformationen, das Folgendes umfasst:

einen Sendeabschnitt (102), der dafür konfiguriert ist, ein erstes und ein zweites orthogonal polarisiertes Licht (122, 126) von einem kohärenten Lichtstrahl (112) zu einem Referenzelement beziehungsweise einem Bereich eines Gegenstandes (130) zu richten und die von dem Referenzelement und einem Bereich des Gegenstandes zurückgesendete erste und zweite orthogonal polarisierte Lichtkomponente zu einer kombinierten Wellenfront (129) zu kombinieren, die dem Bereich des Gegenstandes entspricht und die kombinierte Wellenfront (129) auszugeben, und

einen Mehrfachphasenverschiebung-Bilderzeugungsabschnitt (1600, 3000, 4000, 5000, 3000', 4000', 6000, 7000), der dafür angeordnet ist, die kombinierte Wellenfront (129) einzugeben, und wobei der Mehrfachphasenverschiebung-Bilderzeugungsabschnitt (1600, 3000, 4000, 5000, 3000', 4000', 6000, 7000) Folgendes umfasst:

ein Detektor-Untersystem (700, 700', 700"), das wenigstens einen ersten Detektoranordnungsabschnitt (710a, 710a', 710), der in einem ersten Lichtweg angeordnet ist, umfasst, wobei jeder Detektoranordnungsabschnitt eine Anordnung von Detektorbildpunkten einschließt, die in Zeilen, die sich entlang einer Zeilenrichtung erstrecken, und Spalten, die sich entlang einer Spaltenrichtung erstrecken, angeordnet sind, und eine Mehrfachphasenverschiebung-Erzeugungsstruktur (1400, 1400', 1400", 1400''', 1400'''', 1400'''''), die nahe dem Detektor-Untersystem (700, 700', 700") angeordnet ist, um die kombinierte Wellenfront (129) einzugeben, dafür konfiguriert, mehrfach phasenverschobene Interferenzbildinformationen (600, 610, 610', 630, 640) wenigstens entlang des ersten Lichtweges zu erzeugen und auszugeben, um durch den ersten Detektoranordnungsabschnitt (710a, 710a', 710) empfangen zu werden, wobei:

die Mehrfachphasenverschiebung-Erzeugungsstruktur (1400, 1400', 1400", 1400''', 1400'''', 1400''''') dafür konfiguriert ist, wenigstens eine von Konfigurationen A, B und C zu umfassen, wobei in jeder der Konfigurationen A, B und C die mehrfach phasenverschobenen Interferenzbildinformationen (600, 610, 610', 630, 640), die entlang des ersten Lichtweges erzeugt und ausgegeben werden, um durch den ersten Detektoranordnungsabschnitt (710a, 710a', 710) empfangen zu werden, ein erstes Interferenzbild des Bereichs des Gegenstandes umfassen, wobei das erste Interferenzbild des Bereichs des Gegenstandes ein 2-dimensionales Muster (640A, 640B, 640C, 640D) einschließt, das verschachtelte Interferenzabschnitte von unterschiedlichen jeweiligen Typen (Q0, Q1, Q2, Q3, Q120, Q240) umfasst, die unterschiedliche jeweilige Ausmaße einer relativen Phasenverschiebung zwischen ihren Interferenzlichtkomponenten haben, wobei die unterschiedlichen jeweiligen Typen von verschachtelten Interferenzabschnitten (Q0, Q1, Q2, Q3, Q120, Q240) periodisch entlang einer Musterzeilen- und einer Musterspaltenrichtung verschachtelt sind, die jeweils parallel zu der Zeilen- und der Spaltenrichtung des ersten Detektoranordnungsabschnitts (710a, 710a', 710) sind, wobei die verschachtelten Interferenzabschnitte des ersten Interferenzbildes Folgendes umfassen:

mehrere von einem ersten Typ von Interferenzabschnitten (Q0), die jeweils ein erstes Ausmaß einer relativen Phasenverschiebung zwischen ihren Interferenzlichtkomponenten haben, wobei der erste Typ von Interferenzabschnitten (Q0) wiederholt wird periodisch entlang der Musterzeilenrichtung, verschachtelt mit und getrennt von wenigstens einem anderen Typ von Interferenzabschnitt (Q1, Q2, Q3), und periodisch entlang der Musterspaltenrichtung, verschachtelt mit und getrennt von wenigstens einem anderen Typ von Interferenzabschnitt (Q1, Q2, Q3) in dem 2-dimensionalen Muster in dem ersten Interferenzbild des Bereichs des Gegenstandes, und über eine Fläche des ersten Interferenzbildes, die annähernd einer Fläche des ersten Detektoranordnungsabschnitts (710a, 710a', 710) entspricht, und

mehrere von einem zweiten Typ von Interferenzabschnitten (Q2), die jeweils ein zweites Ausmaß einer relativen Phasenverschiebung zwischen ihren Interferenzlichtkomponenten haben, wobei sich das zweite Ausmaß einer relativen Phasenverschiebung von dem ersten Ausmaß unterscheidet und der zweite Typ von Interferenzabschnitten (Q2) wiederholt wird periodisch entlang der Musterzeilenrichtung, verschachtelt mit und getrennt von wenigstens einem anderen Typ von Interferenzabschnitt (Q0, Q1, Q3), und wiederholt periodisch entlang der Musterspaltenrichtung, verschachtelt mit und getrennt von wenigstens einem anderen Typ von Interferenzabschnitt (Q0, Q1, Q3) in dem 2-dimensionalen Muster in dem ersten Interferenzbild des Bereichs des Gegenstandes, und über die Fläche des ersten Interferenzbildes, die annähernd einer Fläche des ersten Detektoranordnungsabschnitts (710a, 710a', 710) entspricht,

und wobei:

die Konfiguration A (1400, 1400', 1400") ein erstes hochdichtes Phasenverschiebungsanordnungselement (410, 410', 460, 470, 480), das entlang des ersten Lichtweges angeordnet ist, und ein erstes Polarisatorelement (510a, 510', 510") das dafür konfiguriert ist, eine einzige Polarisationsrichtung entlang des ersten Lichtweges bereitzustellen, einschließt, wobei:

das erste hochdichte Phasenverschiebungsanordnungselement (410, 410', 460, 470, 480) nahe dem ersten Polarisatorelement (510a, 510', 510") angeordnet ist und dafür angeordnet und konfiguriert ist, die kombinierte Wellenfront (129, 129a) einzugeben und sie an das erste Polarisatorelement (510a, 510', 510") zu senden, so dass ihre orthogonal polarisierten Komponenten unterschiedliche relative Phasenverschiebungen in unterschiedlichen Abschnitten der gesendeten kombinierten Wellenfront haben,

das erste Polarisatorelement (510a, 510', 510") nahe dem ersten Detektoranordnungsabschnitt (710a, 710a', 710) angeordnet ist und dafür angeordnet ist, die gesendete kombinierte Wellenfront einzugeben, und dafür konfiguriert ist, ausgerichtete Interferenzlichtkomponenten ihrer orthogonal polarisierten Komponenten, die unterschiedliche relative Phasenverschiebungen in unterschiedlichen Abschnitten der gesendeten kombinierten Wellenfront haben, zu überlagern und die sich ergebenden mehrfach phasenverschobenen Interferenzbildinformationen (600, 610, 610', 630, 640) entlang des ersten Lichtweges auszugeben, um durch den ersten Detektoranordnungsabschnitt (710a, 710a', 710) empfangen zu werden,

das erste hochdichte Phasenverschiebungsanordnungselement (410, 410', 460, 470, 480) ein 2-dimensionales Phasenverschiebungsmuster (411, 431, 461, 471, 481) umfasst, das verschachtelte Phasenverschiebungsabschnitte von unterschiedlichen jeweiligen Typen (P0, P90, P180, P270, P120, P240) umfasst, die unterschiedliche jeweilige Ausmaße einer relativen Phasenverschiebung zwischen den orthogonal polarisierten Komponenten der eingegebenen kombinierten Wellenfront (129, 129a) bereitstellen, wobei die unterschiedlichen jeweiligen Typen von verschachtelten Phasenverschiebungsabschnitten (P0, P90, P180, P270, P120, P240) periodisch verschachtelt sind entlang einer Phasenverschiebungsmuster-Zeilen- und einer Phasenverschiebungsmuster-Spaltenrichtung, die jeweils parallel zu der Zeilen- beziehungsweise der Spaltenrichtung des ersten Detektoranordnungsabschnitts (710a, 710a', 710) sind, wobei die verschachtelten Phasenverschiebungsabschnitte des ersten hochdichten Phasenverschiebungsanordnungselements (410, 410', 460, 470, 480) Folgendes umfassen:

mehrere von einem ersten Typ von Phasenverschiebungsabschnitten (P0), die jeweils ein erstes Ausmaß einer relativen Phasenverschiebung zwischen den orthogonal polarisierten Komponenten der eingegebenen kombinierten Wellenfront (129, 129a) bereitstellen, wobei der erste Typ von Phasenverschiebungsabschnitten (P0) wiederholt wird periodisch entlang der Phasenverschiebungsmuster-Zeilenrichtung, verschachtelt mit und getrennt von wenigstens einem anderen Typ von Phasenverschiebungsabschnitt (P90, P180, P270), und periodisch entlang der Phasenverschiebungsmuster-Spaltenrichtung, verschachtelt mit und getrennt von wenigstens einem anderen Typ von Phasenverschiebungsabschnitt (P90, P180, P270), und über eine Fläche des ersten hochdichten Phasenverschiebungsanordnungselements (410, 410', 460, 470, 480), die annähernd einer Fläche des ersten Detektoranordnungsabschnitts (710a, 710a', 710) entspricht, und

mehrere von einem zweiten Typ von Phasenverschiebungsabschnitten (P180), die jeweils ein zweites Ausmaß einer relativen Phasenverschiebung zwischen den orthogonal polarisierten Komponenten der eingegebenen kombinierten Wellenfront (129, 129a) bereitstellen, wobei sich das zweite Ausmaß einer relativen Phasenverschiebung von dem ersten Ausmaß einer relativen Phasenverschiebung unterscheidet und der zweite Typ von Phasenverschiebungsabschnitten (P180) wiederholt wird periodisch entlang der Phasenverschiebungsmuster-Zeilenrichtung, verschachtelt mit und getrennt von wenigstens einem anderen Typ von Phasenverschiebungsabschnitt (P0, P90, P270), und periodisch entlang der Phasenverschiebungsmuster-Spaltenrichtung, verschachtelt mit und getrennt von wenigstens einem anderen Typ von Phasenverschiebungsabschnitt (P0, P90, P270), und über die Fläche des ersten hochdichten Phasenverschiebungsanordnungselements, die annähernd einer Fläche des ersten Detektoranordnungsabschnitts (710a, 710a', 710) entspricht,

wobei der zweite Typ von Phasenverschiebungsabschnitten (P180) wiederholt entlang wenigstens einer von der Phasenverschiebungsmuster-Zeilen- und der Phasenverschiebungsmuster-Spaltenrichtung in dem 2-dimensionalen Phasenverschiebungsmuster (411, 431, 461, 471, 481) in dem ersten hochdichten Phasenverschiebungsanordnungselement (410, 410', 460, 470, 480) mit dem ersten Typ von Phasenverschiebungsabschnitten (P0) verschachtelt und von demselben getrennt ist, und die Konfiguration B (1400''', 1400'''') ein erstes hochdichtes Polarisatoranordnungselement (530a, 530'), das entlang des ersten Lichtweges angeordnet ist, und ein erstes Phasenverschiebungselement (525, 525'), das dafür konfiguriert ist, ein einziges Ausmaß einer relativen Phasenverschiebung entlang des ersten Lichtweges bereitzustellen, einschließt, wobei:

das erste Phasenverschiebungselement (525, 525') nahe dem erstem hochdichten Polarisatoranordnungselement (530a, 530') angeordnet ist und dafür konfiguriert und angeordnet ist, die kombinierte Wellenfront (129, 129a) einzugeben und sie an das erste hochdichte Polarisatoranordnungselement (530a, 530') zu senden, so dass ihre orthogonal polarisierten Komponenten die gleiche relative Phasenverschiebung in unterschiedlichen Abschnitten der gesendeten kombinierten Wellenfront erfahren,

das erste hochdichte Polarisatoranordnungselement (530a, 530') nahe dem ersten Detektoranordnungsabschnitt (710a, 710a') angeordnet ist und dafür angeordnet ist, die gesendete kombinierte Wellenfront einzugeben, und dafür konfiguriert ist, ausgerichtete Interferenzlichtkomponenten ihrer orthogonal polarisierten Komponenten unter Verwendung unterschiedlicher Polarisationsrichtungen in unterschiedlichen Abschnitten der gesendeten kombinierten Wellenfront zu senden und zu überlagern und die sich ergebenden mehrfach phasenverschobenen Interferenzbildinformationen (600, 610, 610', 630, 640) entlang des ersten Lichtweges auszugeben, um durch den ersten Detektoranordnungsabschnitt (710a, 710a') empfangen zu werden,

das erste hochdichte Polarisatoranordnungselement (530a, 530') ein 2-dimensionales Polarisationsmuster (531A, 531 B) umfasst, das verschachtelte Polarisationsabschnitte von unterschiedlichen jeweiligen Typen (532A, 534A, 532B, 534B) umfasst, die unterschiedliche jeweilige Polarisationsrichtungen bereitstellen, die unterschiedliche jeweilige Sätze von Interferenzlichtkomponenten der orthogonal polarisierten Komponenten der eingegebenen kombinierten Wellenfront (129, 129a) senden und überlagern, wobei die Interferenzlichtkomponenten der unterschiedlichen jeweiligen Sätze entlang der unterschiedlichen jeweiligen Polarisationsrichtungen ausgerichtet sind und die unterschiedlichen jeweiligen Typen von verschachtelten Polarisationsabschnitten (532A, 534A, 532B, 534B) periodisch verschachtelt sind entlang einer Polarisationsmuster-Zeilen- und einer Polarisationsmuster-Spaltenrichtung, die jeweils parallel zu der Zeilenbeziehungsweise der Spaltenrichtung des ersten Detektoranordnungsabschnitts (710a, 710a') sind, wobei die verschachtelten Polarisationsabschnitte des ersten hochdichten Polarisatoranordnungselements (530a, 530') Folgendes umfassen:

mehrere von einem ersten Typ von Polarisationsabschnitten (532A, 532B), die jeweils eine erste Polarisationsrichtung bereitstellen, die einen ersten Satz von ausgerichteten Interferenzlichtkomponenten der orthogonal polarisierten Komponenten der eingegebenen kombinierten Wellenfront (129) senden und überlagern, wobei der erste Satz von ausgerichteten Interferenzlichtkomponenten entlang der ersten Polarisationsrichtung ausgerichtet ist und wobei der erste Typ von Polarisationsabschnitten (532A, 532B) wiederholt wird periodisch entlang der Polarisationsmuster-Zeilenrichtung, verschachtelt mit und getrennt von einem zweiten Typ von Polarisationsabschnitt (534A, 534B), und periodisch entlang der Polarisationsmuster-Spaltenrichtung, verschachtelt mit und getrennt von dem zweiten Typ von Polarisationsabschnitt (534A, 534B), und über eine Fläche des ersten hochdichten Polarisatoranordnungselements (530a, 530'), die annähernd einer Fläche des ersten Detektoranordnungsabschnitts (710a, 710a') entspricht, und mehrere von dem zweiten Typ von Polarisationsabschnitten (534A, 534B), die jeweils eine zweite Polarisationsrichtung bereitstellen, die einen zweiten Satz von ausgerichteten Interferenzlichtkomponenten der orthogonal polarisierten Komponenten der eingegebenen kombinierten Wellenfront senden und überlagern, wobei der zweite Satz von ausgerichteten Interferenzlichtkomponenten entlang der zweiten Polarisationsrichtung ausgerichtet ist und wobei die zweite Polarisationsrichtung orthogonal zu der ersten Polarisationsrichtung ist und der zweite Typ von Polarisationsabschnitten (534A, 534B) wiederholt wird periodisch entlang der Polarisationsmuster-Zeilenrichtung, verschachtelt mit und getrennt von dem ersten Typ von Polarisationsabschnitt (532A, 532B), und periodisch entlang der Polarisationsmuster-Spaltenrichtung, verschachtelt mit und getrennt von dem ersten Typ von Polarisationsabschnitt (532A, 532B), und über die Fläche des ersten hochdichten Polarisatoranordnungselements (530a, 530'), die annähernd einer Fläche des ersten Detektoranordnungsabschnitts (710a, 710a') entspricht,
und
die Konfiguration C (1400'''') ein erstes hochdichtes Phasenverschiebungsanordnungselement (490), das entlang des ersten Lichtweges angeordnet ist, und ein erstes hochdichtes Polarisatoranordnungselement (530) das entlang des ersten Lichtweges angeordnet ist, einschließt, wobei:

das erste hochdichte Phasenverschiebungsanordnungselement (490) nahe dem ersten hochdichten Polarisatoranordnungselement (530) angeordnet ist und dafür angeordnet und konfiguriert ist, die kombinierte Wellenfront (129) einzugeben und sie an das erste hochdichte Polarisatoranordnungselement (530) zu senden, so dass ihre orthogonal polarisierten Komponenten unterschiedliche relative Phasenverschiebungen in unterschiedlichen Abschnitten der gesendeten kombinierten Wellenfront haben,
das erste hochdichte Polarisatoranordnungselement (530) nahe dem ersten Detektoranordnungsabschnitt (710) angeordnet ist und dafür angeordnet ist, die gesendete kombinierte Wellenfront einzugeben, und dafür konfiguriert ist, ausgerichtete Interferenzlichtkomponenten ihrer orthogonal polarisierten Komponenten unter Verwendung unterschiedlicher Polarisationsrichtungen in unterschiedlichen Abschnitten der gesendeten kombinierten Wellenfront zu senden und zu überlagern und die sich ergebenden mehrfach phasenverschobenen Interferenzbildinformationen (600, 610, 610', 630, 640) entlang des ersten Lichtweges auszugeben, um durch den ersten Detektoranordnungsabschnitt (710) empfangen zu werden,

das erste hochdichte Phasenverschiebungsanordnungselement (490), ein 2-dimensionales Phasenverschiebungsmuster (491A, 491 B) umfasst, das verschachtelte Phasenverschiebungsabschnitte von unterschiedlichen jeweiligen Typen (P0, P90, P180, P270, P120, P240) umfasst, die unterschiedliche jeweilige Ausmaße einer relativen Phasenverschiebung zwischen den orthogonal polarisierten Komponenten der eingegebenen kombinierten Wellenfront (129) bereitstellen, wobei die unterschiedlichen jeweiligen Typen von verschachtelten Phasenverschiebungsabschnitten (P0, P90, P180, P270, P120, P240) periodisch verschachtelt sind entlang wenigstens einer ersten Richtung, die parallel zu einer ersten von der Zeilen- und der Spaltenrichtung des ersten Detektoranordnungsabschnitts (710) ist, wobei die verschachtelten Phasenverschiebungsabschnitte des ersten hochdichten Phasenverschiebungsanordnungselements (490)Folgendes umfassen:

mehrere von einem ersten Typ von Phasenverschiebungsabschnitten (P0), die jeweils ein erstes Ausmaß einer relativen Phasenverschiebung zwischen den orthogonal polarisierten Komponenten der eingegebenen kombinierten Wellenfront (129) bereitstellen, wobei der erste Typ von Phasenverschiebungsabschnitten (P0) wiederholt wird periodisch entlang wenigstens der ersten Richtung, verschachtelt mit und getrennt von wenigstens einem anderen Typ von Phasenverschiebungsabschnitt (P90) entlang wenigstens der ersten Richtung und über eine Fläche des ersten hochdichten Phasenverschiebungsanordnungselements, die annähernd einer Fläche des ersten Detektoranordnungsabschnitts (710) entspricht, und

mehrere von einem zweiten Typ von Phasenverschiebungsabschnitten (P90), die jeweils ein zweites Ausmaß einer relativen Phasenverschiebung zwischen den orthogonal polarisierten Komponenten der eingegebenen kombinierten Wellenfront (129) bereitstellen, wobei sich das zweite Ausmaß einer relativen Phasenverschiebung von dem ersten Ausmaß einer relativen Phasenverschiebung unterscheidet und der zweite Typ von Phasenverschiebungsabschnitten (P90) periodisch wiederholt wird entlang wenigstens der ersten Richtung, verschachtelt mit und getrennt von wenigstens dem ersten Typ von Phasenverschiebungsabschnitt (P0) entlang wenigstens der ersten Richtung, und periodisch wiederholt wird über die Fläche des ersten hochdichten Phasenverschiebungsanordnungselements, die annähernd einer Fläche des ersten Detektoranordnungsabschnitts (710) entspricht, und

das erste hochdichte Polarisatoranordnungselement (530) ein 2-dimensionales Polarisationsmuster (531C, 531B) umfasst, das verschachtelte Polarisationsabschnitte von unterschiedlichen jeweiligen Typen (532C, 534C, 532B, 534B) umfasst, die unterschiedliche jeweilige Polarisationsrichtungen bereitstellen, die unterschiedliche jeweilige Sätze von Interferenzlichtkomponenten der orthogonal polarisierten Komponenten der eingegebenen kombinierten Wellenfront (129) senden und überlagern, wobei die Interferenzlichtkomponenten der unterschiedlichen jeweiligen Sätze entlang der unterschiedlichen jeweiligen Polarisationsrichtungen ausgerichtet sind und die unterschiedlichen jeweiligen Typen von verschachtelten Polarisationsabschnitten periodisch verschachtelt sind entlang wenigstens einer zweiten Richtung, die parallel zu der anderen von der Zeilen- und der Spaltenrichtung des ersten Detektoranordnungsabschnitts (710) ist, die orthogonal zu der ersten Richtung ist, wobei die verschachtelten Polarisationsabschnitte des ersten hochdichten Polarisatoranordnungselements (530) Folgendes umfassen:

mehrere von einem ersten Typ von Polarisationsabschnitten (532C, 532B), die jeweils eine erste Polarisationsrichtung bereitstellen, die einen ersten Satz von ausgerichteten Interferenzlichtkomponenten der orthogonal polarisierten Komponenten der eingegebenen kombinierten Wellenfront senden und überlagern, wobei der erste Satz von ausgerichteten Interferenzlichtkomponenten entlang der ersten Polarisationsrichtung ausgerichtet ist und wobei der erste Typ von Polarisationsabschnitten (532C, 532B) periodisch wiederholt wird entlang wenigstens der zweiten Richtung, verschachtelt mit und getrennt von wenigstens einem anderen Typ von Polarisationsabschnitt (534C, 534B), und über eine Fläche des ersten hochdichten Polarisatoranordnungselements (530), die annähernd einer Fläche des ersten Detektoranordnungsabschnitts (710) entspricht, und mehrere von einem zweiten Typ von Polarisationsabschnitten (534C, 534B), die jeweils eine zweite Polarisationsrichtung bereitstellen, die einen zweiten Satz von ausgerichteten Interferenzlichtkomponenten der orthogonal polarisierten Komponenten der eingegebenen kombinierten Wellenfront senden und überlagern, wobei der zweite Satz von ausgerichteten Interferenzlichtkomponenten entlang der zweiten Polarisationsrichtung ausgerichtet ist und wobei sich die zweite Polarisationsrichtung von der ersten Polarisationsrichtung unterscheidet und der zweite Typ von Polarisationsabschnitten (534C, 534B) periodisch wiederholt wird entlang wenigstens der zweiten Richtung, verschachtelt mit und getrennt von wenigstens dem ersten Typ von Polarisationsabschnitt (532C, 532B), und über die Fläche des ersten hochdichten Polarisatoranordnungselements (530), die annähernd einer Fläche des ersten Detektoranordnungsabschnitts (710) entspricht.

2. Interferometer nach Anspruch 1, wobei:

in der Konfiguration A der erste Typ von Phasenverschiebungsabschnitten und der zweite Typ von Phasenverschiebungsabschnitten periodisch wiederholt werden wenigstens 6-mal entlang der Phasenverschiebungsmuster-Zeilenrichtung und wenigstens 6-mal entlang der Phasenverschiebungsmuster-Spaltenrichtung und über die Fläche des ersten hochdichten Phasenverschiebungsanordnungselements, die annähernd der Fläche des ersten Detektoranordnungsabschnitts entspricht,
in der Konfiguration B der erste Typ von Polarisationsabschnitten und der zweite Typ von Polarisationsabschnitten periodisch wiederholt werden wenigstens 6-mal entlang der Polarisationsmuster-Zeilenrichtung und wenigstens 6-mal entlang der Polarisationsmuster-Spaltenrichtung und über die Fläche des ersten hochdichten Polarisatoranordnungselements, die annähernd der Fläche des ersten Detektoranordnungsabschnitts entspricht, und
in der Konfiguration C der erste Typ von Phasenverschiebungsabschnitten und der zweite Typ von Phasenverschiebungsabschnitten periodisch wiederholt werden wenigstens 6-mal entlang wenigstens der ersten Richtung und über die Fläche des ersten hochdichten Phasenverschiebungsanordnungselements, die annähernd der Fläche des ersten Detektoranordnungsabschnitts entspricht, und der erste Typ von Polarisationsabschnitten und der zweite Typ von Polarisationsabschnitten periodisch wiederholt werden wenigstens 6-mal entlang wenigstens der zweiten Richtung und über die Fläche des ersten hochdichten Polarisatoranordnungselements, die annähernd der Fläche des ersten Detektoranordnungsabschnitts entspricht.

3. Interferometer nach Anspruch 2, wobei:

in der Konfiguration A der erste Typ von Phasenverschiebungsabschnitten und der zweite Typ von Phasenverschiebungsabschnitten jeweils eine Abmessung entlang der Phasenverschiebungsmuster-Zeilenrichtung, die nicht mehr beträgt als eine Abmessung, die N Bildpunkten entlang der Zeilenrichtung in dem ersten Detektoranordnungsabschnitt entspricht, und eine Abmessung entlang der Phasenverschiebungsmuster-Spaltenrichtung, die nicht mehr beträgt als eine Abmessung, die M Bildpunkten entlang der Spaltenrichtung in dem ersten Detektoranordnungsabschnitt entspricht, haben,
in der Konfiguration B der erste Typ von Polarisationsabschnitten und der zweite Typ von Polarisationsabschnitten jeweils eine Abmessung entlang der Phasenverschiebungsmuster-Zeilenrichtung, die nicht mehr beträgt als eine Abmessung, die N Bildpunkten entlang der Zeilenrichtung in dem ersten Detektoranordnungsabschnitt entspricht, und eine Abmessung entlang der Phasenverschiebungsmuster-Spaltenrichtung, die nicht mehr beträgt als eine Abmessung, die M Bildpunkten entlang der Spaltenrichtung in dem ersten Detektoranordnungsabschnitt entspricht, haben, und

in der Konfiguration C der erste Typ von Phasenverschiebungsabschnitten und der zweite Typ von Phasenverschiebungsabschnitten jeweils eine Abmessung entlang der ersten Richtung, die nicht mehr beträgt als eine Abmessung, die N Bildpunkten entlang der ersten Richtung in dem ersten Detektoranordnungsabschnitt entspricht, haben und der erste Typ von Polarisationsabschnitten und der zweite Typ von Polarisationsabschnitten jeweils eine Abmessung entlang der zweiten Richtung, die nicht mehr beträgt als eine Abmessung, die N Bildpunkten entlang der zweiten Richtung in dem ersten Detektoranordnungsabschnitt entspricht, haben und N eine ganze Zahl ist, die höchstens 16 beträgt, und M eine ganze Zahl ist, die höchstens 16 beträgt.

4. Interferometer nach Anspruch 3, wobei N eine ganze Zahl ist, die höchstens 4 beträgt, und M eine ganze Zahl ist, die höchstens 4 beträgt.

5. Interferometer nach Anspruch 2, wobei:

die Mehrfachphasenverschiebung-Erzeugungsstruktur so konfiguriert ist, dass sie wenigstens eine der Konfigurationen A und C und nicht die Konfiguration B umfasst,

die verschachtelten Interferenzabschnitte des ersten Interferenzbildes ferner mehrere von einem dritten Typ von Interferenzabschnitten (Q1) umfassen, die jeweils ein drittes Ausmaß einer relativen Phasenverschiebung zwischen ihren Interferenzlichtkomponenten haben, wobei der dritte Typ von Interferenzabschnitten (Q1) wiederholt wird periodisch entlang der Musterzeilenrichtung, verschachtelt mit und getrennt von wenigstens einem anderen Typ von Interferenzabschnitt von dem ersten und dem zweiten Typ (Q0, Q2) in dem 2-dimensionalen Muster in dem ersten Interferenzbild des Bereichs des Gegenstandes, und periodisch entlang der Musterspaltenrichtung, verschachtelt mit und getrennt von wenigstens einem anderen Typ von Interferenzabschnitt von dem ersten und dem zweiten Typ (Q0, Q2) in dem 2-dimensionalen Muster in dem ersten Interferenzbild des Bereichs des Gegenstandes, und über die Fläche des ersten Interferenzbildes, die annähernd einer Fläche des ersten Detektoranordnungsabschnitts entspricht, und

in der Konfiguration A das erste hochdichte Phasenverschiebungsanordnungselement (460, 470, 480) ferner mehrere von einem dritten Typ von Phasenverschiebungsabschnitten (P90) umfasst, die jeweils ein drittes Ausmaß einer relativen Phasenverschiebung zwischen den orthogonal polarisierten Komponenten der eingegebenen kombinierten Wellenfront (129) bereitstellen, wobei sich das dritte Ausmaß einer relativen Phasenverschiebung von dem ersten und dem zweiten Ausmaß einer relativen Phasenverschiebung unterscheidet und der dritte Typ von Phasenverschiebungsabschnitten (P90) wiederholt wird periodisch entlang der Phasenverschiebungsmuster-Zeilenrichtung, verschachtelt mit und getrennt von wenigstens einem anderen Typ von Phasenverschiebungsabschnitt von dem ersten und dem zweiten Typ (P0, P180), und periodisch entlang der Phasenverschiebungsmuster-Spaltenrichtung, verschachtelt mit und getrennt von wenigstens einem anderen Typ von Phasenverschiebungsabschnitt von dem ersten und dem zweiten Typ (P0, P180), und über die Fläche des ersten hochdichten Phasenverschiebungsanordnungselements, die annähernd einer Fläche des ersten Detektoranordnungsabschnitts entspricht.

6. Interferometer nach Anspruch 5, wobei:

die verschachtelten Interferenzabschnitte des ersten Interferenzbildes ferner mehrere von einem vierten Typ von Interferenzabschnitten (Q3) umfassen, die jeweils ein viertes Ausmaß einer relativen Phasenverschiebung zwischen ihren Interferenzlichtkomponenten haben, wobei der vierte Typ von Interferenzabschnitten (Q3) wiederholt wird periodisch entlang der Musterzeilenrichtung, verschachtelt mit und getrennt von wenigstens einem anderen Typ von Interferenzabschnitt (Q0, Q1, Q2), und periodisch entlang der Musterspaltenrichtung, verschachtelt mit und getrennt von wenigstens einem anderen Typ von Interferenzabschnitt (Q0, Q1, Q2), wobei der vierte Typ von Interferenzabschnitten (Q3) wiederholt wird periodisch entlang der Musterzeilenrichtung, verschachtelt mit und getrennt von wenigstens einem anderen Typ von Interferenzabschnitt von dem ersten, dem zweiten und dem dritten Typ (Q0, Q1, Q2) in dem 2-dimensionalen Muster in dem ersten Interferenzbild des Bereichs des Gegenstandes, und periodisch entlang der Musterspaltenrichtung, verschachtelt mit und getrennt von wenigstens einem anderen Typ von Interferenzabschnitt von dem ersten, dem zweiten und dem dritten Typ (Q0, Q1, Q2) in dem 2-dimensionalen Muster in dem ersten Interferenzbild des Bereichs des Gegenstandes, und über die Fläche des ersten Interferenzbildes, die annähernd einer Fläche des ersten Detektoranordnungsabschnitts entspricht, und

in der Konfiguration A das erste hochdichte Phasenverschiebungsanordnungselement (460, 470, 480) ferner mehrere von einem vierten Typ von Phasenverschiebungsabschnitten (P270) umfasst, die jeweils ein viertes Ausmaß einer relativen Phasenverschiebung zwischen den orthogonal polarisierten Komponenten der eingegebenen kombinierten Wellenfront (129) bereitstellen, wobei sich das vierte Ausmaß einer relativen Phasenverschiebung von dem ersten, dem zweiten und dem dritten Ausmaß einer relativen Phasenverschiebung unterscheidet und der vierte Typ von Phasenverschiebungsabschnitten (P270) wiederholt wird periodisch entlang der Phasenverschiebungsmuster-Zeilenrichtung, verschachtelt mit und getrennt von wenigstens einem anderen Typ von Phasenverschiebungsabschnitt von dem ersten, dem zweiten und dem dritten Typ (P0, P90, P180), und periodisch entlang der Phasenverschiebungsmuster-Spaltenrichtung, verschachtelt mit und getrennt von wenigstens einem anderen Typ von Phasenverschiebungsabschnitt von dem ersten, dem zweiten und dem dritten Typ (P0, P90, P180), und über die Fläche des ersten hochdichten Phasenverschiebungsanordnungselements, die annähernd einer Fläche des ersten Detektoranordnungsabschnitts entspricht.

7.  Interferometer nach Anspruch 6, wobei:

die Mehrfachphasenverschiebung-Erzeugungsstruktur so konfiguriert ist, dass sie wenigstens die Konfiguration C und nicht die Konfigurationen A oder B umfasst, und
in der Konfiguration C der erste Typ von Interferenzabschnitten (Q0) in dem 2-dimensionalen Muster in dem ersten Interferenzbild des Bereichs des Gegenstandes räumlich deckungsgleich ist mit einem ersten Typ von Abschnitten der Mehrfachphasenverschiebung-Erzeugungsstruktur (1400""'), wobei ein Polarisationsabschnitt des ersten Typs (532C, 532B) mit einem relativen Phasenverschiebungsabschnitt des ersten Typs (P0) überlappt, gesehen entlang einer Richtung des ersten Lichtweges, und der zweite Typ von Interferenzabschnitten (Q2) in dem 2-dimensionalen Muster in dem ersten Interferenzbild des Bereichs des Gegenstandes räumlich deckungsgleich ist mit einem zweiten Typ von Abschnitten der Mehrfachphasenverschiebung-Erzeugungsstruktur (1400""'), wobei ein Polarisationsabschnitt des zweiten Typs (534C, 534B) mit einem relativen Phasenverschiebungsabschnitt des ersten Typs (P0) überlappt, gesehen entlang der Richtung des ersten Lichtweges, und der dritte Typ von Interferenzabschnitten (Q1) in dem 2-dimensionalen Muster in dem ersten Interferenzbild des Bereichs des Gegenstandes räumlich deckungsgleich ist mit einem dritten Typ von Abschnitten der Mehrfachphasenverschiebung-Erzeugungsstruktur (1400""'), wobei ein Polarisationsabschnitt des ersten Typs (532C, 532B) mit einem relativen Phasenverschiebungsabschnitt des zweiten Typs (P90) überlappt, gesehen entlang der Richtung des ersten Lichtweges, der vierte Typ von Interferenzabschnitten (Q3) in dem 2-dimensionalen Muster in dem ersten Interferenzbild des Bereichs des Gegenstandes räumlich deckungsgleich ist mit einem vierten Typ von Abschnitten der Mehrfachphasenverschiebung-Erzeugungsstruktur (1400""'), wobei ein Polarisationsabschnitt des zweiten Typs (534C, 534B) mit einem relativen Phasenverschiebungsabschnitt des zweiten Typs (P90) überlappt, gesehen entlang der Richtung des ersten Lichtweges.

8.  Interferometer nach Anspruch 7, wobei:

in der Konfiguration C der erste Typ von Phasenverschiebungsabschnitten und der zweite Typ von Phasenverschiebungsabschnitten streifenartige Abschnitte in dem 2-dimensionalen Phasenverschiebungsmuster (491A) umfassen und sich entlang der zweiten Richtung und über die Fläche des ersten hochdichten Phasenverschiebungsanordnungselements, die annähernd der Fläche des ersten Detektoranordnungsabschnitts entspricht, erstrecken, und der erste Typ von Polarisationsabschnitten und der zweite Typ von Polarisationsabschnitten streifenartige Abschnitte in dem 2-dimensionalen Polarisationsmuster (531A) umfassen und sich entlang der ersten Richtung und über die Fläche des ersten hochdichten Polarisatoranordnungselements, die annähernd der Fläche des ersten Detektoranordnungsabschnitts entspricht, erstrecken.

9.  Interferometer nach Anspruch 7, wobei:

in der Konfiguration C der erste Typ von Phasenverschiebungsabschnitten periodisch wiederholt wird entlang sowohl der ersten als auch der zweiten Richtung, verschachtelt mit und getrennt von dem zweiten Typ von Phasenverschiebungsabschnitten in dem 2-dimensionalen Muster (491 B) und über die Fläche des ersten hochdichten Phasenverschiebungsanordnungselements, die annähernd der Fläche des ersten Detektoranordnungsabschnitts entspricht, und der erste Typ von Polarisationsabschnitten periodisch wiederholt wird entlang sowohl der ersten als auch der zweiten Richtung, verschachtelt mit und getrennt von dem zweiten Typ von Polarisationsabschnitten in dem 2-dimensionalen Muster (531) und über die Fläche des ersten hochdichten Polarisatoranordnungselements, die annähernd der Fläche des ersten Detektoranordnungsabschnitts entspricht.

**10.** Interferometer nach Anspruch 6, wobei:

die Mehrfachphasenverschiebung-Erzeugungsstruktur so konfiguriert ist, dass sie wenigstens die Konfiguration A und nicht die Konfigurationen B oder C umfasst, und
in der Konfiguration A der erste, der zweite, der dritte und der vierte Typ von Interferenzabschnitten (Q0, Q2, Q1, Q3) in dem 2-dimensionalen Muster in dem ersten Interferenzbild des Bereichs des Gegenstandes räumlich deckungsgleich ist mit den Phasenverschiebungsabschnitten des ersten, des zweiten, des dritten und des vierten Typs (P0, P90, P180, P270) in dem 2-dimensionalen Phasenverschiebungsmuster (461, 471, 481) des hochdichten Phasenverschiebungsanordnungselements (460, 470, 480), gesehen entlang einer Richtung des ersten Lichtweges.

**11.** Interferometer nach Anspruch 2, wobei:

in der Konfiguration A das erste Polarisatorelement ein Drahtgitter-Polarisatorelement umfasst, das auf einer Fläche gefertigt ist, die so positioniert ist, dass sie an eine Fläche des ersten Detektoranordnungsabschnitts anstößt,
in der Konfiguration B das erste hochdichte Polarisatorelement ein Drahtgitter-Polarisatorelement umfasst, das auf einer Fläche gefertigt ist, die so positioniert ist, dass sie an eine Fläche des ersten Detektoranordnungsabschnitts anstößt, und
in der Konfiguration C das erste hochdichte Polarisatorelement ein Drahtgitter-Polarisatorelement umfasst, das auf einer Fläche gefertigt ist, die so positioniert ist, dass sie an eine Fläche des ersten Detektoranordnungsabschnitts anstößt.

**12.** Interferometer nach Anspruch 11, wobei:

in der Konfiguration A das erste Polarisatorelement ein Drahtgitter-Polarisatorelement umfasst, das auf einer Fläche des ersten hochdichten Phasenverschiebungselements gefertigt ist, die dem ersten Detektoranordnungsabschnitt gegenüberliegt,
in der Konfiguration B das erste hochdichte Polarisatorelement ein Drahtgitter-Polarisatorelement umfasst, das auf einer Fläche des ersten Phasenverschiebungselements gefertigt ist, die dem ersten Detektoranordnungsabschnitt gegenüberliegt, und
in der Konfiguration C das erste hochdichte Polarisatorelement ein Drahtgitter-Polarisatorelement umfasst, das auf einer Fläche des ersten hochdichten Phasenverschiebungselements gefertigt ist, die dem ersten Detektoranordnungsabschnitt gegenüberliegt.

**13.** Interferometer nach Anspruch 1, wobei:

die Konfiguration A (1400, 1400') ferner eine Strahlenteilungsfläche (310, 310') einschließt, die dafür angeordnet ist, die kombinierte Wellenfront (129) einzugeben und die kombinierte Wellenfront (129) zu teilen und eine erste geteilte kombinierte Wellenfront (129a) entlang des ersten Lichtweges dahin zu leiten, wo das erste hochdichte Phasenverschiebungsanordnungselement (410, 410', 460, 470, 480) angeordnet ist, um die kombinierte Wellenfront (129a) einzugeben,
die Konfiguration B (1400''', 1400'''') ferner eine Strahlenteilungsfläche (310, 310') einschließt, die dafür angeordnet ist, die kombinierte Wellenfront (129) einzugeben und die kombinierte Wellenfront (129) zu teilen und eine erste geteilte kombinierte Wellenfront (129a) entlang des ersten Lichtweges dahin zu leiten, wo das erste Phasenverschiebungselement (525, 525') angeordnet ist, um die kombinierte Wellenfront (129a) einzugeben und zu senden.

**14.** Interferometer nach Anspruch 13, wobei:

das Detektor-Untersystem (700, 700') einen zweiten Detektoranordnungsabschnitt (710b, 710b') umfasst, der entlang eines zweiten Lichtweges angeordnet ist,
die Mehrfachphasenverschiebung-Erzeugungsstruktur (1400, 1400', 1400''', 1400'''') dafür konfiguriert ist, mehrfach phasenverschobene Interferenzbildinformationen (620, 620')entlang des zweiten Lichtweges zu erzeugen und auszugeben, um durch den zweiten Detektoranordnungsabschnitt (710b, 710b') empfangen zu werden, wobei:

die Mehrfachphasenverschiebung-Erzeugungsstruktur (1400, 1400', 1400''', 1400'''') so konfiguriert ist, dass sie wenigstens eine der Konfigurationen A, B und nicht die Konfiguration C umfasst, und in jeder der Konfigurationen A, B die mehrfach phasenverschobenen Interferenzbildinformationen (620, 620'), die entlang des zweiten Lichtweges ausgegeben werden, um durch den zweiten Detektoranordnungsabschnitt (710b, 710b') empfangen zu werden, ein zweites Interferenzbild des Bereichs des Gegenstandes umfassen, wobei das zweite Interferenzbild des Bereichs des Gegenstandes ein 2-dimensionales Muster einschließt, das verschachtelte Interferenzabschnitte von unterschiedlichen jeweiligen Typen (Q0, Q1, Q2, Q3, Q120, Q240) umfasst, die unterschiedliche jeweilige Ausmaße einer relativen Phasenverschiebung zwischen ihren Interferenzlichtkomponenten haben, wobei die unterschiedlichen jeweiligen Typen von verschachtelten Interferenzabschnitten (Q0, Q1, Q2, Q3, Q120, Q240) periodisch entlang einer Musterzeilen- und einer Musterspaltenrichtung verschachtelt sind, die jeweils parallel zu der Zeilen- und der Spaltenrichtung des zweiten Detektoranordnungsabschnitts (710b, 710b') sind, wobei die verschachtelten Interferenzabschnitte des zweiten Interferenzbildes Folgendes umfassen:

mehrere von einem dritten Typ von Interferenzabschnitten (Q1), die jeweils ein drittes Ausmaß einer relativen Phasenverschiebung zwischen ihren Interferenzlichtkomponenten haben, wobei sich das dritte Ausmaß einer relativen Phasenverschiebung von dem ersten und dem zweiten Ausmaß einer relativen Phasenverschiebung des ersten und des zweiten Typs von Interferenzabschnitten (Q0, Q2) des ersten Interferenzbildes unterscheidet und der dritte Typ von Interferenzabschnitten (Q1) wiederholt wird periodisch entlang der Musterzeilenrichtung, verschachtelt mit und getrennt von wenigstens einem anderen Typ von Interferenzabschnitt (Q3, Q0, Q2), und periodisch entlang der Musterspaltenrichtung, verschachtelt mit und getrennt von wenigstens einem anderen Typ von Interferenzabschnitt (Q3, Q0, Q2) in dem 2-dimensionalen Muster in dem zweiten Interferenzbild des Bereichs des Gegenstandes, und über eine Fläche des zweiten Interferenzbildes, die annähernd einer Fläche des zweiten Detektoranordnungsabschnitts (710b, 710b') entspricht, und

mehrere von einem vierten Typ von Interferenzabschnitten (Q3), die jeweils ein viertes Ausmaß einer relativen Phasenverschiebung zwischen ihren Interferenzlichtkomponenten haben, wobei sich das vierte Ausmaß einer relativen Phasenverschiebung von dem ersten, dem zweiten und dem dritten Ausmaß unterscheidet und der vierte Typ von Interferenzabschnitten (Q3) wiederholt wird periodisch entlang der Musterzeilenrichtung, verschachtelt mit und getrennt von wenigstens einem anderen Typ von Interferenzabschnitt (Q0, Q1, Q2), und wiederholt periodisch entlang der Musterspaltenrichtung, verschachtelt mit und getrennt von wenigstens einem anderen Typ von Interferenzabschnitt (Q0, Q1, Q2) in dem 2-dimensionalen Muster in dem zweiten Interferenzbild des Bereichs des Gegenstandes, und über die Fläche des zweiten Interferenzbildes, die annähernd einer Fläche des zweiten Detektoranordnungsabschnitts (710b, 710b') entspricht,

in der Konfiguration A (1400, 1400') die Strahlenteilungsfläche (310, 310')darüber hinaus eine zweite geteilte kombinierte Wellenfront (129b) entlang des zweiten Lichtweges leitet und die Konfiguration A darüber hinaus Folgendes einschließt:

ein zweites hochdichtes Phasenverschiebungsanordnungselement (420, 420'), das entlang des zweiten Lichtweges angeordnet ist, und ein zweites Wegpolarisatorelement (510b, 510'), das dafür konfiguriert ist, eine einzige Polarisationsrichtung entlang des zweiten Lichtweges bereitzustellen, wobei:

das zweite hochdichte Phasenverschiebungsanordnungselement (420, 420') nahe dem zweiten Wegpolarisatorelement (510b, 510') angeordnet ist und dafür angeordnet und konfiguriert ist, die kombinierte Wellenfront (129b) einzugeben und sie an das zweite Wegpolarisatorelement (510b, 510') zu senden, so dass ihre orthogonal polarisierten Komponenten unterschiedliche relative Phasenverschiebungen in unterschiedlichen Abschnitten der gesendeten kombinierten Wellenfront haben,

das zweite Wegpolarisatorelement (510b, 510') eines von einem zweiten Polarisatorelement (510b) und einem Abschnitt des ersten Polarisatorelements (510') umfasst und nahe dem zweiten Detektoranordnungsabschnitt (710b, 710b') angeordnet ist und dafür angeordnet ist, die gesendete kombinierte Wellenfront (129b) einzugeben, und dafür konfiguriert ist, ausgerichtete Interferenzlichtkomponenten ihrer orthogonal polarisierten Komponenten, die unterschiedliche relative Phasenverschiebungen in unterschiedlichen Abschnitten der gesendeten kombinierten Wellenfront haben, zu überlagern und die sich ergebenden mehrfach phasenverschobenen Interferenzbildinformationen (620, 620') entlang des zweiten Lichtweges auszugeben, um durch den zweiten Detektoranordnungsabschnitt (710b, 710b') empfangen zu werden,

das zweite hochdichte Phasenverschiebungsanordnungselement (420, 420') ein 2-dimensionales Phasenverschiebungsmuster (421, 451) umfasst, das verschachtelte Phasenverschiebungsabschnitte von wenigstens zwei unterschiedlichen jeweiligen Typen (P0, P90, P180, P270, P120, P240) umfasst, die unterschiedliche jeweilige Ausmaße einer relativen Phasenverschiebung zwischen den orthogonal polarisierten Komponenten der eingegebenen kombinierten Wellenfront (129b) bereitstellen, wobei jeder in den wenigstens zwei unterschiedlichen jeweiligen Typen von verschachtelten Phasenverschiebungsabschnitten eingeschlossene Typ von Phasenverschiebungsabschnitten periodisch wiederholt wird entlang einer Phasenverschiebungsmuster-Zeilen- und einer Phasenverschiebungsmuster-Spaltenrichtung, die jeweils parallel zu der Zeilen- beziehungsweise der Spaltenrichtung des zweiten Detektoranordnungsabschnitts (710b, 710b') sind, und verschachtelt ist mit und getrennt von wenigstens einem anderen in den wenigstens zwei unterschiedlichen jeweiligen Typen von verschachtelten Phasenverschiebungsabschnitten eingeschlossenen Typ von Phasenverschiebungsabschnitt entlang sowohl der Phasenverschiebungsmuster-Zeilen- als auch der Phasenverschiebungsmuster-Spaltenrichtung, und über eine Fläche des zweiten hochdichten Phasenverschiebungsanordnungselements (420, 420'), die annähernd einer Fläche des zweiten Detektoranordnungsabschnitts (710b, 710b') entspricht, und

das zweite hochdichte Phasenverschiebungsanordnungselement (420, 420') und das zweite Wegpolarisatorelement (510b, 510') dafür konfiguriert und angeordnet sind, das zweite Interferenzbild des Bereichs des Gegenstandes bereitzustellen, das ein 2-dimensionales Muster einschließt, das wenigstens den dritten Typ von Interferenzabschnitten (Q1) und den vierten Typ von Interferenzabschnitten (Q3) einschließt, und

in der Konfiguration B (1400''', 1400'''') die Strahlenteilungsfläche (310, 310') darüber hinaus eine zweite geteilte kombinierte Wellenfront (129b) entlang des zweiten Lichtweges leitet und die Konfiguration B darüber hinaus Folgendes einschließt:

ein hochdichtes Zweitweg-Polarisatoranordnungselement (530b, 530'), das entlang des zweiten Lichtweges angeordnet ist, und ein zweites Phasenverschiebungselement (520, 520'), das dafür konfiguriert ist, ein einziges Ausmaß einer relativen Phasenverschiebung entlang des zweiten Lichtweges bereitzustellen, wobei:

das zweite Phasenverschiebungselement (520, 520') nahe dem hochdichten Zweitweg-Polarisatoranordnungselement (530b, 530') angeordnet ist und dafür konfiguriert und angeordnet ist, die kombinierte Wellenfront (129b) einzugeben und sie an das hochdichte Zweitweg-Polarisatoranordnungselement (530b, 530') zu senden, so dass ihre orthogonal polarisierten Komponenten die gleiche relative Phasenverschiebung in unterschiedlichen Abschnitten der gesendeten kombinierten Wellenfront (129b) erfahren,

das hochdichte Zweitweg-Polarisatoranordnungselement (530b, 530') eines von einem zweiten Polarisatorelement (530b) und einem Abschnitt des ersten hochdichten Polarisatorelements (530') umfasst und nahe dem zweiten Detektoranordnungsabschnitt (710b, 710b') angeordnet ist und dafür angeordnet ist, die gesendete kombinierte Wellenfront (129b) einzugeben, und dafür konfiguriert ist, ausgerichtete Interferenzlichtkomponenten ihrer orthogonal polarisierten Komponenten, die unterschiedliche relative Phasenverschiebungen in unterschiedlichen Abschnitten der gesendeten kombinierten Wellenfront haben, zu überlagern und die sich ergebenden mehrfach phasenverschobenen Interferenzbildinformationen (620, 620') entlang des zweiten Lichtweges auszugeben, um durch den zweiten Detektoranordnungsabschnitt (710b, 710b') empfangen zu werden,

das hochdichte Zweitweg-Polarisatoranordnungselement (530b, 530') ein 2-dimensionales Polarisationsmuster (531A, 531 B) umfasst, das verschachtelte Polarisationsabschnitte von zwei unterschiedlichen jeweiligen Typen (532A, 534A, 532B, 534B) umfasst, die unterschiedliche jeweilige Polarisationsrichtungen bereitstellen, die unterschiedliche jeweilige Sätze von Interferenzlichtkomponenten der orthogonal polarisierten Komponenten der gesendeten kombinierten Wellenfront (129b) senden und überlagern, wobei die Interferenzlichtkomponenten der unterschiedlichen jeweiligen Sätze entlang der unterschiedlichen jeweiligen Polarisationsrichtungen ausgerichtet sind und jeder in den zwei unterschiedlichen jeweiligen Typen von verschachtelten Polarisationsabschnitten (532A, 534A, 532B, 534B) eingeschlossene Typ von Polarisationsabschnitt periodisch wiederholt wird entlang einer Polarisationsmuster-Zeilen-und einer Polarisationsmuster-Spaltenrichtung, die jeweils parallel zu der Zeilenbeziehungsweise der Spaltenrichtung des zweiten Detektoranordnungsabschnitts (710b, 710b') sind, und verschachtelt ist mit und getrennt von wenigstens dem anderen Typ von Polarisationsabschnitt entlang sowohl der Polarisationsmuster-Zeilen- als auch der Polarisationsmuster-Spaltenrichtung, und über eine Fläche des hochdichten Zweitweg-Polarisatoranordnungselements (530b, 530'), die annähernd einer Fläche des zweiten Detektoranordnungsabschnitts (710b, 710b') entspricht, und

das hochdichte Zweitweg-Polarisatoranordnungselement (530b, 530') und das zweite Phasenverschiebungselement (520, 520') dafür konfiguriert und angeordnet sind, das zweite Interferenzbild des Bereichs des Gegenstandes bereitzustellen, das ein 2-dimensionales Muster einschließt, das wenigstens den dritten Typ von Interferenzabschnitten (Q1) und den vierten Typ von Interferenzabschnitten (Q3) umfasst.

## Revendications

1. Interféromètre destiné à analyser une dimension d'un objet d'après des informations d'interférence déphasée multiple entrelacée, comprenant :

   une portion de transmission (102) configurée pour diriger des première et seconde lumières polarisées orthogonalement (122, 126) d'un faisceau de lumière cohérente (112) vers un élément de référence et une région d'un objet (130), respectivement, et pour combiner des première et seconde composantes de lumière polarisées orthogonalement renvoyées de l'élément de référence et une région de l'objet dans un front d'onde combiné (129) correspondant à la région de l'objet, et pour sortir le front d'onde combiné (129) ; et
   une portion de génération d'image de déphasage multiple (1600, 3000, 4000, 5000, 3000', 4000', 6000, 7000) agencée pour entrer le front d'onde combiné (129) et la portion de génération d'image de déphasage multiple (1600, 3000, 4000, 5000, 3000', 4000', 6000, 7000) comprenant :

   un sous-système de détecteur (700, 700', 700") comprenant au moins une première portion de tableau de détecteurs (710a, 710a', 710) agencée sur un premier chemin optique, chaque portion de tableau de détecteurs incluant un tableau de pixels de détecteur agencé en lignes qui s'étendent suivant une direction de ligne et des colonnes qui s'étendent suivant une direction de colonne ; et
   une structure de génération de déphasage multiple (1400, 1400', 1400", 1400''', 1400'''', 1400''''') agencée à proximité du sous-système de détecteur (700, 700', 700") pour entrer le front d'onde combiné (129) configuré pour générer et sortir des informations d'image d'interférence déphasée multiple (600, 610, 610', 630, 640) au moins suivant le premier chemin optique pour qu'elles soient reçues par la première portion de tableau de détecteurs (710a, 710a', 710),
   dans lequel :

   la structure de génération de déphasage multiple (1400, 1400', 1400", 1400''', 1400'''', 1400''''') est configurée pour comprendre au moins l'une de configurations A, B et C, dans lequel dans chacune des configurations A, B et C, les informations d'image d'interférence déphasée multiple (600, 610, 610', 630, 640) qui sont générées et sorties suivant le premier chemin optique pour être reçues par la première portion de tableau de détecteurs (710a, 710a', 710) comprennent une première image d'interférence de la région de l'objet, la première image d'interférence de la région de l'objet incluant un motif en 2 dimensions (640A, 640B, 640C, 640D) comprenant des portions d'interférence entrelacées de différents types respectifs (Q0, Q1, Q2, Q3, Q120, Q240) ayant des quantités respectives différentes de déphasage relatif entre leurs composantes de lumière d'interférence, dans lequel les types respectifs différents de portions d'interférence entrelacées (Q0, Q1, Q2, Q3, Q120, Q240) sont entrelacés périodiquement suivant des directions de ligne de motif et de colonne de motif qui sont respectivement parallèles aux directions de ligne et de colonne de la première portion de tableau de détecteurs (710a, 710a', 710), les portions d'interférence entrelacées de la première image d'interférence comprenant :

   une pluralité d'un premier type de portions d'interférence (Q0) qui ont chacune une première quantité de déphasage relatif entre leurs composantes de lumière d'interférence, dans lequel le premier type de portions d'interférence (Q0) est répété périodiquement suivant la direction de ligne de motif entrelacé avec et séparé par au moins un autre type de portion d'interférence (Q1, Q2, Q3), et périodiquement suivant la direction de colonne de motif entrelacé avec et séparé par au moins un autre type de portion d'interférence (Q1, Q2, Q3) dans le motif en 2 dimensions dans la première image d'interférence de la région de l'objet, et à travers une aire de la première image d'interférence qui correspond approximativement à une aire de la première portion de tableau de détecteurs (710a, 710a', 710) ; et

une pluralité d'un deuxième type de portions d'interférence (Q2) qui ont chacune une deuxième quantité de déphasage relatif entre leurs composantes de lumière d'interférence, dans lequel la deuxième quantité de déphasage relatif est différente de la première quantité, et le deuxième type de portions d'interférence (Q2) est répété périodiquement suivant la direction de ligne de motif entrelacé avec et séparé par au moins un autre type de portion d'interférence (Q0, Q1, Q3), et répété périodiquement suivant la direction de colonne de motif entrelacé avec et séparé par au moins un autre type de portion d'interférence (Q0, Q1, Q3) dans le motif en 2 dimensions dans la première image d'interférence de la région de l'objet, et à travers l'aire de la première image d'interférence qui correspond approximativement à une aire de la première portion de tableau de détecteurs (710a, 710a', 710);

et dans lequel :

la configuration A (1400, 1400', 1400") inclut un premier élément de tableau de déphasage de haute densité (410, 410', 460, 470, 480) agencé suivant le premier chemin optique et un premier élément polariseur (510a, 510', 510) configuré pour fournir une direction de polarisation unique suivant le premier chemin optique, dans lequel :

le premier élément de tableau de déphasage de haute densité (410, 410', 460, 470, 480) est agencé à proximité du premier élément polariseur (510a, 510', 510), et est agencé et configuré pour entrer le front d'onde combiné (129, 129a) et le transmettre au premier élément polariseur (510a, 510', 510) de telle sorte que ses composantes polarisées orthogonalement aient des déphasages relatifs différents dans des portions différentes du front d'onde combiné transmis ;

le premier élément polariseur (510a, 510', 510) est agencé à proximité de la première portion de tableau de détecteurs (710a, 710a', 710), et est agencé pour entrer le front d'onde combiné transmis, et est configuré pour faire interférer des composantes de lumière d'interférence alignées de ses composantes polarisées orthogonalement qui ont des déphasages relatifs différents dans des portions différentes du front d'onde combiné transmis, et pour sortir les informations d'image d'interférence déphasée multiple résultantes (600, 610, 610', 630, 640) suivant le premier chemin optique pour qu'elles soient reçues par la première portion de tableau de détecteurs (710a, 710a', 710) ;

le premier élément de tableau de déphasage de haute densité (410, 410', 460, 470, 480) comprend un motif de déphasage en 2 dimensions (411, 431, 461, 471, 481) comprenant des portions de déphasage entrelacées de types respectifs différents (P0, P90, P180, P270, P120, P240) qui fournissent des quantités respectives différentes de déphasage relatif entre les composantes polarisées orthogonalement du front d'onde combiné entré (129, 129a), dans lequel les types respectifs différents de portions de déphasage entrelacées (P0, P90, P180, P270, P120, P240) sont entrelacés périodiquement suivant les directions de ligne de motif de déphasage et de colonne de motif de déphasage qui sont respectivement parallèles aux directions de ligne et de colonne de la première portion de tableau de détecteurs (710a, 710a', 710), les portions de déphasage entrelacées du premier élément de tableau de déphasage de haute densité (410, 410', 460, 470, 480) comprenant :

une pluralité d'un premier type de portions de déphasage (P0) qui fournissent chacune une première quantité de déphasage relatif entre les composantes polarisées orthogonalement du front d'onde combiné entré (129, 129a), dans lequel le premier type de portions de déphasage (P0) est répété périodiquement suivant la direction de ligne de motif de déphasage entrelacé avec et séparé par au moins un autre type de portion de déphasage (P90, P180, P270), et périodiquement suivant la direction de colonne de motif de déphasage entrelacé avec et séparé par au moins un autre type de portion de déphasage (P90, P180, P270), et à travers une aire du premier élément de tableau de déphasage de haute densité (410, 410', 460, 470, 480) qui correspond approximativement à une aire de la première portion de tableau de détecteurs (710a, 710a', 710) ; et

une pluralité d'un deuxième type de portions de déphasage (P180) qui fournissent chacune une deuxième quantité de déphasage relatif entre les composantes polarisées orthogonalement du front d'onde combiné entré (129, 129a), dans lequel la deuxième quantité de déphasage relatif est différente de la première quantité de déphasage relatif, et le deuxième type de portions de déphasage (P180) est répété périodiquement suivant la direction de ligne de motif de déphasage entrelacé avec et séparé par au moins un autre type de portion de déphasage (P0, P90, P270), et périodiquement suivant la direction de colonne de motif de déphasage entrelacé avec et séparé par au moins un autre type de portion de déphasage (P0, P90, P270), et à travers l'aire du premier élément de tableau de déphasage de haute densité qui correspond approximativement à une aire de la première portion de tableau de détecteurs (710a, 710a', 710) ;

dans lequel le deuxième type de portions de déphasage (P180) est entrelacé de manière répétée avec et séparé par le premier type de portions de déphasage (P0) suivant au moins l'une des directions de ligne de motif de déphasage et de colonne de motif de déphasage dans le motif de déphasage en 2 dimensions (411, 431, 461, 471, 481) dans le premier élément de tableau de déphasage de haute densité (410, 410', 460, 470, 480), et,

la configuration B (1400''', 1400'''') inclut un premier élément de tableau de polariseur de haute densité (530a, 530') agencé suivant le premier chemin optique et un premier élément de déphasage (525, 525') configuré pour fournir une quantité unique de déphasage relatif suivant le premier chemin optique, dans lequel :

le premier élément de déphasage (525, 525') est agencé à proximité du premier élément de tableau de polariseur de haute densité (530a, 530'), et est configuré et agencé pour entrer le front d'onde combiné (129, 129a) et le transmettre au premier élément de tableau de polariseur de haute densité (530a, 530') de telle sorte que ses composantes polarisées orthogonalement subissent le même déphasage relatif dans des portions différentes du front d'onde combiné transmis ; le premier élément de tableau de polariseur de haute densité (530a, 530') est agencé à proximité de la première portion de tableau de détecteurs (710a, 710a'), et est agencé pour entrer le front d'onde combiné transmis, et est configuré pour transmettre et faire interférer des composantes de lumière d'interférence alignées de ses composantes polarisées orthogonalement à l'aide de directions de polarisation différentes dans des portions différentes du front d'onde combiné transmis, et pour sortir les informations d'image d'interférence déphasée multiple résultantes (600, 610, 610', 630, 640) suivant le premier chemin optique pour qu'elles soient reçues par la première portion de tableau de détecteurs (710a, 710a') ; le premier élément de tableau de polariseur de haute densité (530a, 530') comprend un motif de polarisation en 2 dimensions (531A, 531 B) comprenant des portions de polarisation entrelacées de types respectifs différents (532A, 534A, 532B, 534B) qui fournissent des directions de polarisation respectives différentes qui transmettent et font interférer des jeux respectifs différents de composantes de lumière d'interférence des composantes polarisées orthogonalement du front d'onde combiné transmis (129, 129a), dans lequel les composantes de lumière d'interférence des jeux respectifs différents sont alignées suivant les directions de polarisation respectives différentes, et les types respectifs différents de portions de polarisation entrelacées (532A, 534A, 532B, 534B) sont entrelacés périodiquement suivant des directions de ligne de motif de polarisation et de colonne de motif de polarisation qui sont respectivement parallèles aux directions de ligne et de colonne de la première portion de tableau de détecteurs (710a, 710a'), les portions de polarisation entrelacées du premier élément de tableau de polariseur de haute densité (530a, 530') comprenant :

une pluralité d'un premier type de portions de polarisation (532A, 532B) qui fournissent chacune une première direction de polarisation qui transmet et fait interférer un premier jeu de composantes de lumière d'interférence alignées des composantes polarisées orthogonalement du front d'onde combiné transmis (129), dans lequel le premier jeu de composantes de lumière d'interférence alignées est aligné suivant la première direction de polarisation, et dans lequel le premier type de portions de polarisation (532A, 532B) est répété périodiquement suivant la direction de ligne de motif de polarisation entrelacé avec et séparé par un deuxième type de portion de polarisation (534A, 534B), et périodiquement suivant la direction de colonne de motif de polarisation entrelacé avec et séparé par le deuxième type de portion de polarisation (534A, 534B), et à travers une aire du premier élément de tableau de polariseur de haute densité (530a, 530') qui correspond approximativement à une aire de la première portion de tableau de détecteurs (710a, 710a') ; et

une pluralité d'un deuxième type de portions de polarisation (534A, 534B) qui fournissent chacune une seconde direction de polarisation qui transmet et fait interférer un second jeu de composantes de lumière d'interférence alignées des composantes polarisées orthogonalement du front d'onde combiné transmis, dans lequel le second jeu de composantes de lumière d'interférence alignées est aligné suivant la seconde direction de polarisation, et dans lequel la seconde direction de polarisation est orthogonale à la première direction de polarisation, et le deuxième type de portions de polarisation (534A, 534B) est répété périodiquement suivant la direction de ligne de motif de polarisation entrelacé avec et séparé par le premier type de portion de polarisation (532A, 532B), et périodiquement suivant la direction de colonne de motif de polarisation entrelacé avec et séparé par le premier type de portion de polarisation (532A, 532B), et à travers l'aire du premier élément de tableau de polariseur de haute densité (530a, 530') qui correspond approximativement à une aire de la première portion de tableau de détecteurs (710a, 710a'),

et

la configuration C (1400'''') inclut un premier élément de tableau de déphasage de haute densité (490) agencé suivant le premier chemin optique et un premier élément de tableau de polariseur de haute densité (530) agencé suivant le premier chemin optique, dans lequel :

le premier élément de tableau de déphasage de haute densité (490) est agencé à proximité du premier élément de tableau de polariseur de haute densité (530), et est agencé et configuré pour entrer le front d'onde combiné (129) et le transmettre au premier élément de tableau de polariseur de haute densité (530) de telle sorte que ses composantes polarisées orthogonalement aient des déphasages relatifs différents dans des portions différentes du front d'onde combiné transmis ;

le premier élément de tableau de polariseur de haute densité (530) est agencé à proximité de la première portion de tableau de détecteurs (710), et est agencé pour entrer le front d'onde combiné transmis, et est configuré pour transmettre et faire interférer des composantes de lumière d'interférence alignées de ses composantes polarisées orthogonalement à l'aide de directions de polarisation différentes dans des portions différentes du front d'onde combiné transmis, et pour sortir les informations d'image d'interférence déphasée multiple résultantes (600, 610, 610', 630, 640) suivant le premier chemin optique pour qu'elles soient reçues par la première portion de tableau de détecteurs (710) ;

le premier élément de tableau de déphasage de haute densité (490) comprend un motif de déphasage en 2 dimensions (491A, 491 B) comprenant des portions de déphasage entrelacées de types respectifs différents (P0, P90, P180, P270, P120, P240) qui fournissent des quantités

EP 1 411 321 B1

respectives différentes de déphasage relatif entre les composantes polarisées orthogonalement du front d'onde combiné entré (129), dans lequel les types respectifs différents de portions de déphasage entrelacées (P0, P90, P180, P270, P120, P240) sont entrelacés périodiquement suivant au moins une première direction qui est parallèle à une première des directions de ligne et de colonne de la première portion de tableau de détecteurs (710), les portions de déphasage entrelacées du premier élément de tableau de déphasage de haute densité (490) comprenant :

une pluralité d'un premier type de portions de déphasage (P0) qui fournissent chacune une première quantité de déphasage relatif entre les composantes polarisées orthogonalement du front d'onde combiné entré (129), dans lequel le premier type de portions de déphasage (P0) est répété périodiquement suivant au moins la première direction entrelacé avec et séparé par au moins un autre type de portion de déphasage (P90) suivant au moins la première direction, et à travers une aire du premier élément de tableau de déphasage de haute densité qui correspond approximativement à une aire de la première portion de tableau de détecteurs (710) ; et

une pluralité d'un deuxième type de portions de déphasage (P90) qui fournissent chacune une deuxième quantité de déphasage relatif entre les composantes polarisées orthogonalement du front d'onde combiné entré (129), dans lequel la deuxième quantité de déphasage relatif est différente de la première quantité de déphasage relatif, et le deuxième type de portions de déphasage (P90) est répété périodiquement suivant au moins la première direction entrelacé avec et séparé par au moins le premier type de portion de déphasage (P0) suivant au moins la première direction, et répété périodiquement à travers l'aire du premier élément de tableau de déphasage de haute densité qui correspond approximativement à une aire de la première portion de tableau de détecteurs (710) ; et

le premier élément de tableau de polariseur de haute densité (530) comprend un motif de polarisation en 2 dimensions (531C, 531B) comprenant des portions de polarisation entrelacées de types respectifs différents (532C, 534C, 532B, 534B) qui fournissent des directions de polarisation respectives différentes qui transmettent et font interférer des jeux respectifs différents de composantes de lumière d'interférence des composantes polarisées orthogonalement du front d'onde combiné transmis (129), dans lequel les composantes de lumière d'interférence des jeux respectifs différents sont alignées suivant les directions de polarisation respectives différentes, et les types respectifs différents de portions de polarisation entrelacées sont entrelacés périodiquement suivant au moins une seconde direction qui est parallèle à l'autre des directions de ligne et de colonne de la première portion de tableau de détecteurs (710) qui est orthogonale à la première direction, les portions de polarisation entrelacées du premier élément de tableau de polariseur de haute densité (530) comprenant :

une pluralité d'un premier type de portions de polarisation (532C, 532B) qui fournissent chacune une première direction de polarisation qui transmet et fait interférer un premier jeu de composantes de lumière d'interférence alignées des composantes polarisées orthogonalement du front d'onde combiné transmis, dans lequel le premier jeu de composantes de lumière d'interférence alignées est aligné suivant la première direction de polarisation, et dans lequel le premier type de portions de polarisation (532C, 532B) est répété périodiquement suivant au

71

moins la seconde direction entrelacé avec et séparé par au moins un autre type de portion de polarisation (534C, 534B), et à travers une aire du premier élément de tableau de polariseur de haute densité (530) qui correspond approximativement à une aire de la première portion de tableau de détecteurs (710) ; et une pluralité d'un deuxième type de portions de polarisation (534C, 534B) qui fournissent chacune une seconde direction de polarisation qui transmet et fait interférer un second jeu de composantes de lumière d'interférence alignées des composantes polarisées orthogonalement du front d'onde combiné transmis, dans lequel le second jeu de composantes de lumière d'interférence alignées est aligné suivant la seconde direction de polarisation, et dans lequel la seconde direction de polarisation est différente de la première direction de polarisation, et le deuxième type de portions de polarisation (534C, 534B) est répété périodiquement suivant au moins la seconde direction entrelacé avec et séparé par au moins le premier type de portion de polarisation (532C, 532B), et à travers l'aire du premier élément de tableau de polariseur de haute densité (530) qui correspond approximativement à une aire de la première portion de tableau de détecteurs (710).

**2.** Interféromètre selon la revendication 1, dans lequel :

dans la configuration A, le premier type de portions de déphasage et le deuxième type de portions de déphasage sont répétés périodiquement au moins 6 fois suivant la direction de ligne de motif de déphasage et au moins 6 fois suivant la direction de colonne de motif de déphasage, et à travers l'aire du premier élément de tableau de déphasage de haute densité qui correspond approximativement à l'aire de la première portion de tableau de détecteurs ;

dans la configuration B, le premier type de portions de polarisation et le deuxième type de portions de polarisation sont répétés périodiquement au moins 6 fois suivant la direction de ligne de motif de polarisation et au moins 6 fois suivant la direction de colonne de motif de polarisation, et à travers l'aire du premier élément de tableau de polariseur de haute densité qui correspond approximativement à l'aire de la première portion de tableau de détecteurs ; et

dans la configuration C, le premier type de portions de déphasage et le deuxième type de portions de déphasage sont répétés périodiquement au moins 6 fois suivant au moins la première direction, et à travers l'aire du premier élément de tableau de déphasage de haute densité qui correspond approximativement à l'aire de la première portion de tableau de détecteurs, et le premier type de portions de polarisation et le deuxième type de portions de polarisation sont répétés périodiquement au moins 6 fois suivant au moins la seconde direction, et à travers l'aire du premier élément de tableau de polariseur de haute densité qui correspond approximativement à l'aire de la première portion de tableau de détecteurs.

**3.** Interféromètre selon la revendication 2, dans lequel :

dans la configuration A, le premier type de portions de déphasage et le deuxième type de portions de déphasage ont chacun une dimension suivant la direction de ligne de motif de déphasage qui est non supérieure à une dimension correspondant à N pixels suivant la direction de ligne dans la première portion de tableau de détecteurs, et une dimension suivant la direction de colonne de motif de déphasage qui est non supérieure à une dimension correspondant à M pixels suivant la direction de colonne dans la première portion de tableau de détecteurs ;

dans la configuration B, le premier type de portions de polarisation et le deuxième type de portions de polarisation ont chacun une dimension suivant la direction de ligne de motif de déphasage qui est non supérieure à une dimension correspondant à N pixels suivant la direction de ligne dans la première portion de tableau de détecteurs, et une dimension suivant la direction de colonne de motif de déphasage qui est non supérieure à une dimension correspondant à M pixels suivant la direction de colonne dans la première portion de tableau de détecteurs ;

dans la configuration C, le premier type de portions de déphasage et le deuxième type de portions de déphasage ont chacun une dimension suivant la première direction qui est non supérieure à une dimension correspondant à N pixels suivant la première direction dans la première portion de tableau de détecteurs, et le premier type de portions de polarisation et le deuxième type de portions de polarisation ont chacun une dimension suivant la seconde direction qui est non supérieure à une dimension correspondant à N pixels suivant la seconde direction dans la première portion de tableau de détecteurs ; et

N est un nombre entier qui est d'au plus 16 et M est un nombre entier qui est d'au plus 16.

4. Interféromètre selon la revendication 3, dans lequel N est un nombre entier qui est d'au plus 4 et M est un nombre entier qui est d'au plus 4.

5. Interféromètre selon la revendication 2, dans lequel :

la structure de génération de déphasage multiple est configurée pour comprendre au moins l'une des configurations A et C, et pas la configuration B ;

les portions d'interférence entrelacées de la première image d'interférence comprennent en outre une pluralité d'un troisième type de portions d'interférence (Q1) qui ont chacune une troisième quantité de déphasage relatif entre leurs composantes de lumière d'interférence, dans lequel le troisième type de portions d'interférence (Q1) est répété périodiquement suivant la direction de ligne de motif entrelacé avec et séparé par au moins un autre type de portion d'interférence des premier et deuxième types (Q0, Q2) dans le motif en 2 dimensions dans la première image d'interférence de la région de l'objet, et périodiquement suivant la direction de colonne de motif entrelacé avec et séparé par au moins un autre type de portion d'interférence des premier et deuxième types (Q0, Q2) dans le motif en 2 dimensions de la première image d'interférence de la région de l'objet, et à travers l'aire de la première image d'interférence qui correspond approximativement à une aire de la première portion de tableau de détecteurs ; et

dans la configuration A, le premier élément de tableau de déphasage de haute densité (460, 470, 480) comprend en outre une pluralité d'un troisième type de portions de déphasage (P90) qui fournissent chacune une troisième quantité de déphasage relatif entre les composantes polarisées orthogonalement du front d'onde combiné entré (129), dans lequel la troisième quantité de déphasage relatif est différente des première et deuxième quantités de déphasage relatif, et le troisième type de portions de déphasage (P90) est répété périodiquement suivant la direction de ligne de motif de déphasage entrelacé avec et séparé par au moins un autre type de portion de déphasage des premier et deuxième types (P0, P180), et périodiquement suivant la direction de colonne de motif de déphasage entrelacé avec et séparé par au moins un autre type de portion de déphasage des premier et deuxième types (P0, P180), et à travers l'aire du premier élément de tableau de déphasage de haute densité qui correspond approximativement à une aire de la première portion de tableau de détecteurs.

6. Interféromètre selon la revendication 5, dans lequel :

les portions d'interférence entrelacées de la première image d'interférence comprennent en outre une pluralité d'un quatrième type de portions d'interférence (Q3) qui ont chacune une quatrième quantité de déphasage relatif entre leurs composantes de lumière d'interférence, dans lequel le quatrième type de portions d'interférence (Q3) est répété périodiquement suivant la direction de ligne de motif entrelacé avec et séparé par au moins un autre type de portion d'interférence (Q0, Q1, Q2), et périodiquement suivant la direction de colonne de motif entrelacé avec et séparé par au moins un autre type de portion d'interférence (Q0, Q1, Q2) ; dans lequel le quatrième type de portions d'interférence (Q3) est répété périodiquement suivant la direction de ligne de motif entrelacé avec et séparé par au moins un autre type de portion d'interférence des premier, deuxième et troisième types (Q0, Q1, Q2) dans le motif en 2 dimensions dans la première image d'interférence de la région de l'objet, et périodiquement suivant la direction de colonne de motif entrelacé avec et séparé par au moins un autre type de portion d'interférence des premier, deuxième et troisième types (Q0, Q1, Q2) dans le motif en 2 dimensions dans la première image d'interférence de la région de l'objet, et à travers l'aire de la première image d'interférence qui correspond approximativement à une aire de la première portion de tableau de détecteurs ; et

dans la configuration A, le premier élément de tableau de déphasage de haute densité (460, 470, 480) comprend en outre une pluralité d'un quatrième type de portions de déphasage (P270) qui fournissent chacune une quatrième quantité de déphasage relatif entre les composantes polarisées orthogonalement du front d'onde combiné entré (129), dans lequel la quatrième quantité de déphasage relatif est différente des première, deuxième et troisième quantités de déphasage relatif, et le quatrième type de portions de déphasage (P270) est répété périodiquement suivant la direction de ligne de motif de déphasage entrelacé avec et séparé par au moins un autre type de portion de déphasage des premier, deuxième et troisième types (P0, P90, P180), et périodiquement suivant la direction de colonne de motif de déphasage entrelacé avec et séparé par au moins un autre type de portion de déphasage des premier, deuxième et troisième types (P0, P90, P180), et à travers l'aire du premier élément de tableau de déphasage de haute densité qui correspond approximativement à une aire de la première portion de tableau de détecteurs.

**7.** Interféromètre selon la revendication 6, dans lequel :

la structure de génération de déphasage multiple est configurée pour comprendre au moins la configuration C, et pas les configurations A ou B ; et
dans la configuration C, le premier type de portions d'interférence (Q0) dans le motif en 2 dimensions dans la première image d'interférence de la région de l'objet est spatialement congruent avec un premier type de portions de la structure de génération de déphasage multiple (1400''''') dans lequel une portion de polarisation du premier type (532C, 532B) chevauche une portion de déphasage relatif du premier type (P0), dans une vue suivant une direction du premier chemin optique, et le deuxième type de portions d'interférence (Q2) dans le motif en 2 dimensions dans la première image d'interférence de la région de l'objet est spatialement congruent avec un deuxième type de portions de la structure de génération de déphasage multiple (1400'''''), dans lequel une portion de polarisation du deuxième type (534C, 534B) chevauche une portion de déphasage relatif du premier type (P0), dans une vue suivant la direction du premier chemin optique, et le troisième type de portions d'interférence (Q1) dans le motif en 2 dimensions dans la première image d'interférence de la région de l'objet est spatialement congruent avec un troisième type de portions de la structure de génération de déphasage multiple (1400'''''), dans lequel une portion de polarisation du premier type (532C, 532B) chevauche une portion de déphasage relatif du deuxième type (P90) dans une vue suivant la direction du premier chemin optique, le quatrième type de portions d'interférence (Q3) dans le motif en 2 dimensions dans la première image d'interférence de la région de l'objet est spatialement congruent avec un quatrième type de portions de la structure de génération de déphasage multiple (1400'''''), dans lequel une portion de polarisation du deuxième type (534C, 534B) chevauche une portion de déphasage relatif du deuxième type (P90) dans une vue suivant la direction du premier chemin optique.

**8.** Interféromètre selon la revendication 7, dans lequel :

dans la configuration C, le premier type de portions de déphasage et le deuxième type de portions de déphasage comprennent des portions de type rayure dans le motif de déphasage en 2 dimensions (491A), et s'étendent suivant la seconde direction et à travers l'aire du premier élément de tableau de déphasage de haute densité qui correspond approximativement à l'aire de la première portion de tableau de détecteurs, et le premier type de portions de polarisation et le deuxième type de portions de polarisation comprennent des portions de type rayure dans le motif de polarisation en 2 dimensions (531C), et s'étendent suivant la première direction, et à travers l'aire du premier élément de tableau de polariseur de haute densité qui correspond approximativement à l'aire de la première portion de tableau de détecteurs.

**9.** Interféromètre selon la revendication 7, dans lequel :

dans la configuration C, le premier type de portions de déphasage est répété périodiquement suivant chacune des première et seconde directions entrelacé avec et séparé par le deuxième type de portions de déphasage dans le motif de déphasage en 2 dimensions (491B), et à travers l'aire du premier élément de tableau de déphasage de haute densité qui correspond approximativement à l'aire de la première portion de tableau de détecteurs, et le premier type de portions de polarisation est répété périodiquement suivant chacune des première et seconde directions entrelacé avec et séparé par le deuxième type de portions de polarisation dans le motif de polarisation en 2 dimensions (531), et à travers l'aire du premier élément de tableau de polariseur de haute densité qui correspond approximativement à l'aire de la première portion de tableau de détecteurs.

**10.** Interféromètre selon la revendication 6, dans lequel :

la structure de génération de déphasage multiple est configurée pour comprendre au moins la configuration A, et pas les configurations B ou C ; et
dans la configuration A, les premier, deuxième, troisième et quatrième types de portions d'interférence (Q0, Q2, Q1, Q3) dans le motif en 2 dimensions dans la première image d'interférence de la région de l'objet sont respectivement spatialement congruents avec les premier, deuxième, troisième et quatrième types de portions de déphasage (P0, P90, P180, P270) dans le motif de déphasage en 2 dimensions (461, 471, 481) de l'élément de tableau de déphasage de haute densité (460, 470, 480), dans une vue suivant une direction du premier chemin optique.

**11.** Interféromètre selon la revendication 2, dans lequel :

dans la configuration A, le premier élément polariseur comprend un élément polariseur à maillage fabriqué sur une surface positionnée pour joindre une surface de la première portion de tableau de détecteurs ;
dans la configuration B, le premier élément de tableau de polariseur de haute densité comprend un élément polariseur à maillage fabriqué sur une surface positionnée pour joindre une surface de la première portion de tableau de détecteurs ; et
dans la configuration C, le premier élément de tableau de polariseur de haute densité comprend un élément polariseur à maillage fabriqué sur une surface positionnée pour joindre une surface de la première portion de tableau de détecteurs.

**12.** Interféromètre selon la revendication 11, dans lequel :

dans la configuration A, le premier élément polariseur comprend un élément polariseur à maillage fabriqué sur une surface du premier élément de tableau de déphasage de haute densité qui fait face à la première portion de tableau de détecteurs ;
dans la configuration B, le premier élément de tableau de polariseur de haute densité comprend un élément polariseur à maillage fabriqué sur une surface du premier élément de déphasage qui fait face à la première portion de tableau de détecteurs ; et
dans la configuration C, le premier élément de tableau de polariseur de haute densité comprend un élément polariseur à maillage fabriqué sur une surface du premier élément de tableau de déphasage de haute densité qui fait face à la première portion de tableau de détecteurs.

**13.** Interféromètre selon la revendication 1, dans lequel :

la configuration A (1400, 1400') inclut en outre une surface de division de faisceau (310, 310') qui est agencée pour entrer le front d'onde combiné (129) et diviser le front d'onde combiné (129) et diriger un premier front d'onde combiné divisé (129a) suivant le premier chemin optique jusqu'à l'endroit où le premier élément de tableau de déphasage de haute densité (410, 410', 460, 470, 480) est agencé pour entrer le front d'onde combiné (129a) ; et
la configuration B (1400''', 1400'''') inclut en outre une surface de division de faisceau (310, 310') qui est agencée pour entrer le front d'onde combiné (129) et diviser le front d'onde combiné (129) et diriger un premier front d'onde combiné divisé (129a) suivant le premier chemin optique jusqu'à l'endroit où le premier élément de déphasage (525, 525') est agencé pour entrer et transmettre le front d'onde combiné (129a).

**14.** Interféromètre selon la revendication 13, dans lequel :

le sous-système de détecteur (700, 700') comprend une seconde portion de tableau de détecteurs (710b, 710b') agencée suivant un second chemin optique,
la structure de génération de déphasage multiple (1400, 1400', 1400''', 1400'''') est configurée pour générer et sortir des informations d'image d'interférence déphasée multiple (620, 620') suivant le second chemin optique pour qu'elles soient reçues par la seconde portion de tableau de détecteurs (710b, 710b'),
dans lequel :

la structure de génération de déphasage multiple (1400, 1400', 1400''', 1400'''') est configurée pour comprendre au moins l'une des configurations A, B, et pas la configuration C, et dans chacune des configurations A, B, les informations d'image d'interférence déphasée multiple (620, 620') qui sont sorties suivant le second chemin optique pour être reçues par la seconde portion de tableau de détecteurs (710b, 710b') comprennent une seconde image d'interférence de la région de l'objet, la seconde image d'interférence de la région de l'objet incluant un motif en 2 dimensions comprenant des portions d'interférence entrelacées de types respectifs différents (Q0, Q1, Q2, Q3, Q120, Q240) ayant des quantités respectives différentes de déphasage relatif entre leurs composantes de lumière d'interférence, dans lequel les types respectifs différents de portions d'interférence entrelacées (Q0, Q1, Q2, Q3, Q120, Q240) sont entrelacés périodiquement suivant des directions de ligne de motif et de colonne de motif qui sont respectivement parallèles aux directions de ligne et de colonne de la seconde portion de tableau de détecteurs (701 b, 710b'), les portions d'interférence entrelacées de la seconde image d'interférence comprenant :

une pluralité d'un troisième type de portions d'interférence (Q1) qui ont chacune une troisième quantité de déphasage relatif entre leurs composantes de lumière d'interférence, dans lequel la troisième quantité de déphasage relatif est différente des premières et deuxième quantités de déphasage relatif des premier et deuxième types de portions d'interférence (Q0, Q2) de la première image d'interférence, et le troisième type de portions d'interférence (Q1) est répété périodiquement suivant la direction de ligne de motif entrelacé avec et séparé par au moins un autre type de portion d'interférence (Q3, Q0, Q2), et périodiquement suivant la direction de colonne de motif entrelacé avec et séparé par au moins un autre type de portion d'interférence (Q3, Q0, Q2) dans le motif en 2 dimensions dans la seconde image d'interférence de la région de l'objet, et à travers une aire de la seconde image d'interférence qui correspond approximativement à une aire de la seconde portion de tableau de détecteurs (710b, 710b') ; et

une pluralité d'un quatrième type de portions d'interférence (Q3) qui ont chacune une quatrième quantité de déphasage relatif entre leurs composantes de lumière d'interférence, dans lequel la quatrième quantité de déphasage relatif est différente des première, deuxième et troisième quantités, et le quatrième type de portions d'interférence (Q3) est répété périodiquement suivant la direction de ligne de motif entrelacé avec et séparé par au moins un autre type de portion d'interférence (Q0, Q1, Q2), et répété périodiquement suivant la direction de colonne de motif entrelacé avec et séparé par au moins un autre type de portion d'interférence (Q0, Q1, Q2) dans le motif en 2 dimensions dans la seconde image d'interférence de la région de l'objet, et à travers l'aire de la seconde image d'interférence qui correspond approximativement à une aire de la seconde portion de tableau de détecteurs (710b, 710b') ;

dans la configuration A (1400, 1400'), la surface de division de faisceau (310, 310') dirige de plus un second front d'onde combiné divisé (129b) suivant le second chemin optique, et la configuration A inclut de plus :

un second élément de tableau de déphasage de haute densité (420, 420') agencé suivant le second chemin optique et un second élément polariseur de chemin (510b, 510') configuré pour fournir une direction de polarisation unique suivant le second chemin optique, dans lequel :

le second élément de tableau de déphasage de haute densité (420, 420') est agencé à proximité du second élément polariseur de chemin (510b, 510'), et est agencé et configuré pour entrer le front d'onde combiné (129b) et le transmettre au second élément polariseur de chemin (510b, 510') de telle sorte que ses composantes polarisées orthogonalement aient des déphasages relatifs différents dans des portions différentes du front d'onde combiné transmis ;

le second élément polariseur de chemin (510b, 510') comprend l'un d'un second élément polariseur (510b) et d'une portion du premier élément polariseur (510'), et est agencé à proximité de la seconde portion de tableau de détecteurs (710b, 710b'), et est agencé pour entrer le front d'onde combiné transmis (129b), et est configuré pour faire interférer des composantes de lumière d'interférence alignées de ses composantes polarisées orthogonalement qui ont des déphasages relatifs différents dans des portions différentes du front d'onde combiné transmis, et pour sortir les informations d'image d'interférence déphasée multiple résultantes (620, 620') suivant le second chemin optique pour qu'elles soient reçues par la seconde portion de tableau de détecteurs (710b, 710b') ;

le second élément de tableau de déphasage de haute densité (420, 420') comprend un motif de déphasage en 2 dimensions (421, 451) comprenant des portions de déphasage entrelacées d'au moins deux types respectifs différents (P0, P90, P180, P270, P120, P240) qui fournissent des quantités respectives différentes de déphasage relatif entre les composantes polarisées orthogonalement du front d'onde combiné entré (129b), dans lequel chaque type de portions de déphasage inclus dans les au moins deux types respectifs différents de portions de déphasage entrelacées est répété périodiquement suivant des directions de ligne de motif de déphasage et de colonne de motif de déphasage qui sont respectivement parallèles aux directions de ligne et de colonne de la seconde portion de tableau de détecteurs (710b, 710b'), et est entrelacé avec et séparé par au moins un autre type de portion de déphasage inclus dans les au moins deux types respectifs différents de portions de déphasage entrelacées suivant chacune des directions de ligne de motif de déphasage et de colonne de motif de déphasage et à travers une aire du second élément de tableau de déphasage de haute densité (420, 420') qui correspond approximativement à une aire de la seconde portion de tableau de détecteurs (710b, 710b') ; et

le second élément de tableau de déphasage de haute densité (420, 420') et le second élément polariseur de chemin (510b, 510') sont configurés et agencés pour fournir la seconde image d'interférence de la région de l'objet incluant un motif en 2 dimensions comprenant des portions d'interférence entrelacées incluant au moins le troisième type de portions d'interférence (Q1) et le quatrième type de portions d'interférence (Q3), et,

dans la configuration B (1400''', 1400''''), la surface de division de faisceau (310, 310') dirige en outre un second front d'onde combiné divisé (129b) suivant le second chemin optique, et la configuration B inclut de plus :

un élément de tableau de polariseur de haute densité de second chemin (530b, 530') agencé suivant le second chemin optique et un second élément de déphasage (520, 520') configuré pour fournir une quantité unique de déphasage relatif suivant le second chemin optique, dans lequel :

le second élément de déphasage (520, 520') est agencé à proximité de l'élément de tableau de polariseur de haute densité de second chemin (530b, 530'), et est configuré et agencé pour entrer le front d'onde combiné (129b) et le transmettre à l'élément de tableau de polariseur de haute densité de second chemin (530b, 530'), de telle sorte que ses composantes polarisées orthogonalement subissent le même déphasage relatif dans des portions différentes du front d'onde combiné transmis (129b) ;

l'élément de tableau de polariseur de haute densité de second chemin (530b, 530') comprend l'un d'un second élément polariseur (530b) et d'une portion du premier élément de tableau de polariseur de haute densité (530'), et est agencé à proximité de la seconde portion de tableau de détecteurs (710b, 710b'), et est agencé pour entrer le front d'onde combiné transmis (129b) et est configuré pour faire interférer des composantes de lumière d'interférence alignées de ses composantes polarisées orthogonalement qui ont des déphasages relatifs différents dans des portions différentes du front d'onde combiné transmis, et pour sortir les informations d'image d'interférence déphasée multiple résultantes (620, 620') suivant le second chemin optique pour qu'elles soient reçues par la seconde portion de tableau de détecteurs (710b, 710b') ;

l'élément de tableau de polariseur de haute densité de second chemin (530b, 530') comprend un motif de polarisation en 2 dimensions (531A, 531B) comprenant des portions de polarisation entrelacées de deux types respectifs différents (532A, 534A ; 532B, 534B) qui fournissent des directions de polarisation différentes qui transmettent et font interférer des jeux respectifs différents de composantes de lumière d'interférence des composantes polarisées orthogonalement du front d'onde combiné transmis (129b), dans lequel les composantes de lumière d'interférence des jeux respectifs différents sont alignées suivant les directions de polarisation respectives différentes, et chaque type de portion de polarisation inclus dans les deux types respectifs différents de portions de polarisation entrelacées (532A, 534A ; 532B, 534B) est répété périodiquement suivant des directions de ligne de motif de polarisation et de colonne de motif de polarisation qui sont respectivement parallèles aux directions de ligne et de colonne de la seconde portion de tableau de détecteurs (710b, 710b'), et est entrelacé avec et séparé par l'autre type de portion de polarisation suivant chacune des directions de ligne de motif de polarisation et colonne de motif de polarisation et à travers une aire de l'élément de tableau de polariseur de haute densité de second chemin (530b, 530') qui correspond approximativement à une aire de la seconde portion de tableau de détecteurs (710b, 710b') ; et

l'élément de tableau de polariseur de haute densité de second chemin (530b, 530') l'élément de déphasage (520, 520') sont configurés et agencés pour fournir la seconde image d'interférence de la région de l'objet incluant un motif en 2 dimensions comprenant des portions d'interférence entrelacées incluant au moins le troisième type de portions d'interférence (Q1) et le quatrième type de portions d'interférence (Q3).

Fig. 1

**Fig. 2**
(Prior Art)

**Fig. 3**
(Prior Art)

Fig. 4

Fig. 5

Fig. 6A

Fig. 6B

Fig. 7

EP 1 411 321 B1

Fig. 8B

Fig. 8C

Fig. 8A

EP 1 411 321 B1

430

433

439

T'<sub>180</sub>

REFERENCE

129

OBJECT

T<sub>S</sub>

432

P<sub>180(v)</sub>

431

P<sub>0(45)</sub>

## Fig. 9A

450

453

459

452

T'<sub>90</sub>

REFERENCE

129

OBJECT

T<sub>S</sub>

451

P<sub>270(h)</sub>

P<sub>90(v)</sub>

## Fig. 9B

440

443

449

442

T'<sub>180</sub>

REFERENCE

129

OBJECT

T<sub>90</sub>

448

441

P<sub>270(v)</sub>

P<sub>90(45)</sub>

## Fig. 9C

84

Fig. 10

Fig. 11

460 — 462

T_{90}

T_{270}

T_{180}

T_0

461

P_{270}
P_{180}
P_{90}
P_0

464

466a
466c
466b
466d

468

469

## Fig. 12

Fig. 13B

Fig. 13A

EP 1 411 321 B1

470

479

472

T'₁₈₀

$P_{0(45)}$

$P_{180(v)}$

T'₉₀

$P_{90(v)}$

$P_{270(h)}$

471

REFERENCE

129

OBJECT

475

473
475b
475a

## Fig. 14

480

T'₀

T'₁₈₀

489

488

481

T'₉₀

T'₂₇₀

$P_{270(v)}$

$P_{90(v)}$

$P_{0(v)}$

$P_{180(v)}$    483

REFERENCE

129

OBJECT

485a
485c

485b

485d

## Fig. 15

401

| P0<br>(Q0) | P120<br>(Q120) | P240<br>(Q240) | P0<br>(Q0) | P120<br>(Q120) |
|---|---|---|---|---|
| P240<br>(Q240) | P0<br>(Q0) | P120<br>(Q120) | P240<br>(Q240) | P0<br>(Q0) |
| P120<br>(Q120) | P240<br>(Q240) | P0<br>(Q0) | P120<br>(Q120) | P240<br>(Q240) |
| P0<br>(Q0) | P120<br>(Q120) | P240<br>(Q240) | P0<br>(Q0) | P120<br>(Q120) |

## Fig. 16

401'

| P0<br>(Q0) | P120<br>(Q120) | P0<br>(Q0) | P120<br>(Q120) | P0<br>(Q0) |
|---|---|---|---|---|
| P240<br>(Q240) | P0<br>(Q0) | P240<br>(Q240) | P0<br>(Q0) | P240<br>(Q240) |
| P0<br>(Q0) | P120<br>(Q120) | P0<br>(Q0) | P120<br>(Q120) | P0<br>(Q0) |
| P240<br>(Q240) | P0<br>(Q0) | P240<br>(Q240) | P0<br>(Q0) | P240<br>(Q240) |

## Fig. 17

Fig. 18

Fig. 19

Fig. 20B          Fig. 20C

Fig. 20A

EP 1 411 321 B1

Fig. 21

Fig. 22

Fig. 23B

Fig. 23C

Fig. 23D

Fig. 23E

Fig. 23A

Fig. 24

| | | | |
|---|---|---|---|
| Vert. Pol. | Horiz. Pol. | Vert. Pol. | Horiz. Pol. |
| Horiz. Pol. | Vert. Pol. | Horiz. Pol. | Vert. Pol. |
| Vert. Pol. | Horiz. Pol. | Vert. Pol. | Horiz. Pol. |
| Horiz. Pol. | Vert. Pol. | Horiz. Pol. | Vert. Pol. |

| | |
|---|---|
| $P_{90}$ Portion | $P_0$ Portion |
| $P_0$ Portion | $P_{90}$ Portion |

| | | | |
|---|---|---|---|
| $Q_3$ $P_{90}$ & Vert. Pol. | $Q_1$ $P_{90}$ & Horiz. Pol. | $Q_2$ $P_0$ & Vert. Pol. | $Q_0$ $P_0$ & Horiz. Pol. |
| $Q_1$ $P_{90}$ & Horiz. Pol. | $Q_3$ $P_{90}$ & Vert. Pol. | $Q_0$ $P_0$ & Horiz. Pol. | $Q_2$ $P_0$ & Vert. Pol. |
| $Q_2$ $P_0$ & Vert. Pol. | $Q_0$ $P_0$ & Horiz. Pol. | $Q_3$ $P_{90}$ & Vert. Pol. | $Q_1$ $P_{90}$ & Horiz. Pol. |
| $Q_0$ $P_0$ & Horiz. Pol. | $Q_2$ $P_0$ & Vert. Pol. | $Q_1$ $P_{90}$ & Horiz. Pol. | $Q_3$ $P_{90}$ & Vert. Pol. |

Fig. 25

Fig. 26

Fig. 27

Fig. 28

EP 1 411 321 B1

**EP 1 411 321 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6304330 B
- US 5166751 A
- US 6055103 A
- US 5073294 A
- US 6300991 B
- US 6160597 A
- US 6369869 B
- US 6108131 A
- US 6122103 A
- US 6243199 B

### Non-patent literature cited in the description

- **J. HARROLD et al.** 3D Display Systems Hardware Research at Sharp Laboratories of Europe: an update. *Sharp Technical Journal,* 21 May 1999
- **F. MOIA et al.** Optical LPP/LCP Devices: A new Generation of Optical Security Elements. *Proceedings of SPIE; Optical Security and Counterfeit Deterrence Techniques III,* 27 January 2000, vol. 3973, 196-203
- **SMYTHE, R. et al.** Instantaneous Phase Measuring Interferometry. *Optical Engineering,* 1984, vol. 23 (4), 361-4